(19) Europäisches Patentamt

European Patent Office

Office européen des brevets

(11) **EP 3 818 655 B1**

(12) **EUROPEAN PATENT SPECIFICATION**

(45) Date of publication and mention
of the grant of the patent:
**17.06.2026 Bulletin 2026/25**

(21) Application number: **19745864.9**

(22) Date of filing: **05.07.2019**

(51) International Patent Classification (IPC):
***H04L 5/00*** *(2006.01)*

(52) Cooperative Patent Classification (CPC):
**H04L 5/0048**

(86) International application number:
**PCT/US2019/040688**

(87) International publication number:
**WO 2020/033086 (13.02.2020 Gazette 2020/07)**

(54) **BEAMFORMING AND GROUPING FOR NR V2X**

STRAHLFORMUNG UND GRUPPIERUNG FÜR NR V2X

FORMATION DE FAISCEAUX ET REGROUPEMENT POUR V2X EN NR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2018 US 201862716782 P
27.09.2018 US 201862737643 P
01.11.2018 US 201862754385 P
10.01.2019 US 201962790754 P
11.01.2019 US 201962791055 P**

(43) Date of publication of application:
**12.05.2021 Bulletin 2021/19**

(73) Proprietor: **InterDigital Patent Holdings, Inc.
Wilmington, DE 19809 (US)**

(72) Inventors:
• **ZHANG, Guodong
Wilmington, DE 19809-3727 (US)**
• **TSAI, Allan, Y.
Wilmington, DE 19809-3727 (US)**
• **LI, Qing
Wilmington, DE 19809-3727 (US)**
• **ADJAKPLE, Pascal, M.
Wilmington, DE 19809-3727 (US)**

• **IYER, Lakshmi, R.
Wilmington, DE 19809-3727 (US)**
• **LI, Yifan
Wilmington, DE 19809-3727 (US)**
• **AWADIN, Mohamed
Wilmington, DE 19809-3727 (US)**
• **MURRAY, Joseph, M.
Wilmington, DE 19809-3727 (US)**

(74) Representative: **D Young & Co LLP
3 Noble Street
London EC2V 7BQ (GB)**

(56) References cited:
**EP-A1- 3 355 628    WO-A1-2018/133132**

• **QUALCOMM INCORPORATED: "Simulation
assumptions for D2D synchronization
requirements", vol. RAN WG4, no. Athens,
Greece; 20150209 - 20150213, 8 February 2015
(2015-02-08), XP050937694, Retrieved from the
Internet <URL:http://www.3gpp.org/ftp/
Meetings_3GPP_SYNC/RAN4/Docs/> [retrieved
on 20150208]**

## Description

### FIELD

The present application is directed to methods and systems for beamforming and grouping for new radio (NR) vehicle to anything (V2X).

### BACKGROUND

V2X communications, such as PSCCH, PSSCH and PSDCH, in LTE are omnidirectional. However, V2X communications in NR mmW frequency band are beamformingbased. Appropriate design solutions are desired to improve these technologies.

In NR V2X, use cases are generally directed to platooning, advanced driving, and enhanced sensors. Namely, these use cases have much higher requirements in terms of latency, data rates and reliability than LTE V2X. Therefore, new synchronization, discovery and beam management procedures and mechanisms are desired to support these new cases.

In NR, SSB/PBCH are packed as a single block that always moves together. Each SS/PBCH within a SS burst set (i.e., all the SS blocks within the 5 ms period of the SS burst set transmission) is assigned with a unique number starting from 0 and increasing by 1. This number is reset to 0 in the next SS burst set (i.e., next 5 ms span after SS/PBCH transmission cycle (e.g., 20 ms)).

NR SS/PBCH structure will require modification for sidelink synchronization structure due to the following factors. First, PSSS (Primary Sidelink Sync Signal) & SSSS (Secondary Sidelink Sync Signal) need to convey sidelink synchronization ID, synchronization sources and in network coverage or out of network coverage. The number of symbols for PSSS, SSSS, DMRS and PSBCH need redesigning to support better detection performance and timing/-frequency offset estimation. Second, NR Sidelink MIB (MIB-SL) may carry different essential system information from LTE sidelink MIB. NR radio interfaces also are significantly different from LTE radio interface. As a result, existing LTE sidelink MIB design and LTE PSBCH design cannot readily be re-used for NR V2X. Solutions for NR sidelink (or V2X) SS/PBCH structure design are needed to solve these problems.

In LTE, PSCCH and PSSCH are not beamformed transmitted. In NR, FR2 is support. Since NR PSCCH and PSSCH may be transmitted with beam forming, beam training and pairing for NR PSCCH and PSSCH is required. Higher layer and/or application level discovery in NR V2X is desired. WO 2018/133132 A1 (26-07-2018) discloses a synchronization method
and device. QUALCOMM INCORPORATED, "Simulation assumptions for D2D synchronization requirements", vol. RAN WG4, no. Athens, Greece; 20150209 - 20150213, (20150208), 3GPP DRAFT; R4-150201 discloses simulation assumptions needed to define D2D synchronization requirements. EP 3355628 A1 (01-08-2018) discloses a synchronization information sending method and apparatus.

### SUMMARY

This summary is provided to introduce a selection of concepts in a simplified form that are further described below in the Detailed Description. This Summary is not intended to limit the scope of the claimed subject matter. The foregoing needs are met, to a great extent, by the present application describing.

The invention is defined by the appended claims.

### BRIEF DESCRIPTION OF THE DRAWINGS

In order to facilitate a more robust understanding of the application, reference is now made to the accompanying drawings, in which like elements are referenced with like numerals. These drawings should not be construed to limit the application and are intended only to be illustrative.

Figure 1A illustrates an exemplary communications system according to an aspect of the application.
Figure 1B illustrates an exemplary apparatus configured for wireless communication according to an aspect of the application.
Figure 1C illustrates a system diagram of a radio access network and a core network according to an aspect of the application.
Figure 1D illustrates a system diagram of a radio access network and a core network according to an aspect of the application.
Figure 1E illustrates a system diagram of a radio access network and a core network according to an aspect of the application.

Figure 1F illustrates a block diagram of an exemplary computing system in communication with one or more networks previously shown in Figures 1A, 1C, 1D and 1E according to an aspect of the application.

Figure 1G illustrates an exemplary communications system according to an embodiment.

Figure 2 illustrates a side-link CSI-RS for beam training according to an aspect of the application.

Figure 3 illustrates beam training NR-PSSB for indication of NR-PSDCH according to an aspect of the application.

Figure 4 illustrates an exemplary scenario in accordance with an aspect of the application.

Figure 5 illustrates another exemplary scenario in accordance with an aspect of the application.

Figure 6 illustrates yet another exemplary scenario in accordance with an aspect of the application.

Figure 7 illustrates an exemplary NR SL SS/PBCH burst set, burst and block design in accordance with an aspect of the application.

Figure 8A illustrates an exemplary transmission pattern of SL SS Block for SCS = 30 kHz in NR in accordance with an aspect of the application.

Figure 8B illustrates an exemplary transmission pattern of SL SS Block for SCS = 30 kHz in NR and two SL SS Block are punctured in accordance with an aspect of the application.

Figure 9 illustrates a SL SS/PBCH aligned in Uu SS/PBCH synchronization raster and TDM in accordance with an aspect of the application.

Figure 10 illustrates an aperiodic SL SS/PBCH transmission in accordance with an aspect of the application.

Figures 11A-B illustrate enhanced SL SS/PBCH blocks in accordance with an aspect of the application.

Figure 12A illustrates DMRS for PSBCH where DMRS and PSBCG are multiplexing at the same resource in accordance with an aspect of the application.

Figure 12B illustrates DMRS for PSBCH where DMRS and PSBCH are TDM in accordance with an aspect of the application.

Figure 13 illustrates a proposed sidelink beam training and pairing Step 1 before discovery in accordance with an aspect of the application.

Figure 14A illustrates a resource selection for common PSCCH (Type M) for beam pairing response before discovery in FDM in accordance with an aspect of the application.

Figure 14B illustrates a resource selection for common PSCCH (Type M) for beam pairing response before discovery in TDM in accordance with an aspect of the application.

Figure 15 illustrates a proposed sidelink beam training step 2 (response) before discovery in accordance with an aspect of the application.

Figure 16 illustrates a proposed sidelink beam training procedure in accordance with an aspect of the application.

Figure 17A illustrates a resource mapping for SL SS/PBCH, PSCCH Type 0 and PSSCH for SL RMSI (or PSDCH) in FDM in accordance with an aspect of the application.

Figure 17B illustrates a resource mapping for SL SS/PBCH, PSCCH Type 0 and PSSCH for SL RMSI (or PSDCH) in TDM in accordance with an aspect of the application.

Figure 18A illustrates a FDM resource mapping for SL SS/PBCH and PSSCH for SL RMSI (or PSDCH) in accordance with an aspect of the application.

Figure 18B illustrates a TDM resource mapping for SL SS/PBCH and PSSCH for SL RMSI (or PSDCH) in accordance with an aspect of the application.

Figure 19 illustrates a broadcast burst configured with a transmission periodicity in accordance with an aspect of the application.

Figure 20 illustrates a broadcast burst configured with a transmission periodicity in accordance with an aspect of the application.

Figure 21 illustrates DM-RS symbols setup in front of PSSCH symbols in accordance with an aspect of the application.

Figure 22 illustrates an example of built-in sensors sensing distance between vehicles in accordance with an aspect of the application.

Figure 23 illustrates resources for PSSCH partitioned into two regions in accordance with an aspect of the application.

Figure 24 illustrates a vehicle/UE broadcasting its discovery message in accordance with an aspect of the application.

Figure 25 illustrates two vehicles competing for the same channel resource for discovery response at the slot in accordance with an aspect of the application.

Figure 26 illustrates a LFSR sequence with the Fibonacci representation in accordance with an aspect of the application.

Figure 27 illustrates SL PSS and SL SSS sequence mapping in the frequency domain in accordance with an aspect of the application.

Figure 28 illustrates an exemplary SL SS block design and resource mapping for SL SS BW = 20 RB in accordance with as aspect of the application.

Figure 29 illustrates a SL PSS sequence mapping in the frequency domain when SL SS block BW = 24 RB in accordance with an aspect of the application.

Figure 30 illustrates an SL SS block design and exemplary mapping for SL SS BW = 24 RB in accordance with an aspect of the application.

Figure 31 illustrates a SL PSS sequence mapping in the frequency domain when SL SS block BW = 24 RB and SL PSS sequence length = 127 in accordance with an aspect of the application.

Figure 32 illustrates an SL PSS sequence mapping in the frequency domain when SL SS block BW = 24 RB and SL PSS sequence length = 127 in accordance with an aspect of the application.

Figure 33 illustrates a SL SSS sequence mapping in the frequency domain when SL SS block BW = 24 RB and SL SSS sequence length = 255 in accordance with an aspect of the application.

Figures 34A-B illustrate an SL SS block and resource mapping for SL SS BW = 24 RB when SL PSS length = 127 and SL SSS length = 255 in accordance with an aspect of the application.

Figures 35A-B illustrate sidelink PSS mapping methods in frequency domain when SL SS Block BW is equal to 11 RBs.

Figure 36 illustrates Sidelink SSB structure with SL PSS at the symbol 1 and 2 and SL SSS at symbol 3 and 4 in a slot.

Figure 37 illustrates sidelink SSB structure with SL PSS at symbol 1 and 2 and SL SSS at symbol 6 and 7 in a slot.

Figure 38 illustrates a sidelink SSB structure with SL PBCH at symbol 5 to 11 in a slot.

Figure 39 illustrates SL SS block periodicity, where the periodicity of SL SS block can be based on each different transmit beam.

## DETAILED DESCRIPTION OF THE ILLUSTRATIVE EMBODIMENTS

A detailed description of the illustrative embodiment will be discussed in reference to various figures, embodiments and aspects herein. Although this description provides detailed examples of possible implementations, it should be understood that the details are intended to be examples and thus do not limit the scope of the application.

Reference in this specification to "one embodiment," "an embodiment," "one or more embodiments," or the like means that a particular feature, structure, or characteristic described in connection with the embodiment is included in at least one embodiment of the disclosure. Moreover, the term "embodiment" in various places in the specification is not necessarily referring to the same embodiment. That is, various features are described which may be exhibited by some embodiments and not by the other. Reference in this specification to "one aspect," "an aspect," or "one or more aspects," or the like encompasses one or more embodiments listed thereunder.

Generally, the application describes methods and systems for beamforming and grouping for NR V2X.

Definitions/Acronyms

Provided below are definitions for terms and phrases commonly used in this application in Table 1.

**Table 1**

| Acronym | Term or Phrase |
|---------|----------------|
| A/N | Ack/Nack |
| BRS | Beam Reference Signal |
| CE | Control Element |
| DL | Downlink |
| DRX | Discontinuous Reception |
| eMBB | Enhanced Mobile Broadband |
| ETWS | Earthquake and Tsunami Warning System |
| HARQ | Hybrid Automatic Repeat Request |
| KPI | Key Performance Indicators |
| LTE | Long Term Evolution |
| MAC | Medium Access Control |
| MIB | Master Information Block |
| MTC | Machine-Type Communications |
| mMTC | Massive Machine Type Communication |

(continued)

| Acronym | Term or Phrase |
|---------|----------------|
| NACK | Non-Acknowledgment |
| NR | New Radio |
| NR-PDSCH | NR Physical Sidelink Discovery Channel |
| NR-PSSCH | NR Physical Sidelink Shared Channel |
| PBCH | Physical Broadcast Channel |
| PDCCH | Physical Downlink Control Channel |
| PDSCH | Physical Downlink Shared Data Channel |
| PSCCH | Physical Sidelink Control Channel |
| PSDCH | Physical Sidelink Discovery Channel |
| PRACH | Physical Random Access Channel |
| PSDCH | Physical Sidelink Discovery Channel |
| PRB | Physical Resource Block |
| RAN | Radio Access Network |
| RNTI | Radio Network Temporary Identifier |
| RAT | Radio Access Technology |
| RRC | Radio Resource Control |
| SI | System Information |
| SIB | System Information Block |
| TDD | Time Divisional Duplex |
| UE | User Equipment |
| V2X | Vehicle To Everything |
| UL | Uplink |
| URLLC | Ultra-Reliable and Low Latency Communications |

General Architecture

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), LTE-Advanced standards, and New Radio (NR), which is also referred to as "5G". 3GPP NR standards development is expected to continue and include the definition of next generation radio access technology (new RAT), which is expected to include the provision of new flexible radio access below 7 GHz, and the provision of new ultra-mobile broadband radio access above 7 GHz. The flexible radio access is expected to consist of a new, non-backwards compatible radio access in new spectrum below 7 GHz, and it is expected to include different operating modes that may be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 7 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (eMBB) ultra-reliable lowlatency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V2I), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

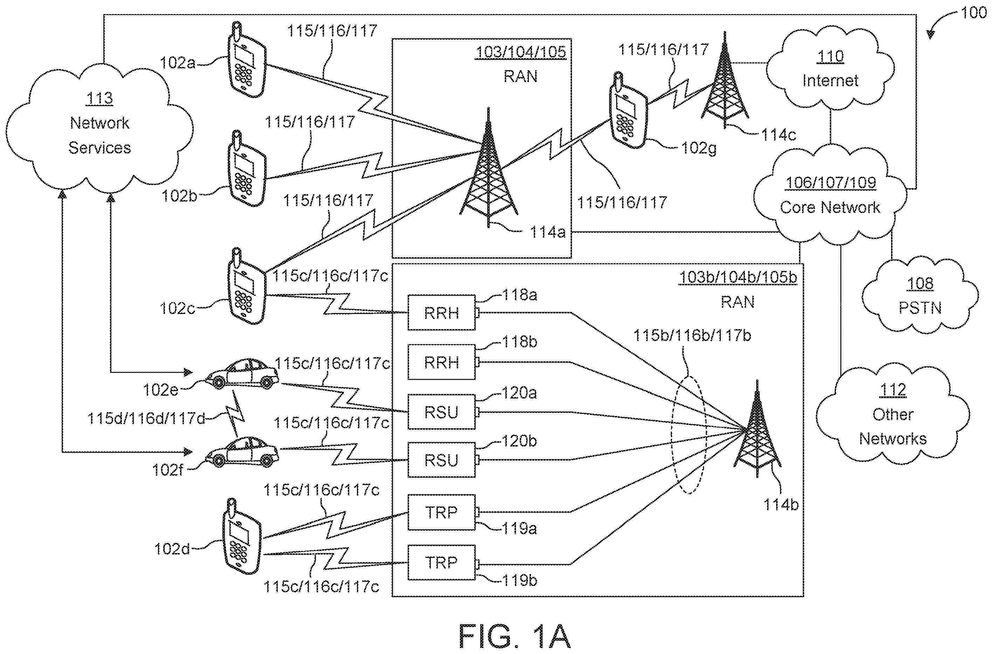

Figure 1A illustrates an example communications system 100 in which the systems, methods, and apparatuses described and claimed herein may be used. The communications system 100 may include wireless transmit/receive units (WTRUs) 102a, 102b, 102c, 102d, 102e, 102f, and/or 102g, which generally or collectively may be referred to as WTRU 102 or WTRUs 102. The communications system 100 may include, a radio access network (RAN) 103/104/105/103b/104b/105b, a core network 106/107/109, a public switched telephone network (PSTN) 108, the Internet 110, other networks 112, and Network Services 113. 113. Network Services 113 may include, for example, a V2X server, V2X functions, a ProSe server, ProSe functions, IoT services, video streaming, and/or edge computing, etc.

It will be appreciated that the concepts disclosed herein may be used with any number of WTRUs, base stations, networks, and/or network elements. Each of the WTRUs 102 may be any type of apparatus or device configured to operate and/or communicate in a wireless environment. In the example of Figure 1A, each of the WTRUs 102 is depicted in Figures 1A-1E as a hand-held wireless communications apparatus. It is understood that with the wide variety of use cases contemplated for wireless communications, each WTRU may comprise or be included in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, bus or truck, a train, or an airplane, and the like.

The communications system 100 may also include a base station 114a and a base station 114b. In the example of Figure 1A, each base stations 114a and 114b is depicted as a single element. In practice, the base stations 114a and 114b may include any number of interconnected base stations and/or network elements. Base stations 114a may be any type of device configured to wirelessly interface with at least one of the WTRUs 102a, 102b, and 102c to facilitate access to one or more communication networks, such as the core network 106/107/109, the Internet 110, Network Services 113, and/or the other networks 112. Similarly, base station 114b may be any type of device configured to wiredly and/or wirelessly interface with at least one of the Remote Radio Heads (RRHs) 118a, 118b, Transmission and Reception Points (TRPs) 119a, 119b, and/or Roadside Units (RSUs) 120a and 120b to facilitate access to one or more communication networks, such as the core network 106/107/109, the Internet 110, other networks 112, and/or Network Services 113. RRHs 118a, 118b may be any type of device configured to wirelessly interface with at least one of the WTRUs 102, e.g., WTRU 102c, to facilitate access to one or more communication networks, such as the core network 106/107/109, the Internet 110, Network Services 113, and/or other networks 112.

TRPs 119a, 119b may be any type of device configured to wirelessly interface with at least one of the WTRU 102d, to facilitate access to one or more communication networks, such as the core network 106/107/109, the Internet 110, Network Services 113, and/or other networks 112. RSUs 120a and 120b may be any type of device configured to wirelessly interface with at least one of the WTRU 102e or 102f, to facilitate access to one or more communication networks, such as the core network 106/107/109, the Internet 110, other networks 112, and/or Network Services 113. By way of example, the base stations 114a, 114b may be a Base Transceiver Station (BTS), a Node-B, an eNode B, a Home Node B, a Home eNode B, a Next Generation Node-B (gNode B), a satellite, a site controller, an access point (AP), a wireless router, and the like.

The base station 114a may be part of the RAN 103/104/105, which may also include other base stations and/or network elements (not shown), such as a Base Station Controller (BSC), a Radio Network Controller (RNC), relay nodes, etc. Similarly, the base station 114b may be part of the RAN 103b/104b/105b, which may also include other base stations and/or network elements (not shown), such as a BSC, a RNC, relay nodes, etc. The base station 114a may be configured to transmit and/or receive wireless signals within a particular geographic region, which may be referred to as a cell (not shown). Similarly, the base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, for example, the base station 114a may include three transceivers, e.g., one for each sector of the cell. The base station 114a may employ Multiple-Input Multiple Output (MIMO) technology and, therefore, may utilize multiple transceivers for each sector of the cell, for instance.

The base station 114a may communicate with one or more of the WTRUs 102a, 102b, 102c, and 102g over an air interface 115/116/117, which may be any suitable wireless communication link (e.g., Radio Frequency (RF), microwave, infrared (IR), ultraviolet (UV), visible light, cmWave, mmWave, etc.). The air interface 115/116/117 may be established using any suitable Radio Access Technology (RAT).

The base station 114b may communicate with one or more of the RRHs 118a and 118b, TRPs 119a and 119b, and/or RSUs 120a and 120b, over a wired or air interface 115b/116b/117b, which may be any suitable wired (e.g., cable, optical fiber, etc.) or wireless communication link (e.g., RF, microwave, IR, UV, visible light, cmWave, mmWave, etc.). The air interface 115b/116b/117b may be established using any suitable RAT.

The RRHs 118a, 118b, TRPs 119a, 119b and/or RSUs 120a, 120b, may communicate with one or more of the WTRUs 102c, 102d, 102e, 102f over an air interface 115c/116c/117c, which may be any suitable wireless communication link (e.g., RF, microwave, IR, ultraviolet UV, visible light, cmWave, mmWave, etc.) The air interface 115c/116c/117c may be established using any suitable RAT.

The WTRUs 102 may communicate with one another over a direct air interface 115d/116d/117d, such as Sidelink communication which may be any suitable wireless communication link (e.g., RF, microwave, IR, ultraviolet UV, visible light, cmWave, mmWave, etc.) The air interface 115d/116d/117d may be established using any suitable RAT.

The communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b, TRPs 119a, 119b and/or RSUs 120a and 120b in the RAN 103b/104b/105b and the WTRUs 102c, 102d, 102e, and 102f, may implement a radio technology such as Universal Mobile Telecommunications System (UMTS) Terrestrial Radio Access (UTRA), which may establish the air interface 115/116/117 and/or 115c/116c/117c respectively using Wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

The base station 114a in the RAN 103/104/105 and the WTRUs 102a, 102b, 102c, and 102g, or RRHs 118a and 118b, TRPs 119a and 119b, and/or RSUs 120a and 120b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) and/or LTE-Advanced (LTE-A), for example. The air interface 115/116/117 or 115c/116c/117c may implement 3GPP NR technology. The LTE and LTE-A technology may include LTE D2D and/or V2X technologies and interfaces (such as Sidelink communications, etc.) Similarly, the 3GPP NR technology may include NR V2X technologies and interfaces (such as Sidelink communications, etc.)

The base station 114a in the RAN 103/104/105 and the WTRUs 102a, 102b, 102c, and 102g or RRHs 118a and 118b, TRPs 119a and 119b, and/or RSUs 120a and 120b in the RAN 103b/104b/105b and the WTRUs 102c, 102d, 102e, and 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in Figure 1A may be a wireless router, Home Node B, Home eNode B, or access point, for example, and may utilize any suitable RAT for facilitating wireless connectivity in a localized area, such as a place of business, a home, a vehicle, a train, an aerial, a satellite, a manufactory, a campus, and the like. The base station 114c and the WTRUs 102, e.g., WTRU 102e, may implement a radio technology such as IEEE 802.11 to establish a Wireless Local Area Network (WLAN). Similarly, the base station 114c and the WTRUs 102, e.g., WTRU 102d, may implement a radio technology such as IEEE 802.15 to establish a wireless personal area network (WPAN). The base station 114c and the WTRUs 102, e.g., WRTU 102e, may utilize a cellular-based RAT (e.g., WCDMA, CDMA2000, GSM, LTE, LTE-A, NR, etc.) to establish a picocell or femtocell. As shown in Figure 1A, the base station 114c may have a direct connection to the Internet 110. Thus, the base station 114c may not be required to access the Internet 110 via the core network 106/107/109.

The RAN 103/104/105 and/or RAN 103b/104b/105b may be in communication with the core network 106/107/109, which may be any type of network configured to provide voice, data, messaging, authorization and authentication, applications, and/or Voice Over Internet Protocol (VoIP) services to one or more of the WTRUs 102. For example, the core network 106/107/109 may provide call control, billing services, mobile location-based services, pre-paid calling, Internet connectivity, packet data network connectivity, Ethernet connectivity, video distribution, etc., and/or perform high-level security functions, such as user authentication.

Although not shown in Figure 1A, it will be appreciated that the RAN 103/104/105 and/or RAN 103b/104b/105b and/or the core network 106/107/109 may be in direct or indirect communication with other RANs that employ the same RAT as the RAN 103/104/105 and/or RAN 103b/104b/105b or a different RAT. For example, in addition to being connected to the RAN 103/104/105 and/or RAN 103b/104b/105b, which may be utilizing an E-UTRA radio technology, the core network 106/107/109 may also be in communication with another RAN (not shown) employing a GSM or NR radio technology.

The core network 106/107/109 may also serve as a gateway for the WTRUs 102 to access the PSTN 108, the Internet 110, and/or other networks 112. The PSTN 108 may include circuit-switched telephone networks that provide Plain Old Telephone Service (POTS). The Internet 110 may include a global system of interconnected computer networks and devices that use common communication protocols, such as the Transmission Control Protocol (TCP), User Datagram Protocol (UDP), and the internet protocol (IP) in the TCP/IP internet protocol suite. The other networks 112 may include wired or wireless communications networks owned and/or operated by other service providers. For example, the networks 112 may include any type of packet data network (e.g., an IEEE 802.3 Ethernet network) or another core network connected to one or more RANs, which may employ the same RAT as the RAN 103/104/105 and/or RAN 103b/104b/105b or a different RAT.

Some or all of the WTRUs 102a, 102b, 102c, 102d, 102e, and 102f in the communications system 100 may include multi-mode capabilities, e.g., the WTRUs 102a, 102b, 102c, 102d, 102e, and 102f may include multiple transceivers for communicating with different wireless networks over different wireless links. For example, the WTRU 102g shown in Figure 1A may be configured to communicate with the base station 114a, which may employ a cellular-based radio technology, and with the base station 114c, which may employ an IEEE 802 radio technology.

Although not shown in Figure 1A, it will be appreciated that a User Equipment may make a wired connection to a gateway. The gateway maybe a Residential Gateway (RG). The RG may provide connectivity to a Core Network 106/107/109. It will be appreciated that many of the ideas contained herein may equally apply to UEs that are WTRUs and UEs that use a wired connection to connect to a network. For example, the ideas that apply to the wireless interfaces 115, 116, 117 and 115c/116c/117c may equally apply to a wired connection.

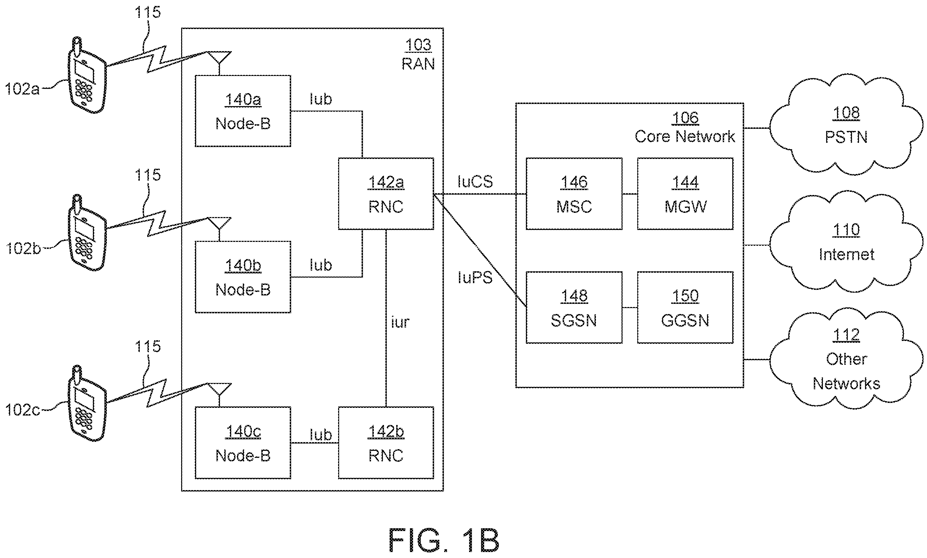

Figure 1B is a system diagram of an example RAN 103 and core network 106. As noted above, the RAN 103 may employ a UTRA radio technology to communicate with the WTRUs 102a, 102b, and 102c over the air interface 115. The RAN 103 may also be in communication with the core network 106. As shown in Figure 1B, the RAN 103 may include Node-Bs 140a, 140b, and 140c, which may each include one or more transceivers for communicating with the WTRUs 102a, 102b, and 102c over the air interface 115. The Node-Bs 140a, 140b, and 140c may each be associated with a particular cell (not shown) within the RAN 103. The RAN 103 may also include RNCs 142a, 142b. It will be appreciated that the RAN 103 may include any number of Node-Bs and Radio Network Controllers (RNCs.)

As shown in Figure 1B, the Node-Bs 140a, 140b may be in communication with the RNC 142a. Additionally, the Node-B 140c may be in communication with the RNC 142b. The Node-Bs 140a, 140b, and 140c may communicate with the respective RNCs 142a and 142b via an Iub interface. The RNCs 142a and 142b may be in communication with one another via an Iur interface. Each of the RNCs 142a and 142b may be configured to control the respective Node-Bs 140a, 140b, and 140c to which it is connected. In addition, each of the RNCs 142a and 142b may be configured to carry out or support other functionality, such as outer loop power control, load control, admission control, packet scheduling, handover control, macro-diversity, security functions, data encryption, and the like.

The core network 106 shown in Figure 1B may include a media gateway (MGW) 144, a Mobile Switching Center (MSC) 146, a Serving GPRS Support Node (SGSN) 148, and/or a Gateway GPRS Support Node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and 102c with access to circuit-switched networks, such as the PSTN 108, to facilitate communications between the WTRUs 102a, 102b, and 102c, and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and 102c with access to packet-switched networks, such as the Internet 110, to facilitate communications between and the WTRUs 102a, 102b, and 102c, and IP-enabled devices.

The core network 106 may also be connected to the other networks 112, which may include other wired or wireless networks that are owned and/or operated by other service providers.

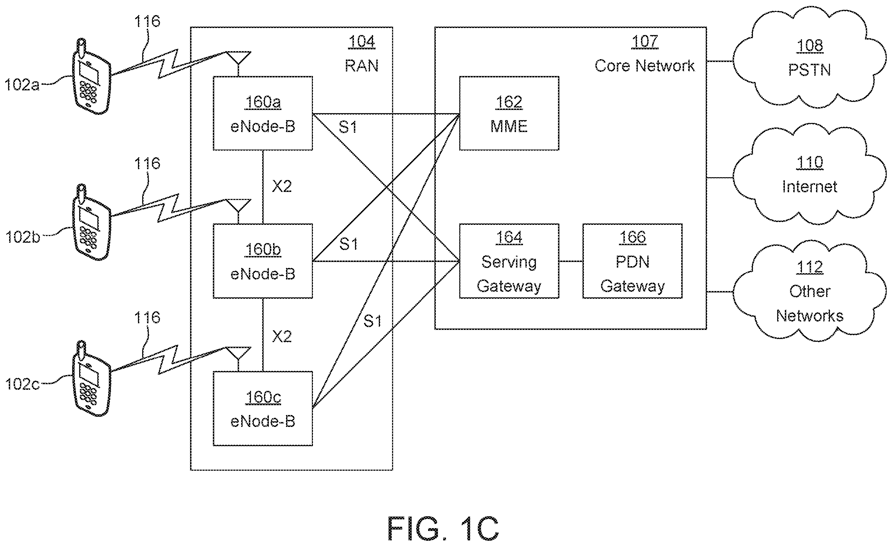

Figure 1C is a system diagram of an example RAN 104 and core network 107. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, and 160c, though it will be appreciated that the RAN 104 may include any number of eNode-Bs. The eNode-Bs 160a, 160b, and 160c may each include one or more transceivers for communicating with the WTRUs 102a, 102b, and 102c over the air interface 116. For example, the eNode-Bs 160a, 160b, and 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in Figure 1C, the eNode-Bs 160a, 160b, and 160c may communicate with one another over an X2 interface.

The core network 107 shown in Figure 1C may include a Mobility Management Gateway (MME) 162, a serving gateway 164, and a Packet Data Network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, and 102c, bearer activation/deactivation, selecting a particular serving gateway during an initial attach of the WTRUs 102a, 102b, and 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, and 102c. The serving gateway 164 may also perform other functions, such as anchoring user planes during inter-eNode B handovers, triggering paging when downlink data is available for the WTRUs 102a, 102b, and 102c, managing and storing contexts of the WTRUs 102a, 102b, and 102c, and the like.

The serving gateway 164 may also be connected to the PDN gateway 166, which may provide the WTRUs 102a, 102b, and 102c with access to packet-switched networks, such as the Internet 110, to facilitate communications between the WTRUs 102a, 102b, 102c, and IP-enabled devices.

The core network 107 may facilitate communications with other networks. For example, the core network 107 may provide the WTRUs 102a, 102b, and 102c with access to circuit-switched networks, such as the PSTN 108, to facilitate communications between the WTRUs 102a, 102b, and 102c and traditional land-line communications devices. For example, the core network 107 may include, or may communicate with, an IP gateway (e.g., an IP Multimedia Subsystem (IMS) server) that serves as an interface between the core network 107 and the PSTN 108. In addition, the core network 107 may provide the WTRUs 102a, 102b, and 102c with access to the networks 112, which may include other wired or wireless networks that are owned and/or operated by other service providers.

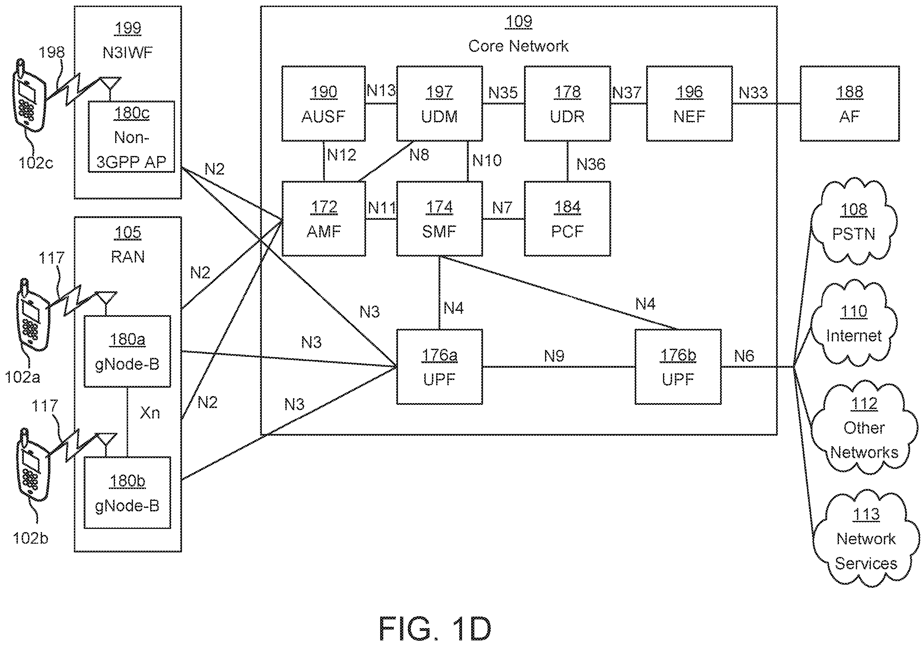

Figure 1D is a system diagram of an example RAN 105 and core network 109. The RAN 105 may employ an NR radio technology to communicate with the WTRUs 102a and 102b over the air interface 117. The RAN 105 may also be in communication with the core network 109. A Non-3GPP Interworking Function (N3IWF) 199 may employ a non-3GPP radio technology to communicate with the WTRU 102c over the air interface 198. The N3IWF 199 may also be in communication with the core network 109.

The RAN 105 may include gNode-Bs 180a and 180b. It will be appreciated that the RAN 105 may include any number of gNode-Bs. The gNode-Bs 180a and 180b may each include one or more transceivers for communicating with the WTRUs 102a and 102b over the air interface 117. When integrated access and backhaul connection are used, the same air interface may be used between the WTRUs and gNode-Bs, which may be the core network 109 via one or multiple gNBs. The gNode-Bs 180a and 180b may implement MIMO, MU-MIMO, and/or digital beamforming technology. Thus, the gNode-B 180a, for example, may use multiple antennas to transmit wireless signals to, and receive wireless signals from, the WTRU 102a. It should be appreciated that the RAN 105 may employ of other types of base stations such as an eNode-B. It will also be appreciated the RAN 105 may employ more than one type of base station. For example, the RAN may employ eNode-Bs and gNode-Bs.

The N3IWF 199 may include a non-3GPP Access Point 180c. It will be appreciated that the N3IWF 199 may include any number of non-3GPP Access Points. The non-3GPP Access Point 180c may include one or more transceivers for communicating with the WTRUs 102c over the air interface 198. The non-3GPP Access Point 180c may use the 802.11 protocol to communicate with the WTRU 102c over the air interface 198.

Each of the gNode-Bs 180a and 180b may be associated with a particular cell (not shown) and may be configured to handle radio resource management decisions, handover decisions, scheduling of users in the uplink and/or downlink, and the like. As shown in Figure 1D, the gNode-Bs 180a and 180b may communicate with one another over an Xn interface, for example.

The core network 109 shown in Figure 1D may be a 5G core network (5GC). The core network 109 may offer numerous communication services to customers who are interconnected by the radio access network. The core network 109 comprises a number of entities that perform the functionality of the core network. As used herein, the term "core network entity" or "network function" refers to any entity that performs one or more functionalities of a core network. It is understood that such core network entities may be logical entities that are implemented in the form of computer-executable instructions (software) stored in a memory of, and executing on a processor of, an apparatus configured for wireless and/or network communications or a computer system, such as system 90 illustrated in Figure x1G.

In the example of Figure 1D, the 5G Core Network 109 may include an access and mobility management function (AMF) 172, a Session Management Function (SMF) 174, User Plane Functions (UPFs) 176a and 176b, a User Data Management Function (UDM) 197, an Authentication Server Function (AUSF) 190, a Network Exposure Function (NEF) 196, a Policy Control Function (PCF) 184, a Non-3GPP Interworking Function (N3IWF) 199, a User Data Repository (UDR) 178. While each of the foregoing elements are depicted as part of the 5G core network 109, it will be appreciated that any one of these elements may be owned and/or operated by an entity other than the core network operator. It will also be appreciated that a 5G core network may not consist of all of these elements, may consist of additional elements, and may consist of multiple instances of each of these elements. Figure 1D shows that network functions directly connect to one another, however, it should be appreciated that they may communicate via routing agents such as a diameter routing agent or message buses.

In the example of Figure 1D, connectivity between network functions is achieved via a set of interfaces, or reference points. It will be appreciated that network functions could be modeled, described, or implemented as a set of services that are invoked, or called, by other network functions or services. Invocation of a Network Function service may be achieved via a direct connection between network functions, an exchange of messaging on a message bus, calling a software function, etc.

The AMF 172 may be connected to the RAN 105 via an N2 interface and may serve as a control node. For example, the AMF 172 may be responsible for registration management, connection management, reachability management, access authentication, access authorization. The AMF may be responsible forwarding user plane tunnel configuration information to the RAN 105 via the N2 interface. The AMF 172 may receive the user plane tunnel configuration information from the SMF via an N11 interface. The AMF 172 may generally route and forward NAS packets to/from the WTRUs 102a, 102b, and 102c via an N1 interface. The N1 interface is not shown in Figure 1D.

The SMF 174 may be connected to the AMF 172 via an N11 interface. Similarly the SMF may be connected to the PCF 184 via an N7 interface, and to the UPFs 176a and 176b via an N4 interface. The SMF 174 may serve as a control node. For example, the SMF 174 may be responsible for Session Management, IP address allocation for the WTRUs 102a, 102b, and 102c, management and configuration of traffic steering rules in the UPF 176a and UPF 176b, and generation of downlink data notifications to the AMF 172.

The UPF 176a and UPF176b may provide the WTRUs 102a, 102b, and 102c with access to a Packet Data Network (PDN), such as the Internet 110, to facilitate communications between the WTRUs 102a, 102b, and 102c and other devices. The UPF 176a and UPF 176b may also provide the WTRUs 102a, 102b, and 102c with access to other types of packet data networks. For example, Other Networks 112 may be Ethernet Networks or any type of network that exchanges packets of data. The UPF 176a and UPF 176b may receive traffic steering rules from the SMF 174 via the N4 interface. The UPF 176a and UPF 176b may provide access to a packet data network by connecting a packet data network with an N6 interface or by connecting to each other and to other UPFs via an N9 interface. In addition to providing access to packet data networks, the UPF 176 may be responsible packet routing and forwarding, policy rule enforcement, quality of service handling for user plane traffic, downlink packet buffering.

The AMF 172 may also be connected to the N3IWF 199, for example, via an N2 interface. The N3IWF facilitates a connection between the WTRU 102c and the 5G core network 170, for example, via radio interface technologies that are not defined by 3GPP. The AMF may interact with the N3IWF 199 in the same, or similar, manner that it interacts with the RAN 105.

The PCF 184 may be connected to the SMF 174 via an N7 interface, connected to the AMF 172 via an N15 interface, and to an Application Function (AF) 188 via an N5 interface. The N15 and N5 interfaces are not shown in Figure 1D. The PCF 184 may provide policy rules to control plane nodes such as the AMF 172 and SMF 174, allowing the control plane nodes to enforce these rules. The PCF 184, may send policies to the AMF 172 for the WTRUs 102a, 102b, and 102c so that the AMF may deliver the policies to the WTRUs 102a, 102b, and 102c via an N1 interface. Policies may then be enforced, or applied, at the WTRUs 102a, 102b, and 102c.

The UDR 178 may act as a repository for authentication credentials and subscription information. The UDR may connect to network functions, so that network function can add to, read from, and modify the data that is in the repository. For example, the UDR 178 may connect to the PCF 184 via an N36 interface. Similarly, the UDR 178 may connect to the NEF 196 via an N37 interface, and the UDR 178 may connect to the UDM 197 via an N35 interface.

The UDM 197 may serve as an interface between the UDR 178 and other network functions. The UDM 197 may authorize network functions to access of the UDR 178. For example, the UDM 197 may connect to the AMF 172 via an N8 interface, the UDM 197 may connect to the SMF 174 via an N10 interface. Similarly, the UDM 197 may connect to the AUSF 190 via an N13 interface. The UDR 178 and UDM 197 may be tightly integrated.

The AUSF 190 performs authentication related operations and connects to the UDM 178 via an N13 interface and to the AMF 172 via an N12 interface.

The NEF 196 exposes capabilities and services in the 5G core network 109 to Application Functions (AF) 188. Exposure may occur on the N33 API interface. The NEF may connect to an AF 188 via an N33 interface and it may connect to other network functions in order to expose the capabilities and services of the 5G core network 109.

Application Functions 188 may interact with network functions in the 5G Core Network 109. Interaction between the Application Functions 188 and network functions may be via a direct interface or may occur via the NEF 196. The Application Functions 188 may be considered part of the 5G Core Network 109 or may be external to the 5G Core Network 109 and deployed by enterprises that have a business relationship with the mobile network operator.

Network Slicing is a mechanism that could be used by mobile network operators to support one or more 'virtual' core networks behind the operator's air interface. This involves 'slicing' the core network into one or more virtual networks to support different RANs or different service types running across a single RAN. Network slicing enables the operator to create networks customized to provide optimized solutions for different market scenarios which demands diverse requirements, e.g. in the areas of functionality, performance and isolation.

3GPP has designed the 5G core network to support Network Slicing. Network Slicing is a good tool that network operators can use to support the diverse set of 5G use cases (e.g., massive IoT, critical communications, V2X, and enhanced mobile broadband) which demand very diverse and sometimes extreme requirements. Without the use of network slicing techniques, it is likely that the network architecture would not be flexible and scalable enough to efficiently support a wider range of use cases need when each use case has its own specific set of performance, scalability, and availability requirements. Furthermore, introduction of new network services should be made more efficient.

Referring again to Figure 1D, in a network slicing scenario, a WTRU 102a, 102b, or 102c may connect to an AMF 172, via an N1 interface. The AMF may be logically part of one or more slices. The AMF may coordinate the connection or communication of WTRU 102a, 102b, or 102c with one or more UPF 176a and 176b, SMF 174, and other network functions. Each of the UPFs 176a and 176b, SMF 174, and other network functions may be part of the same slice or different slices. When they are part of different slices, they may be isolated from each other in the sense that they may utilize different computing resources, security credentials, etc.

The core network 109 may facilitate communications with other networks. For example, the core network 109 may include, or may communicate with, an IP gateway, such as an IP Multimedia Subsystem (IMS) server, that serves as an interface between the 5G core network 109 and a PSTN 108. For example, the core network 109 may include, or communicate with a short message service (SMS) service center that facilities communication via the short message service. For example, the 5G core network 109 may facilitate the exchange of non-IP data packets between the WTRUs 102a, 102b, and 102c and servers or applications functions 188. In addition, the core network 170 may provide the WTRUs 102a, 102b, and 102c with access to the networks 112, which may include other wired or wireless networks that are owned and/or operated by other service providers.

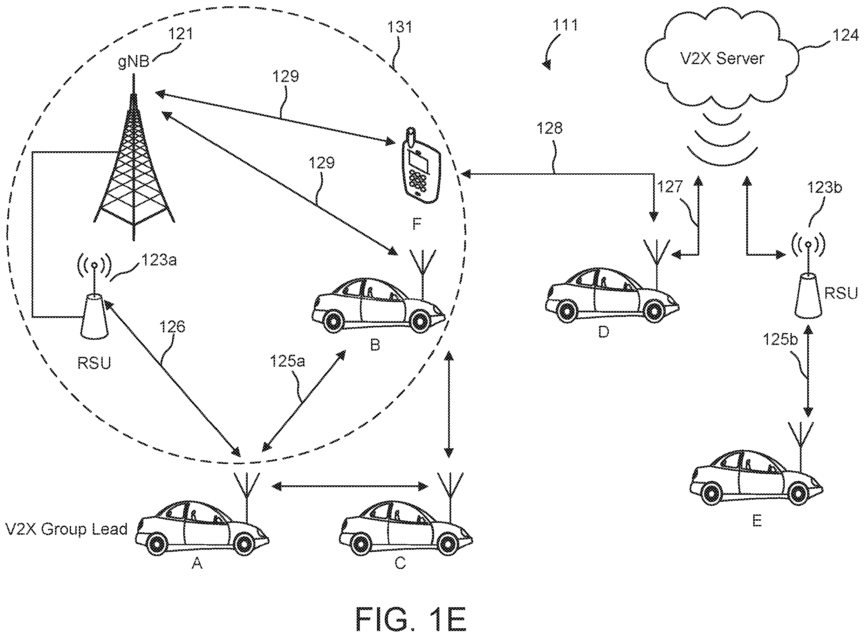

The core network entities described herein and illustrated in Figures 1A, 1C, 1D, and 1E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in Figures 1A, 1B, 1C, 1D, and 1E are provided by way of example only, and it is understood that the subject matter disclosed and claimed herein may be embodied or implemented in any similar communication system, whether presently defined or defined in the future.

Figure 1E illustrates an example communications system 111 in which the systems, methods, apparatuses described herein may be used. Communications system 111 may include Wireless Transmit/Receive Units (WTRUs) A, B, C, D, E, F, a base station gNB 121, a V2X server 124, and Road Side Units (RSUs) 123a and 123b. In practice, the concepts presented herein may be applied to any number of WTRUs, base station gNBs, V2X networks, and/or other network elements. One or several or all WTRUs A, B, C, D, E, and F may be out of range of the access network coverage 131. WTRUs A, B, and C form a V2X group, among which WTRU A is the group lead and WTRUs B and C are group members.

WTRUs A, B, C, D, E, and F may communicate with each other over a Uu interface 129 via the gNB 121 if they are within the access network coverage 131. In the example of Figure 1E, WTRUs B and F are shown within access network coverage 131. WTRUs A, B, C, D, E, and F may communicate with each other directly via a Sidelink interface (e.g., PC5 or NR PC5) such as interface 125a, 125b, or 128, whether they are under the access network coverage 131 or out of the access network coverage 131. For instance, in the example of Figure 1E, WRTU D, which is outside of the access network coverage 131, communicates with WTRU F, which is inside the coverage 131.

WTRUs A, B, C, D, E, and F may communicate with RSU 123a or 123b via a Vehicle-to-Network (V2N) 133 or Sidelink interface 125b. WTRUs A, B, C, D, E, and F may communicate to a V2X Server 124 via a Vehicle-to-Infrastructure (V2I) interface 127. WTRUs A, B, C, D, E, and F may communicate to another UE via a Vehicle-to-Person (V2P) interface 128.

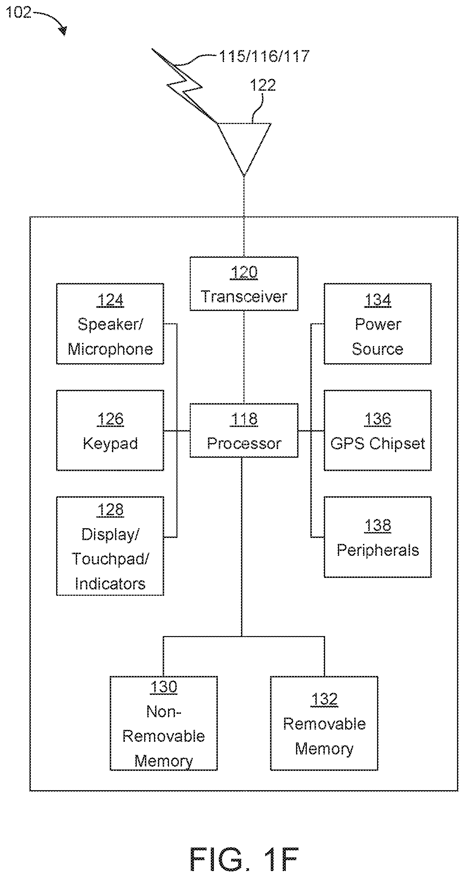

Figure 1F is a block diagram of an example apparatus or device WTRU 102 that may be configured for wireless communications and operations in accordance with the systems, methods, and apparatuses described herein, such as a WTRU 102 of Figure 1A, 1B, 1C, 1D, or 1E. As shown in Figure 1F, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements. Also, the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, a next generation node-B (gNode-B), and proxy nodes, among others, may include some or all of the elements depicted in Figure 1F and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1F depicts the processor 118 and the transceiver 120 as separate components, it will be appreciated that the processor 118 and the transceiver 120 may be integrated together in an electronic package or chip.

The transmit/receive element 122 of a UE may be configured to transmit signals to, or receive signals from, a base station (e.g., the base station 114a of Figure 1A) over the air interface 115/116/117 or another UE over the air interface 115d/116d/117d. For example, the transmit/receive element 122 may be an antenna configured to transmit and/or receive RF signals. The transmit/receive element 122 may be an emitter/detector configured to transmit and/or receive IR, UV, or visible light signals, for example. The transmit/receive element 122 may be configured to transmit and receive both RF and light signals. It will be appreciated that the transmit/receive element 122 may be configured to transmit and/or receive any combination of wireless or wired signals.

In addition, although the transmit/receive element 122 is depicted in Figure 1F as a single element, the WTRU 102 may include any number of transmit/receive elements 122. More specifically, the WTRU 102 may employ MIMO technology. Thus, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, for example NR and IEEE 802.11 or NR and E-UTRA, or to communicate with the same RAT via multiple beams to different RRHs, TRPs, RSUs, or nodes.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit. The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server that is hosted in the cloud or in an edge computing platform or in a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software and/or hardware modules that provide additional features, functionality, and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth® module, a frequency modulated (FM) radio unit, a digital music player, a media player, a video game player module, an Internet browser, and the like.

The WTRU 102 may be included in other apparatuses or devices, such as a sensor, consumer electronics, a wearable device such as a smart watch or smart clothing, a medical or eHealth device, a robot, industrial equipment, a drone, a vehicle such as a car, truck, train, or an airplane. The WTRU 102 may connect to other components, modules, or systems of such apparatuses or devices via one or more interconnect interfaces, such as an interconnect interface that may comprise one of the peripherals 138.

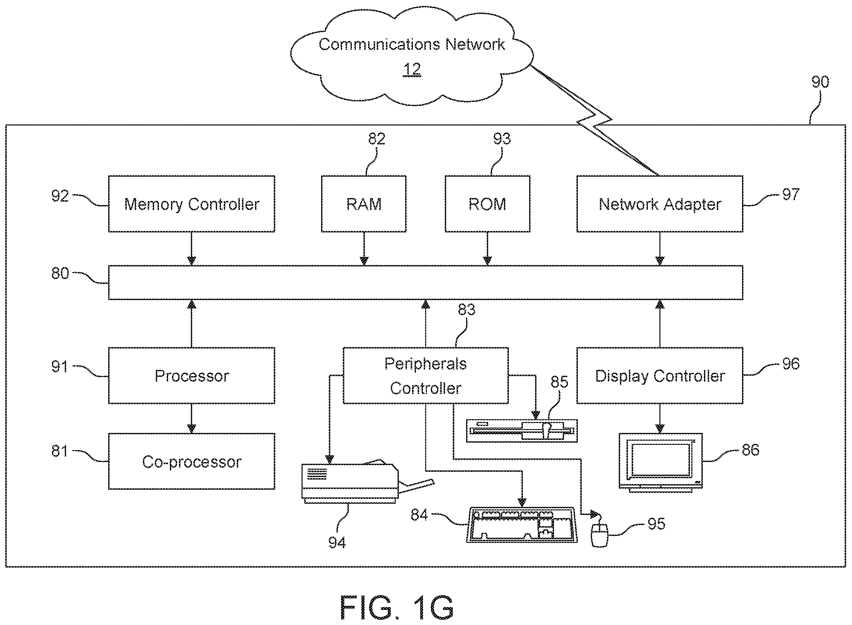

Figure 1G is a block diagram of an exemplary computing system 90 in which one or more apparatuses of the communications networks illustrated in Figures 1A, 1C, 1D and 1E may be embodied, such as certain nodes or functional entities in the RAN 103/104/105, Core Network 106/107/109, PSTN 108, Internet 110, Other Networks 112, or Network Services 113. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 may be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a wireless or wired network adapter 97, that may be used to connect computing system 90 to an external communications network or devices, such as the RAN 103/104/105, Core Network 106/107/109, PSTN 108, Internet 110, WTRUs 102, or Other Networks 112 of Figures 1A, 1B, 1C, 1D, and 1E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations, or functions described herein may be implemented in the form of such computer executable instructions, executing on the processor of an apparatus or computing system configured for wireless and/or wired network communications. Computer readable storage media includes volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computing system.

New Radio Requirements

3GPP TR 38.913 defines scenarios and requirements for New Radio (NR) technologies. The Key Performance Indicators (KPIs) for eMBB, URLLC and mMTC devices are summarized in Table 2 below.

**Table 2**

| Device | KPI | Description | Requirement |
|---|---|---|---|
| eMBB | Peak data rate | Peak data rate is the highest theoretical data rate which is the received data bits assuming error-free conditions assignable to a single mobile station, when all assignable radio resources for the corresponding link direction are utilized (i.e., excluding radio resources that are used for physical layer synchronization, reference signals or pilots, guard bands and guard times). | 20Gbps for downlink and 10Gbps for uplink |
| | Mobility interruption time | Mobility interruption time means the shortest time duration supported by the system during which a user terminal cannot exchange user plane packets with any base station during transitions. | 0ms for intra-system mobility |
| | Data Plane Latency | For eMBB value, the evaluation needs to consider all typical delays associated with the transfer of the data packets in an efficient way (e.g. applicable procedural delay when resources are not pre-allocated, averaged HARQ retransmission delay, impacts of network architecture). | 4ms for UL, and 4ms for DL |
| URLLC | Control Plane Latency | Control plane latency refers to the time to move from a battery efficient state (e.g., IDLE) to start of continuous data transfer (e.g., ACTIVE). | 10 ms |
| | Data Plane Latency | For URLLC the target for user plane latency for UL and DL. Furthermore, if possible, the latency should also be low enough to support the use of the next generation access technologies as a wireless transport technology that can be used within the next generation access architecture. | 0.5 ms |
| | Reliability | Reliability can be evaluated by the success probability of transmitting X bytes (1) within 1 ms, which is the time it takes to deliver a small data packet from the radio protocol layer 2/3 SDU ingress point to the radio protocol layer 2/3 SDU point of the radio interface, at a certain channel quality (e.g., coverage-edge). NOTE1: Specific value for X is FFS. | 1-10-5 within 1 ms |
| | Coverage | "Maximum coupling loss" (MCL) in uplink and downlink between device and Base Station site (antenna connector(s)) for a data rate of [X bps], | 164 dB |
| mMTC | | where the data rate is observed at the egress/ingress point of the radio protocol stack in uplink and downlink. | |
| | UE Battery Life | User Equipment (UE) battery life can be evaluated by the battery life of the UE without recharge. For mMTC, UE battery life in extreme coverage shall be based on the activity of mobile originated data transfer consisting of [200 bytes] Uplink (UL) per day followed by [20 bytes] Downlink (DL) from Maximum Coupling Loss (MCL) of [tbd] dB, assuming a stored energy capacity of [5Wh]. | 15 years |
| | Connection Density | Connection density refers to total number of devices fulfilling specific Quality of Service (QoS) per unit area (per km2). QoS definition should take into account the amount of data or access request generated within a time t_gen that can be sent or received within a given time, t_sendrx, with x% probability. | 106 devices/km2 |

LTE V2X

Vehicular communication services, represented by V2X services, can include the following: V2V, V2I, V2N and V2P. V2X services are provided by the PC5 interface and/or Uu interface. Support of V2X services via PC5 interface is provided by V2X sidelink. communication whereby UEs can communicate with each other directly over the PC5 interface. This communication mode is supported when the UE is served by E-UTRAN and when the UE is outside of E-UTRA coverage. Only the UEs authorized to be used for V2X services can perform V2X sidelink communication.

LTE-Uu can be unicast and/or MBMS. These two operation modes are used by a UE independently for transmission and reception, e.g. a UE can use MBMS for reception without using LTE-Uu for transmission. A UE may also receive V2X messages via LTE-Uu unicast downlink.

V2X in 5G NR

SA1 has identified 25 use cases for advanced V2X services with the consideration of desirable new applications in automotive industry. The 25 use cases for advanced V2X services are categorized into four use case groups. These include vehicle platooning, extended sensors, advanced driving, and remote driving.

Vehicle platooning enables the vehicles to dynamically form a platoon travelling together. All vehicles in the platoon obtain information from the leading vehicle to manage the platoon. This information allows vehicles to drive closer than normally performed in a coordinated and efficient manner, all going to the same direction, and travelling together.

Extended sensors enable the exchange of raw or processed data gathered through local sensors or live video images among vehicles, road site units, devices of pedestrian and V2X application servers. Vehicles can increase their perception of their environment beyond what their own sensors can detect. They also have a broader and holistic view of the local situation. High data rate is one of its key characteristics.

Advanced driving enables semi-automated or fully automated driving. Each vehicle and/or RSU shares its own perception data obtained from its local sensors with vehicles in proximity and that allows vehicles to synchronize and coordinate their trajectories or maneuvers. Each vehicle also shares its driving intention with vehicles in proximity.

Remote driving enables a remote driver or a V2X application to operate a remote vehicle for those passengers who cannot drive by themselves or remote vehicles located in dangerous environments. In situations where variation is limited and routes are predictable, such as public transportation, driving based on cloud computing may be employed. In these situations, high reliability and low latency are the main requirements.

In Rel-14 LTE V2X, a basic set of requirements for V2X service in TR 22.885 has been supported and considered sufficient for basic road safety service. Vehicles (i.e., UEs supporting V2X applications) can exchange their own status information through sidelink, such as position, speed and heading, with other nearby vehicles, infrastructure nodes and/or pedestrians. An ongoing work item for 3GPP V2X phase 2 in Rel-15 introduces a number of new features in sidelink, including: carrier aggregation, high order modulation, latency reduction, and feasibility study on both transmission diversity and short TTI in sidelink. All of these enhanced features in 3GPP V2X phase 2 are predominantly based on LTE and requires coexistence with Rel-14 UE in same resource pool.

Synchronization and Sidelink Configuration Acquisition

According to an aspect of the application, there are three possible cases for NR V2X synchronization and sidelink configuration acquisition. Each will be discussed below.

Case 1: Network based synchronization and acquisition: gNB and RSU will transmit NR SSB and other system information (OSI) essential for V2X sidelink synchronization and discovery. This may include, for example, the synchronization configuration used for transmission/reception of SLSS on the given frequency. Examples of essential V2X sidelink synchronization and discovery parameters can be provided in OSI.

Case 2: UE relay base synchronization and acquisition: perform synchronization and provide essential system information of sidelink for out of coverage vehicle UEs. Some UEs will function as a synchronization source in V2X communication scenarios by transmitting a synchronization signal burst and NR-PSBCH (NR physical sidelink broadcast channel). The synchronization signal burst can be similar to NR-SSB, e.g., the synchronization source UE's ID or group ID or group lead ID is carried on the synchronization signal, as well as the time index of the SSBs of the UE's synchronization sweeping bursts. NR-PSBCH will carry most essential system information about V2X sidelink configuration. This may include, for example, the default V2X discovery resource and initial side link resource configuration and/or a point allocating a NR-PSSCH on sidelink which carries remaining detail information on numerology, sidelink resource configurations, etc.

Compared with NR PBCH, this NR-PSBCH for sidelink may have more content. This makes the structure of NR-PSBCH take more RBs in frequency and more symbols in time, e.g. wider bandwidth in frequency and more than 2 symbols in time, FDMed and TDMed with the NR-PSSS, and NR-SSSS within the NR sidelink synchronization signal block (NR-SSSB). Such a UE can either be a UE synchronized to a gNB or RSU (called as in-network-coverage UE), a V2X group lead (for example, the lead of a platooning group), or a UE that belongs to a V2X group and carries the synchronization signal burst and NR-PSBCH of the group lead node.

The synchronization signal burst and NR-PSBCH will be transmitted in beamforming manner swept across (all) different beams. When an out of coverage vehicle UE detects synchronization signal burst and NR-PSBCH transmitted by another vehicle UE, it acquires synchronization and essential system information of V2X sidelink channels and signals configuration.

Case 3: Ad hoc synchronization and acquisition: for the vehicle UEs of interest in a proximity, if all of them are out of network coverage and no V2X group is formed yet, then ad hoc synchronization and acquisition will be performed. Among vehicles of interest in a proximity, at least one vehicle UE will broadcast synchronization signal burst, which can be similar to NR-SSB, e.g., the synchronization source UE's ID or group ID is carried on the synchronization signal, as well as the time index of synchronization signal's block of the UE's synchronization sweeping bursts. When an out-of-coverage vehicle UE detects synchronization signal burst transmitted by such a UE, it acquires synchronization with that UE. Such a UE may also broadcast NR-PSBCH containing the most essential system information about V2X sidelink configuration, e.g., the default V2X discovery resource and initial side link resource configuration and/or a point allocating a NR-PSSCH on sidelink, which carries remaining detail information on numerology, sidelink resource configurations, etc.

Compared with NR PBCH, this NR-PSBCH for sidelink may have more content which may make the structure of NR-PSBCH take more RBs in frequency and more symbols in time, e.g. wider bandwidth in frequency and more than 2 symbols in time, FDMed and TDMed with the NR-PSSS and NR-SSSS within the NR sidelink synchronization signal block (NR-SSSB). When an out-of-coverage vehicle UE detects NR-PSBCH transmitted by such a UE, it acquires essential system information of V2X sidelink channels and signals configuration. If NR-PSBCH is not transmitted by such a UE, then those out of coverage vehicle UEs can use a default configuration of essential system information needed to receive V2X sidelink channels and signals. The synchronization signal burst and NR-PSBCH will be transmitted in beamforming manner swept across (all) different beams.

Beamforming for NR V2X

According to another aspect of the application, beamforming before discovery for NR V2X will be similar to beam forming at initial access of NR Release-15. In each of the synchronization and acquisition cases, after the UE detected the best NR-SSB on a beam or NR-PSSB (physical side-link SS block), it already found the best TX beam of source node.

In each of the synchronization and acquisition cases, the UE will also acquire the configuration of resource pools on the sidelink and the information to complete beam link pairing with the synchronization node, and use the information to complete beam link pairing with the synchronization node.

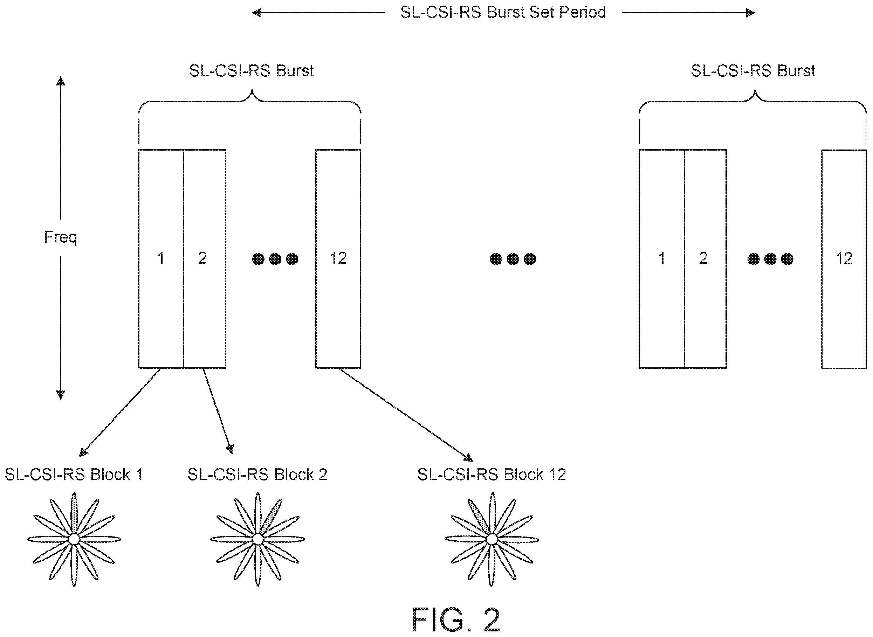

Upon higher layer signaling (for example, triggered by RADAR sensing results or a new UE join platooning message), the vehicle UE will start beamforming training process with one or several UEs. The higher layer signaling may provide a range of spatial directions or a selected subset of beams of other UEs to perform BF training. This will greatly reduce the beamforming overhead. During beamforming training procedures, beam-width selection can be decided based on speed (for example, the relative speed between two V2X nodes). The V2X node can configure side-link CSI-RS (SL-CSI-RS) for beam training. The UE may be configured with multiple SL-CSI-RS for beam management. The SL-CSI-RS resource may be periodic (i.e., configured at the slot level), semi-persistent (also at the slot level, but it can be activated or deactivated with messages from the V2X node) and aperiodic (the transmission is triggered by the V2X node signaling). An exemplary SL-CSI-RS configuration for beam training is shown in Figure 2.

NR V2X Discovery

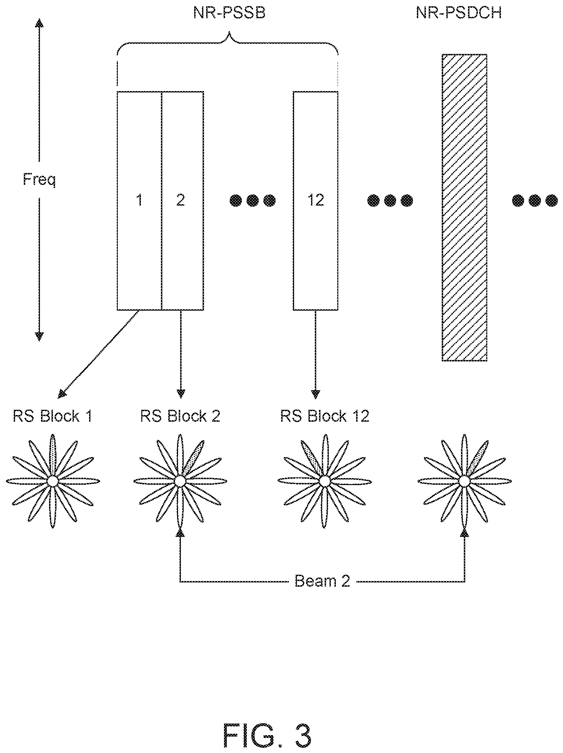

According to yet another aspect of the application, NR V2X discovery should be performed after beamforming training. NR-PSDCH is the physical sidelink discovery channel for NR V2X, which is exchanged between the pair of V2X nodes performing discovery. It should be transmitted in beamforming manner on the beam link pair established between the two V2X nodes. The best detected beam of NR-PSSB indicates the beam of NR-PDSCH. In this example as shown in Figure 3, Block number 2 is the preferred beam for the UE and NR-PSSB block 2 indicates the beam of NR-PDSCH, e.g., the index of NR-PSSB block 2 point to the sidelink resource(s) for NR-PDSCH.

Procedures in Vehicle Grouping Scenarios

According to yet even another aspect of the application, procedures are described for vehicle grouping scenarios. In an embodiment of this aspect, Cooperative Short Distance Grouping (CoSdG) refers to the scenario where the distance between vehicles such as trucks is extremely small. This creates a desirable form of legal tailgating.

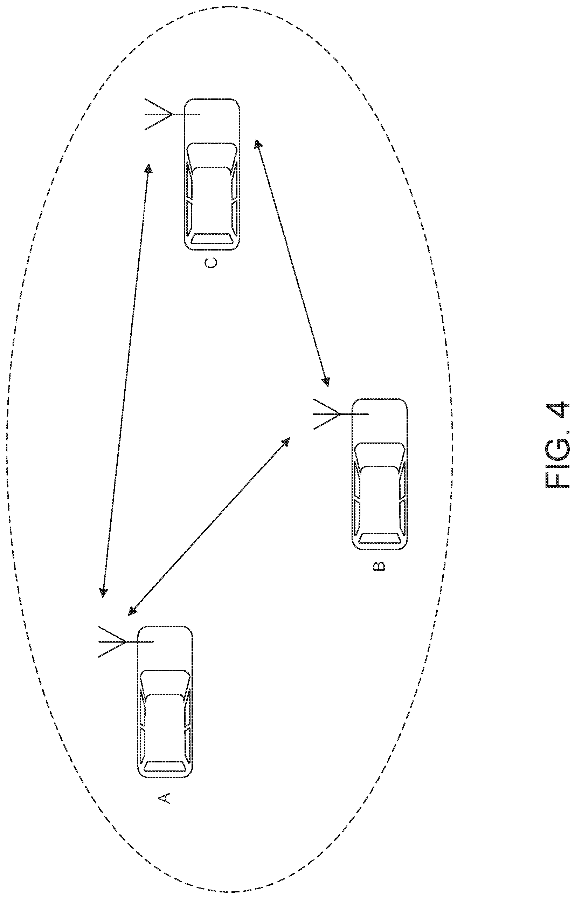

In an exemplary embodiment as shown in Figure 4, several vehicles are V2X enabled, and they are traveling in close proximity and in V2X communication range. They will discover each other and form a group. Such a group can be a CoSdG or platooning group. Based on this architecture, the following procedures for group forming and maintenance are envisaged as follows:

Step 1: The vehicles in close proximity will discover each other. The discovery includes proximity discovery, beam link pairing (beamforming training), and higher layer V2X protocol discovery. Vehicles can use beamforming training methods as described above. The higher layer V2X protocol discovery channel carry information which can be similar to the LTE V2X discovery. Such a discovery can be periodic or event-triggered. For example, upon receiving a higher layer signaling or MAC-CE signaling, the vehicle can start the procedures of discovery. The higher layer signaling or MAC-CE signaling can be triggered by UE's RADAR or other sensors detect a vehicle in proximity.

Step 2: After beam discovery and beam link pair is established, those vehicles will form a group via the peer device discovery and association conducted by the higher layer or application with the decoded NR-PSDCH passed from physical layer.

Step 2a: A vehicle that wants to initiate the procedures to form a new V2X group will send a V2X grouping request to one or several other vehicles. A new signaling called V2X grouping request can be either a higher layer signaling or a MAC-CE signaling. It can be transmitted on NR-PSSCH (NR Physical Sidelink Shared Channel). It contains at least the following information:

(i) The type of V2X group the vehicle is capable or willing to establish: Platooning, SSMS (sensor and state map sharing), CoSdG and etc. One or several groups types can be signaled at the same time.
(ii) Key information of the vehicle: for example, vehicle size, speed, location, planned travel route/destination and etc.

Step 2b: A vehicle that received a V2X grouping request from the initiating vehicle will respond with a V2X grouping response. The new signaling V2X grouping response is envisaged to be the response to the V2X grouping request. It can be either a higher layer signaling or a MAC-CE signaling. It can be transmitted on NR-PSSCH (NR Physical Sidelink Shared Channel). It contains the following information (but not limited to them):

The type of V2X group the responding vehicle agrees to establish with the initiating vehicle includes: Platooning, SSMS (sensor and state map sharing), CoSdG, etc. One or several group types can be signaled at the same time. At least one codeword in the group type signaling can indicate "no group can be formed".

Key information of the vehicle: for example, vehicle size, speed, location, planned travel route/destination and etc.

Step 2c: Subsequent V2X group establishment signaling are exchanged according to higher layer grouping protocol. If a group is established successfully, then a V2X grouping complete message is broadcast within the group. The V2X grouping complete message is a confirmation that the group is established. Carry group information may include the group ID, group size, speed, inter-vehicle distance policies, individual group member's index and position within the group, planned trajectory, etc. The communication link between any two members of the group can be either direct beam link pair or relay via other vehicles or even RSU. Each group member can be uniquely identified by its group ID and group member index.

Step 3: Group members (vehicles) will continuously exchange their on-board information, sensor data, speed, direction, maneuvers and etc. They utilize information in beam tracking after initial beam link pairing. This also includes the relay links.

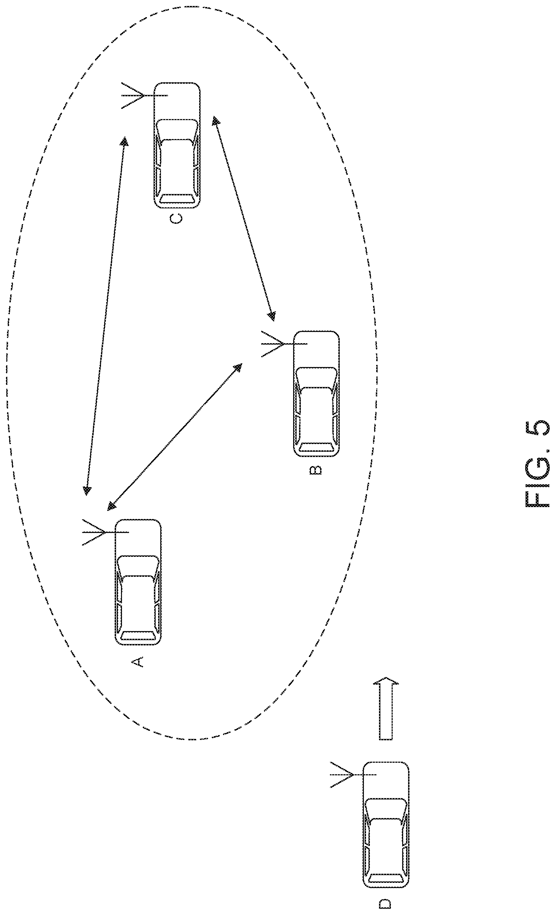

According to another exemplary embodiment as illustrated in Figure 5, procedures for joining the group are described. Here, several vehicles are V2X enabled, and they are traveling in close proximity and in V2X communication range. They have already formed a group. Such a group can be a CoSdG or platooning group. Another vehicle is traveling close to the group. The following procedures are provided for this embodiment:

Step 1: After several vehicles have formed a group, each group member will broadcast their group related information to non-group members. The group information may include the group ID, group size, speed, inter-vehicle distance policies, their positions in the group, planned trajectory, etc. Alternatively, group related information will be carried in group member's discovery channel/signal, such as NR-PSDCH.

Step 2: A vehicle that is traveling close to the group will perform discovery with a group member, which can be initiated by either this new vehicle or existing group member. The vehicle UE that initiates the peer device discovery will send out "To Be Discovered" message on NR-PSDCH. Then the other one will respond accordingly. The discovery includes proximity beam discovery, beam link pairing (beamforming training), and higher layer V2X protocol peer device or service discovery. Vehicles can use beamforming training methods as described above. The higher layer V2X protocol discovery channel carry information similar to the LTE V2X discovery. Such a discovery can be periodic or event-triggered. For example, upon receiving a higher layer signaling or MAC-CE signaling, the vehicle can start the procedures of discovery. The higher layer signaling or MAC-CE signaling can be triggered by UE's RADAR or other sensors detect a vehicle in proximity.

Step 3: The new vehicle receives group-related information from the group members (can be either broadcast message or NR-PSDCH during or after discovery). Then, this vehicle will evaluate whether this group policy and terms are acceptable to join. The criteria to join or not may include (but not limited to): group size, speed, inter-vehicle distance policies, planned trajectory, etc. If the vehicle decides to join the group, it will proceed to Step 4.

Step 4: In order to join the group, this vehicle sends a V2X group join request message to one or several members of the group. This new signaling called V2X group join request can be defined as either a higher layer signaling or a MAC-CE signaling. It contains the following information: (i) Indication of the request to join; (ii) Group ID; (iii) The intended position within the group when it joins; and (iv) Key information of the vehicle itself: for example, vehicle size, speed, location, planned travel route/destination and etc.

Step 5: Depending on the group type (platooning, CoSdG or others), the vehicle that received a V2X group join request may need to forward/relay the received V2X group join request to other group member(s) to make decision. For example, in the platooning case, the platooning lead vehicle may make the decision to allow the new vehicle to join or not. After group members decide to allow the new vehicle to join or not, the vehicle that received a V2X group join request will respond with a V2X group join response.

The new signaling V2X group join response is defined as the response to the V2X group join request. It can either be a higher layer signaling or a MAC-CE signaling. It can be transmitted on NR-PSSCH (NR Physical Sidelink Shared Channel). It contains the following information: (i) Indication of approve or rejection the request to join; (ii) Group ID; (iii) The allowed position within the group when it joins; and (iv) Other key information of the group.

Step 6: If the requesting vehicle receives a V2X group join response that approves its request to join, it will proceed to join the group. Then, it will send a V2X group join complete message to the group. Otherwise (the requesting vehicle receives a V2X group join response that rejects its request to join), it will not join the group.

Step 7: Upon receiving V2X group join complete message, other group members will update their group information. They may need to update their beam link pair and relay route among group members due to the group topology change caused by the newly joining member.

Step 8: Group members (vehicles) will continuously exchange their on-board information, sensor data, speed, direction, maneuvers, etc. They utilize this information in beam tracking after initial beam link pairing, which also includes the relay links.

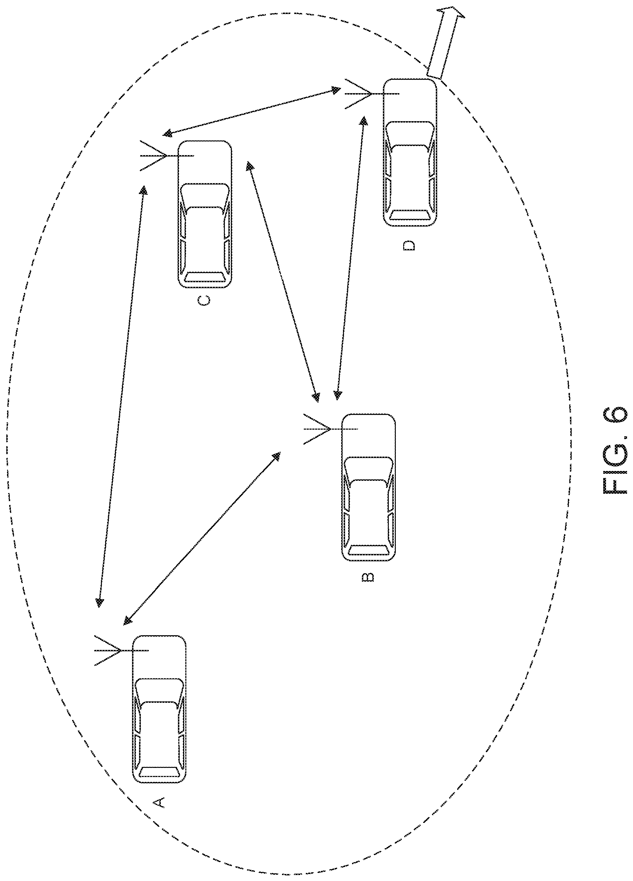

A further embodiment of this aspect describes procedures for leaving the group. An exemplary illustration of this embodiment is depicted in Figure 6. Here, several vehicles are V2X enabled, and they are traveling in close proximity and in V2X communication range. They already formed a group. Such a group can be a CoSdG or platooning group. Subsequently, one vehicle within the group leaves the group. The following procedures are described for leaving the group:

Step 1: A group member within a group decides to leave the group. It will send a V2X group leave message to all members of the group in a unicast or broadcast manner. The vehicle leaving the group may not have direct communication links to all group members. This message may be relayed to some group members. This new signaling, called V2X group leave, can be defined as either a higher layer signaling or a MAC-CE signaling. It contains the following information: (i) The vehicle's decision to leave the group; (ii) Group ID; (iii) The vehicle's position within the group; and (iv) Key information of the vehicle itself: for example, planned travel route/destination, etc. This V2X group leave message can be transmitted on NR-PSBCH, NR-PSSCH, NR-PSDCH.

Step 2: Upon receiving V2X group leave message, other group members will update their group information. They may need to update their beam link pair and relay route among group members due to the group topology change caused by the member that leaves the group.

Step 3: Group members (vehicles) will continuously exchange their on-board information, sensor data, speed, direction, maneuvers, etc. They utilize this information in beam tracking after initial beam link pairing, which also includes the relay links.

A further embodiment of this aspect describes sidelink synchronization channel design for NR V2X. NR sidelink synchronization signal (SS) and PBCH channel, i.e., NR SL SSB/PBCH is composed of four elements: The primary sidelink synchronization signal (NR PSSS), the secondary sidelink synchronization Signal (NR SSSS), the demodulation reference signals (DMRS), and the physical sidelink broadcast channel (PSBCH). The NR PSSS and NR SSSS are used for time and frequency reference; together they encode the sidelink synchronization signal identifier (SL-SSID), which identities the synchronization reference (SyncRef). There is a subset of SL-SSIDs reserved for identifying SyncRefs in-coverage (configured by the network) where in-coverage may further be differentiated into in-LTE-coverage, in-NR-coverage, in-GNSS-coverage, in both LTE and NR coverage, and another subset reserved for out of coverage use, where out of coverage may further be differentiated into out of LTE coverage, out of GNSS coverage or out of NR coverage. The NR PSBCH carries the sidelink master information block, i.e., MasterInformationBlock-SL (MIB-SL), which contains the basic system information such as system subframe number, SL SS/PBCH block index, SL subcarrier spacing (SCS), etc. The DMRSs may be used as a reference for channel estimation, demodulation of the PSBCH, and measurement of Sidelink Reference Signal Received Power (S-RSRP) in the receiving UE. Note: NR PSSS and SSSS may be used for S-RSRP calculation. In addition, DMRS sequence initialization (i.e., different gold sequences) may be used for the indication of in network coverage or out of network coverage.

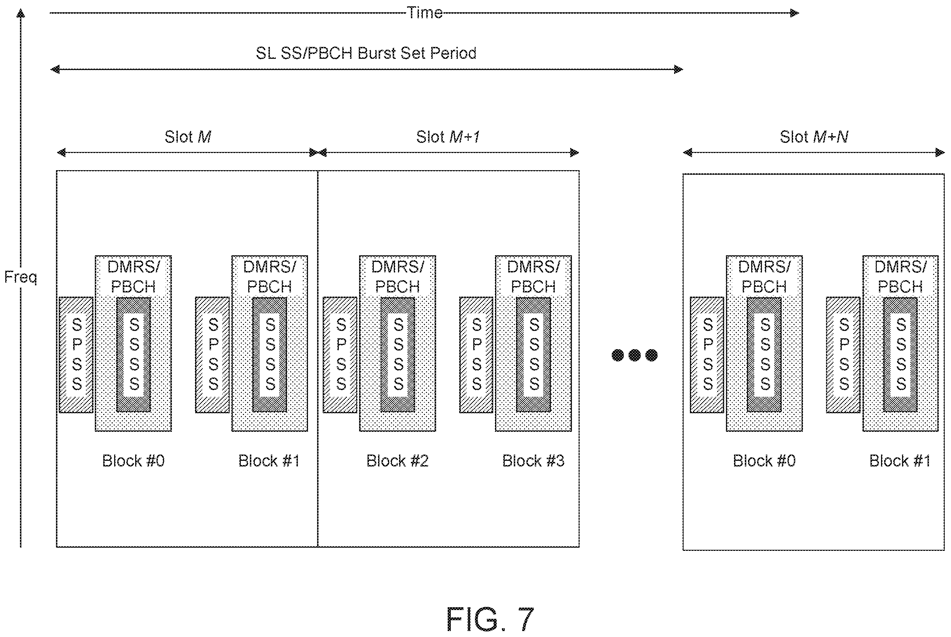

A NR SL SS/PBCH burst set encompasses one or multiple SS burst(s) with transmission periodic (e.g. 80ms, i.e., N=80 subframe, in Figure 7), and confined in 5ms (5 subframes) window. This window time can be broadcast in SL OSI. A SL SS burst may be composite by one or multiple SL SS Block(s). A SL SS Block may include one symbol PSSS, one symbol SSSS and two symbols PSPBCH (including DMRS). NR SL SS burst set periodicity can be defined to vary with different numerology. For FR1, SCS = {30 KHz, 60 KHz}, The default NR SL SS/PBCH burst set periodicity can be set as 80ms or higher (e.g., 160 ms). For FR2, SCS = {60 KHz, 120 KHz, 240 KHz} The default NR SL SS/PBCH burst set periodicity can be set as 20 ms or higher (60 ms).

SL SS/PBCH Transmission Condition

According to yet another aspect of this application, the following conditions for SL SS/PBCH transmission are met in one embodiment to trigger SL SS/PSBCH transmission:

Condition 1: UE transmit SL SS/PBCH under gNB instruction, the time-and-frequency resource for SL SS/PBCH transmission can be scheduled by gNB,
Condition 2: When UE-measured RSRP/S-RSRP is below certain threshold,
Condition 3: If the UE selects GNSS as synchronization reference, the UE may transmit SL SS/PSBCH at a pre-defined time and frequency resource
Condition 4: UE can decide when to transmit SL SS/PBCH at a pre-defined time and frequency resource. If UE is out of coverage, before sending SL SS/PBCH, it has to perform channel sensing on pre-defined SL SS/PBCH resource (the sensing time is depend on a random value in terms of ms), if channel is clean after sensing time is completed then it can start to transmit the SL SS/PBCH, otherwise, it indicates other UE has transmitted SL SS/SSPBCH.

In an alternative embodiment, the UE can stop transmitting NR SL SS/PBCH burst set when the following conditions are met:

Condition 1: gNB instruct UE to stop transmission of NR SL SS/PBCH via Uu DCI,
Condition 2: UE detect the synchronization priority has changed,
Condition 3: When a timer (SLSyncTxTimer) is expired. The SLSyncTxTimer value can be either pre-configured or from higher signaling such as SL OSI.
Condition 4: UE decides to stop SL SS/PBCH transmission when maximum number of transmission (window) is reached.

SL SS/PBCH burst, burst set structure

In yet another aspect of the application, NR sidelink synchronization signal/channel may use two symbols PSSS, two symbol SSSS and five symbols PSPBCH (includes DMRS) to enhance one-shot detection performance and to further enhance the timing and frequency offset estimation and one-shot PSPBCH demodulation performance.

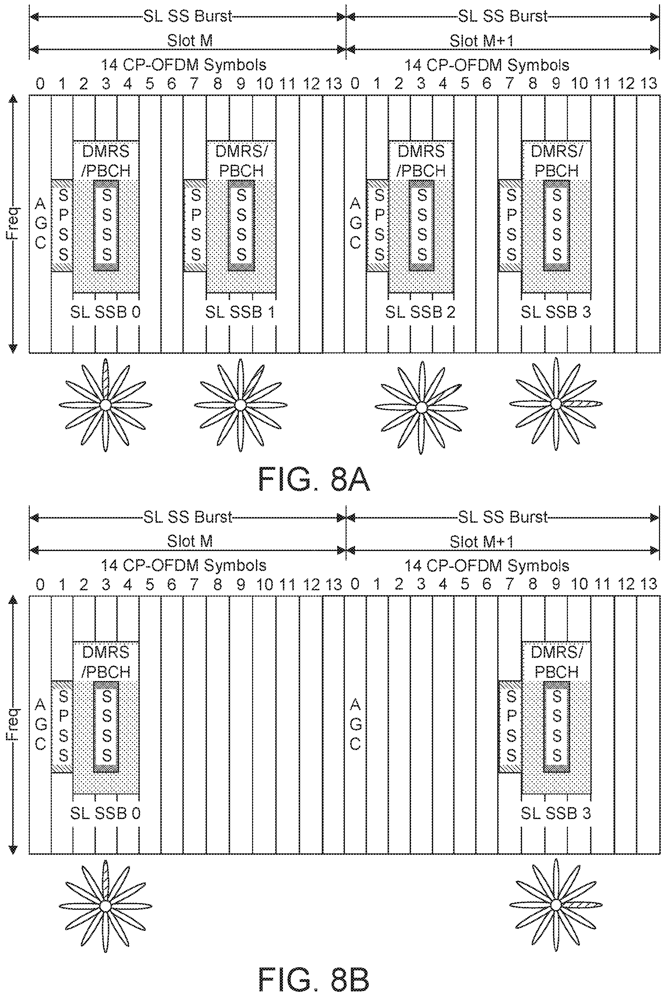

For a half frame (5ms) with NR SL SS/PBCH blocks, the first symbol indexes for candidate NR SL SS/PBCH blocks are determined according to the subcarrier spacing of NR SL SS/PBCH blocks as following example, where index 0 corresponds to the first symbol of the first slot in a half-frame. For example, 30 kHz subcarrier spacing: the first symbols of the candidate SL SS/PBCH blocks have indexes {1, 7} + 14n. The first OFDM symbol is reserved for not used for SS/PBCH transmission. The value of n is varied with different frequency band. For example, for carrier frequencies smaller than or equal to 3 GHz, n=0, 1. For carrier frequencies larger than 3 GHz and smaller than or equal to 6 GHz, n=0, 1, 2, 3. Figure 8A describes a transmission pattern of SL SS/PBCH for SCS = 30 kHz for frequency band is 3 GHz. The first symbol in a SL SS slot reserves for AGC stable time. SyncRef UE (UE transmit SL SS/PBCH) can decide which SL SS/PBCK block can be disabled, i.e., some of SL SS/PBCH blocks may not transmit in an SL SS burst. For example, in mode 1, if a SyncRef UE is in gNB coverage then gNB can instruct the SyncRef UE to transmit SL SS/PBCH. In this case, gNB may know other proximity UEs' position, hence, gNB can instruct a SyncRef UE to transmit certain of SL SS/PBCH beams instead of transmitting whole SL SS/PBCH blocks (beams). In mode 2, a SyncRef UE may be assisted with a sensor's (e.g., radar sensor) side information such as GPS position of proximity vehicles/UEs, speed, moving direction, etc. or gNB/gNB type RSU provide side information to estimate the directions of proximity UEs before it determines which SL SS/PBCH block need to be transmitted.

In Figure 8B, SL SS/PBCH block (index = 1) starting at symbol index 7 in slot M and SL SS/PBCH block (index 2) starting at symbol index 1 in slot M+1 are not transmitted.

In mode 1, If a SyncRef UE is in gNB coverage then gNB may instruct the SyncRef UE to transmit SL SS/PBCH.

The SL SS/PBCH transmission resource can be scheduled by gNB. In mode 2, a SyncRef UE may transmit SL SS/PBCH within a pre-configured time and frequency resource. To reduce or avoid the interference with Uu (cell) SS/PBCH, it is envisaged the SL SS/PBCH allocation methods are based on the following cases:

Case 1 - Pair spectrum:

For mode 1, the time and frequency resource for SL SS/PBCH transmission can be scheduled by the network resource (gNB). The resource for SL SS/PBCH transmission can be scheduled in an UL frequency band. Therefore, Uu SS/PBCH won't cause timing and frequency offset detection ambiguity with DL Uu SS/PBCH.

For mode 2, UE can autonomously transmit SL SS/PBCH in a pre-configured time and frequency resource. Thus, pre-configured resource for SL SS/PBCH can be reserved at a sub band of UL frequency band. If SL SS/PBCH resources are scheduled in the DL sub band, then the scheduled resource for SL SS/PBCH transmission may be exact, partial, or non-overlapped with Uu SS/PBCH in frequency domain. When scheduled resource is exact or partial overlapped with Uu SS in frequency domain, Uu UE may falsely detect SL SS/PBCH. Here, three solutions are envisaged to solve this issue as described in the options below:

Option 1: SL UE can assume gNB won't schedule an SL SS/PBCH resource overlap with Uu SS/PBCH in a frequency domain. For pair spectrum, it can allocate SL SS/PBCH resource in UL frequency band.
Option 2: SL SPSS and SSSS use different initialization value for M-sequence than the value for Uu PSS and SSS M-sequence generation but keep the same polynomial coefficients for M-sequence generation. The initial value for SPSS/SSSS will have the minimum correlation with PSS/SSS of gNB.
Option 3: SL SPSS/SSSS use difference sequence than Uu PSS and SSS sequence. For example, SL SPSS/SSSS can use different M-sequence polynomial coefficients than Uu PSS/SSS.

Case 2 - Unpair spectrum:

The above-proposed options for SS/PBCH resource allocation can be applied for unpair spectrum as well. For mode 1, the time and frequency resource for SL SS/PBCH transmission can be scheduled by network (gNB). For unpair spectrum, DL and UL are at a same frequency band. Therefore, it is impossible to allocate SL SS/PBCH in a dedicated UL frequency band.

In mode 2, UE can autonomously transmit SL SS/PBCH in a pre-configured time and frequency resource for SL SS/PBCH transmission. If the SL SS/PBCH resource(s) are non-overlapped with Uu SS/PBCH resource(s). It is noted the center of a Uu SS/PBCH resources is allocated at the synchronization raster and spans 20 RBs to avoid Uu UE false detected SL SS/PBCH.

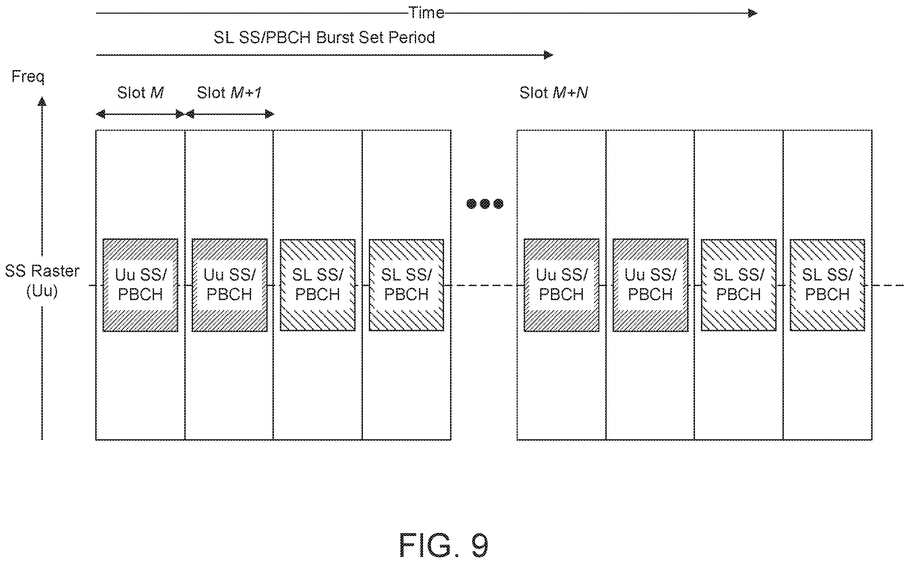

In an embodiment as depicted in Figure 9, SL SS/PBCH and Uu SS/PBCH are TDM and the center of SL SS/PBCH is aligned with a Uu SS/PBCH synchronization raster. In this case, vehicle UE doesn't have to tune its receiver to simultaneously monitor different sub bands to detect the SL SS/PBCH and Uu SS/PBCH. This may save switching time and potentially reduce complexity. However, SL synchronization signal (SPSS/SSSS) needs to use different sequences or different initial values for M-sequence generation than Uu PSS/SSS to reduce the correlation between Uu SS/PBCH and SL SS/PBCH and avoid the timing and frequency offset estimation ambiguity.

For mode 1 SL SS/PBCH transmission, UE may assume SL SS/PBCH is transmitted at the center of a scheduled SL band. For mode 2 SL SS/PBCH transmission, the resource(s) for SL SS/PBCH transmission is based on a pre-configured resource (or a SL band). UE may not assume the SL SS/PBCH is transmitted at the center of a pre-configured SL band.

NR SL SS/PBCH Transmission Periodicity

According to yet another aspect of the application, transmission of NR SL SS/PBCH can have the following options:

Option 1: Periodical transmission

In mode 1, when a SyncRef UE synchronization source is based on gNB, gNB can instruct SyncRef UE to transmit (a or multiple) SL SS/PBCH burst set(s) (e.g., different transmission periodicity of SL PSSS/SSS and SL PBCH) to out of coverage UEs. For example, the transmission of SL SS/PBCH burst set periodicity can support {5ms, 10ms, 20ms, 40ms, 80ms, 160ms, 200ms}.

In mode 2, UE can determine SL SS/PBCH burst set transmission periodicity. The SL SS/PBCH burst set periodicity can be in {5ms, 10ms, 20ms, 40ms, 80ms, 160ms, 200ms}.

NR PSBCH transmission periodicity can be different than NR SL PSSS/SSSS transmission periodicity. For example, the transmission periodicity of NR PSBCH can be set as 80ms but the transmission periodicity of NR SPSS/SSSS can be set as 40ms.

Option 2: Aperiodicity transmission

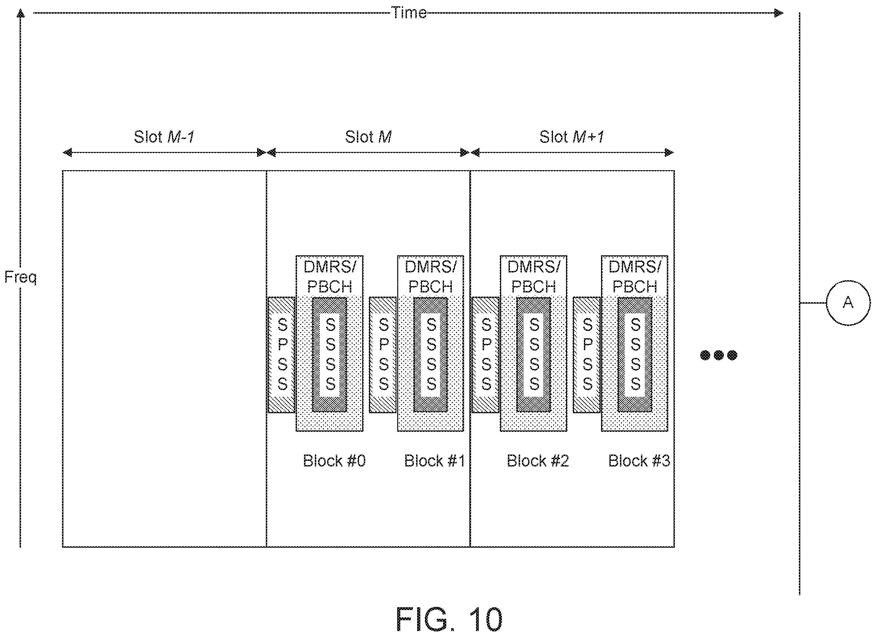

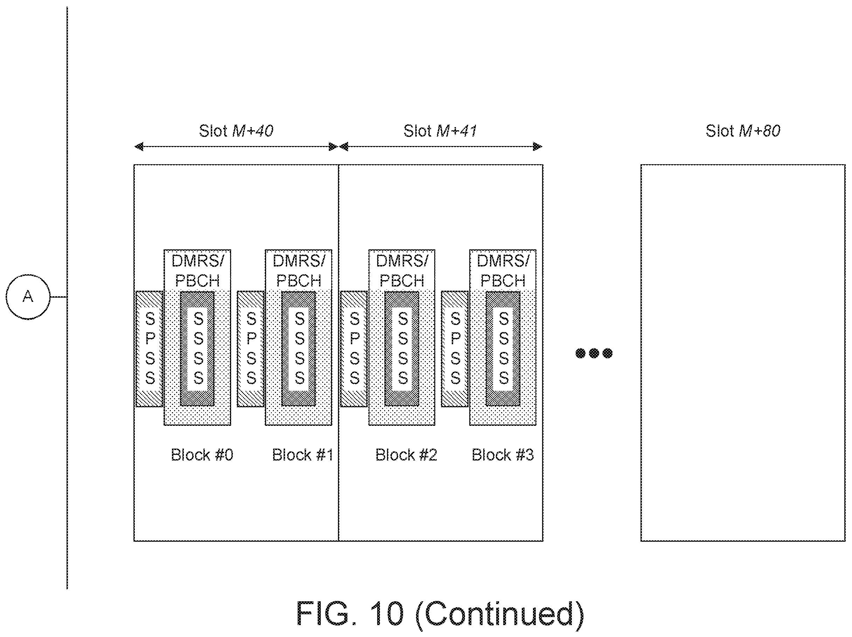

In mode 1, gNB can instruct UE to transmit SL SS/PBCH burst set with a timing period. The SL SS/PBCH transmission window is set as multiple of 5ms (or equivalent to number of transmission of a burst set). In mode 2, UE can determine the SL SS/PBCH transmission window as multiple of 5ms. In Figure 10 two of SL SS/PBCH burst set are transmitted.

For mode 1 SL SS/PBCH transmission, UE may assume SL SS/PBCH is transmitted at the central of a scheduled SL band. For mode 2 SL SS/PBCH transmission, the resource(s) for SL SS/PBCH transmission is based on a pre-configured resource (or a SL band). Hence, UE may not assume the SL SS/PBCH transmit at the center of a pre-configured SL band.

## NR SL SS/PBCH Transmission Periodicity

According to yet even another aspect, transmission of NR SL SS/PBCH can have the following options:

Option 1: Periodical transmission

In mode 1, when a SyncRef UE synchronization source is based on gNB, gNB can instruct SyncRef UE to transmit (a or multiple) SL SS/PBCH burst set(s) (e.g.: different transmission periodicity of SL PSSS/SSS and SL PBCH) to out of coverage UEs. For example, the transmission of SL SS/PBCH burst set periodicity can support {5ms, 10ms, 20ms, 40ms, 80ms, 160ms, 200ms}.

In mode 2, UE can determine SL SS/PBCH burst set transmission periodicity. The SL SS/PBCH burst set periodicity can be in {5ms, 10ms, 20ms, 40ms, 80ms, 160ms, 200ms}.

NR PSBCH transmission periodicity can be different than NR SL PSSS/SSSS transmission periodicity. For example, the transmission periodicity of NR PSBCH can be set as 80ms but the transmission periodicity of NR SPSS/SSSS can be set as 40ms.

Option 2: Aperiodicity transmission

In mode 1, gNB can instruct UE to transmit SL SS/PBCH burst set with a timing period. The SL SS/PBCH transmission window is set as multiple of 5ms (or equivalent to number of transmission of a burst set). In mode 2, UE can determine the SL SS/PBCH transmission window as multiple of 5ms. In Figure 10, two of SL SS/PBCH burst set are transmitted.

Table 3 below illustrates an exemplary NR SL-SSID from a different source ID. Table 4 below illustrates an exemplary NR SL-SSID from different source ID.

**Table 3**

| SSID Set | SSID Range | Description |
|---|---|---|
| GNSS | $0, ..., M_1$ | GNSS is the source of synchronization. The UE is synchronized to GNSS (direct) or to a nearby UE that achieves time and frequency synchronization from GNSS (indirect) |
| gNB | $M_1+1, ..., M_2$ | gNB is the synchronization source. The UE is synchronized to an gNB (direct) or to a nearby UE that is synchronized to an gNB (indirect) |
| eNB | $M_2+1, ..., M_3$ | eNB is the synchronization source. The UE is synchronized to a LTE eNB (direct) or to a nearby UE that is synchronized to a LTE eNB (indirect) |
| NR UE | $M_3+1, ... M_4$ | A NR UE is the synchronization source. The UE is synchronized to a nearby NR UE that obtains no synchronization information either directly or indirectly from GNSS, gNB or eNB |
| LTE UE | $M_4+1, ... N$ | A LTE UE is the synchronization source. The UE is synchronized to a nearby LTE UE that obtains no synchronization information either directly or indirectly from GNSS, gNB, eNB, or NR UE. |

**Table 4**

| SSID Set | SSID Range | Description |
|---|---|---|
| GNSS | $0, ..., M_1$ | GNSS is the source of synchronization. |

(continued)

| SSID Set | SSID Range | Description |
|---|---|---|
| | | The UE is synchronized to GNSS (direct) or to a nearby UE that achieves time and frequency synchronization from GNSS (indirect) |
| gNB | $M_1+1, ..., M_2$ | gNB is the synchronization source.<br>The UE is synchronized to an gNB (direct) or to a nearby UE that is synchronized to an gNB (indirect) |
| gNB-RSU | $M_2+1, ..., M_3$ | gNB-type RSU: stationary infrastructure providing V2X message transmission to UEs through the NR Uu reference point. This type of RSU can be physically collocated with a common gNB |
| eNB | $M_3+1, ..., M_4$ | eNB is the synchronization source.<br>The UE is synchronized to a LTE eNB (direct) or to a nearby UE that is synchronized to a LTE eNB (indirect) |
| eNB-RSU | $M_4+1, ... M_5$ | eNB-type RSU: stationary infrastructure providing V2X message transmission to UEs through the LTE Uu reference point. This type of RSU can be physically collocated with a common eNB |
| NR UE | $M_5+1, ... M_6$ | A NR UE is the synchronization source.<br>The UE is synchronized to a nearby NR UE that obtains no synchronization information either directly or indirectly from GNSS, gNB or eNB |
| LTE UE | $M_6+1, ... N$ | A LTE UE is the synchronization source.<br>The UE is synchronized to a nearby LTE UE that obtains no synchronization information either directly or indirectly from GNSS, gNB, eNB, or NR UE. |

In an embodiment, Whe the UE may be with the network control synchronization transmission not included in the resource assignment. In this scenario, the UE has to decide on its own whether to transmit the sidelink synchronization signals. The UE takes the threshold (from higher signaling) and compares the RSRP measurement of its cell to this value. If this RSRP measurement is below the threshold, it transmits its own sidelink synchronization signal and MIB-SL (i.e., SL SS/PBCH), along with the necessary parameters from the sidelink synchronization similar to the gNB as the synchronization source. However, when a UE is out of network coverage, it looks for another UE providing a synchronization reference. Such a UE, if found, is called a SyncRef UE. From this SyncRef UE, the UE obtains the time and frequency synchronization as well as the information provided by the MIB-SL.

Whether the SyncRef UE is in coverage (gNB, eNB or GNSS) or out of the coverage, both can include signaling by DMRS or by an indication flag in NR MIB-SL. The monitoring UE can use SyncRef UE SLSSID and in-coverage flag to determine synchronization priority. The highest synchronization priority of SLSSID is in GNSS or gNB with coverage being true. A next synchronization priority is those SyncRef UEs which have an SLSSID in the set of GNSS or gNB but with coverage being false. The lowest priority is SSSSID is in UE. In coverage or out of coverage indications are carried by the DMRS for SL PBCH demodulation. As a result, the monitoring UE does not have to decode the MIB-SL to determine the synchronization priority and enhance the synchronization priority selection performance.

Slide link Master Information Block

According to yet even a further aspect of the application, NR V2X exploits sidelink synchronization signals on the PHY layer and the master information block MIB-SL-V2X message on the RLC sublayer to achieve time and frequency synchronization. A UE offering synchronization information to nearby UEs serves as a synchronization reference. Information provided by the SF number includes whether the UE is in coverage or out of coverage (if not carried by DMRS), and whether the control resource set for PSCCH and DMRS format for PSCCH. This information supports UEs in selecting the reference source according to the configured prioritization when seeking synchronization. Three options for sidelink MIB-SL designs are described below in Table 5, Table 6 and Table 7 below.

Table 5

| Information Field | Usage |
|---|---|
| directSystemFrameNumber | Sidelink system frame number (Q bits), The K most significant bit (MSB) of the Q bit System Frame Number. The Q-K LSB of the SFN are conveyed in the PBCH transport block as part of channel coding (i.e. outside the MIB-SL encoding). When GNSS is the synchronization source, the direct frame number (DFN) is used instead of the system frame number (SFN) |
| inCoverage | UE is in network coverage (GNSS, gNB) or not. Note: this field (bit) is not presented in NR MIB-SL if it is carried by DMRS for SL PBCH demodulation |
| subCarrierSpacingCommon | Common SCS for sidelink<br> • If UE acquires MIB on carrier frequency < 6 GHz (FR1), value scs30or120 means 30 KHz.<br> • Else if MIB is acquired on freq ≥6 GHz (FR2), value scs15or60 means |
|  | 60 KHz and value scs30or120 means 120 KHz. |
| *ssb-SubcarrierOffset* | This is frequency offset between subcarrier 0 of SL SS/PBCH block to subcarrier 0 of common resource block for SL SS/PBCH block. (Note: This field is not present when SL (sub)band is pre-configured ) |
| commonPSCCH-Config | Determines a bandwidth for SL Control Resource Set (CORESET), search space and necessary sidelink control channel (PSCCH) parameters for discovery data message. (more details can refer Section 5.5) |
| DMRS configuration | DMRS port configuration (type) parameter for SL common CORESET. The DMRS port configuration for commonPSCCH-Config can be assumed QCL with NR SS/PBCH (Note: this is field is not presented in MIB-SL if pscch-discConfig is not presented) |
| Spare | Reserved bits |

**Table 6**

| Information Element | Usage | | |
|---|---|---|---|
| directSystemFrameNumber | Sidelink system frame number (Q bits), The K most significant bit (MSB) of the Q bit System Frame Number. The Q-K LSB of the SFN are conveyed in the PBCH transport block as part of channel coding (i.e. outside the MIB-SL encoding). When GNSS is the synchronization source, the direct frame number (DFN) is used instead of the system frame number (SFN) | | |
| inCoverage | UE is in network coverage (GNSS, gNB) or not. Note: this field (bit) is not presented in NR MIB-SL if it is carried by DMRS for SL PBCH demodulation | | |
| subCarrierSpacingCommon | Common SCS for sidelink | | • If UE acquires MIB on carrier frequency < 6 GHz (FR1), value scs30or120 means 30 KHz.<br> • Else if MIB is acquired on freq ≥6 GHz (FR2), value scs15or60 means 60 KHz and value scs30or120 means 120 KHz. |
| commonPSSCH-Config | Determines a bandwidth for SL sidelink common (broadcast) data channel (common | | |
|  | PSSCH) resource parameters for discovery data message and DMRS configuration for common PSSCH. (more details can refer Section 5.5) | | |
| SL bandwidth | The bandwidth allocates for SL | | |

(continued)

| Information Element | Usage |
|---|---|
| Spare | Reserved bits |

**Table 7**

| Information Element | Usage |
|---|---|
| directSystemFrameNumber | Sidelink system frame number (Q bits), The K most significant bit (MSB) of the Q bit System Frame Number. The Q-K LSB of the SFN are conveyed in the PBCH transport block as part of channel coding (i.e. outside the MIB-SL encoding).<br>When GNSS is the synchronization source, the direct frame number (DFN) is used instead of the system frame number (SFN) |
| inCoverage | UE is in network coverage (GNSS, gNB) or not. Note: this field (bit) is not presented in NR MIB-SL if it is carried by DMRS for SL PBCH demodulation |
| subCarrierSpacingCommon | Common SCS for sidelink<br>• If UE acquires MIB on carrier frequency < 6 GHz (FR1), value scs30or120 means 30 KHz.<br>• Else if MIB is acquired on freq ≥6 GHz (FR2), value scs15or60 means 60 KHz and value scs30or120 means 120 KHz. |
| SL bandwidth | The bandwidth allocates for SL |
| Spare | Reserved bits |

SL SS/PBCH Block Structure

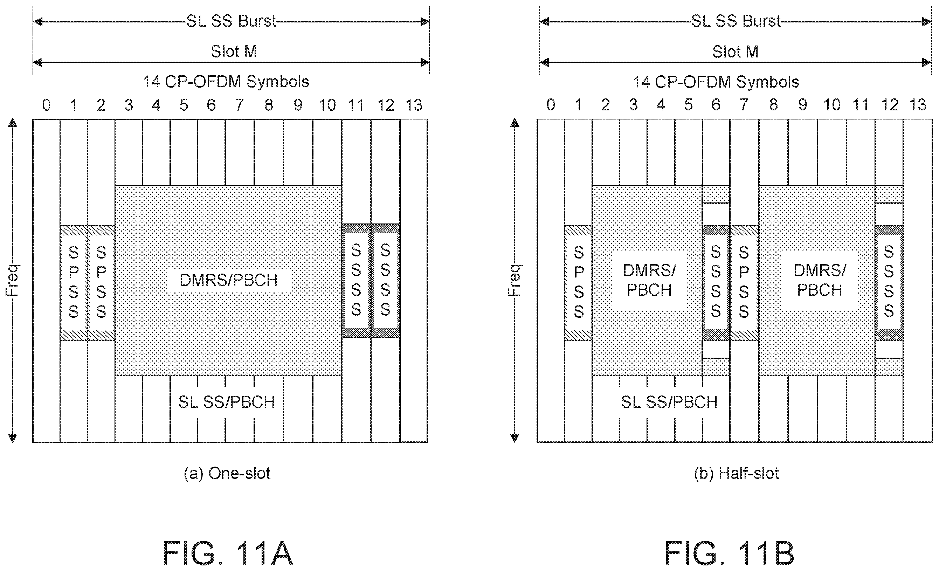

According to an aspect of the application, one-shot detection performance of SL SS/PBCH is enhanced by employing more DMRS, SPSS, SSSS symbols for SL SS/PBCH than PSS, SSS, DMRS symbols in NR Uu SS/PBCH. Accordign to the embodiment shown in Figure 11A, two enhanced SL SS/PBCH block structures are employed. The first proposed SL SS/PBCH block structure uses one-slot and encompass two SPSS, two SSSS and 8 DMRS+PSBCH symbols. The second proposed SL SS/PBCH block structure uses half-slot and encompass one SPSS, 1 SSSS and 5 DMRS+PSBCH symbols. The 1st OFDM symbol is reserved for not transmission (reserved for AGC) and the last symbol is reserved for guard symbol. For a half frame (5ms) with NR SL SS/PBCH blocks, the first symbol indexes for candidate NR SL SS/PBCH blocks are determined by the subcarrier spacing as following, where index 0 corresponds to the first symbol of the first slot in a half-frame.
According to the embodiment in Figure 11B, with 60 kHz subcarrier spacing: the first symbols of the candidate SL SS/PBCH blocks have indexes {1} + 14n, n=0,1,2,3.

DMRS design for PSBCH demodulation

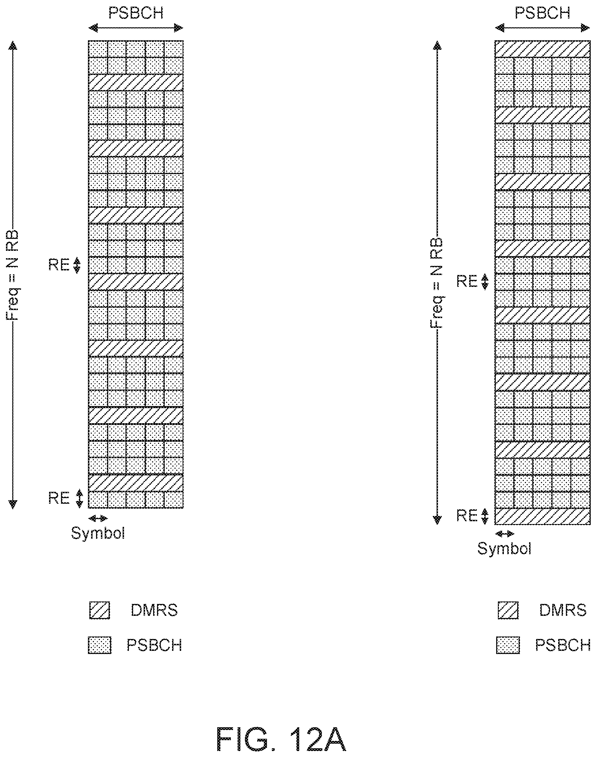

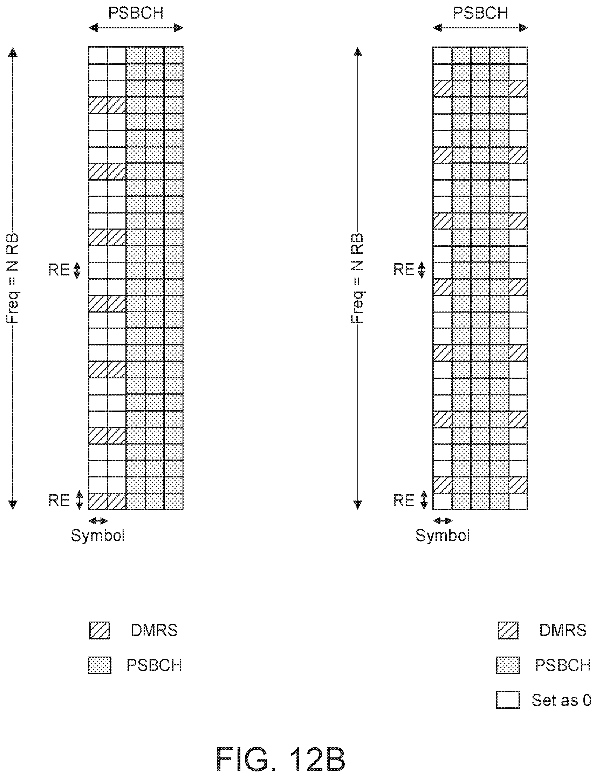

According to a further aspect of the application, two design options for DMRS design for PSBCH demodulation are provided. The first option is DMRS multiplexing with PSBCH. The comb-type DMRS RE location varies with SL SSID. The relative RE location for comb-type DMRS can be formulated as $0 + v, d + v, 2d + v,..., + (M - d) + v$, where $M$ denotes the maximum RE location for PSBCH, d is the distance between two DMRS RE and v is mod(SLSSID, d). The second option for DMRS design is PSBCH symbols are TDM with DMRS symbols. The relative RE location for comb-type DMRS can be formulated as $0 + v, d + v, 2d + v,..., + (M - d) + v$ in the DMRS symbols and other REs are set to zero. Figure 12A-B illustrate two DMRS designs for SL PSBCH. Figure 12A illustrates DMRS symbols are multiplexing with PSBCH symbols. In an exemplary embodiment as shown in Figure 12B DMRS symbols are TDM with PSBCH symbols.

DRMS sequence construction

According to another aspect, the candidate SL SS/PBCH blocks in a half frame are indexed in ascending order from 0 to L-1. DMRS may carry a SL SS/PBCH block index (in terms of bits), and the MIB-SL carries the rest of the block index bits. A UE determines the $Q_1$ LSB bits, when L = P, or the $Q_2$ LSB bits, when L > P, of an SS/PBCH block index per half frame from a one-to-one mapping with an index of the DMRS sequence transmitted in the SL PBCH.
The UE shall assume the reference-signal sequence r(m) for an NR SS/PSPBCH block is defined by:

$$r(m) = \frac{1}{\sqrt{2}}\big(1 - 2c(2m)\big) + \frac{1}{\sqrt{2}}\big(1 - 2c(2m+1)\big)$$

If DMRS for NR PSBCH is constructed by a gold sequence; the gold sequence g(n) can be specified as follows:

$$g(n) = \big(x_1(n + N_c) + x_2(n + N_c)\big) \bmod 2$$

$$x_1(n + 31) = \big(x_1(n + 3) + x_1(n)\big) \bmod 2$$

$$x_2(n + 31) = \big(x_2(n + 3) + x_2(n + 2) + x_2(n + 1) + x_2(n)\big) \bmod 2$$

where $N_c$ is a constant (e.g = 1600) and the operator "+" is the modulo-2 addition. The $x_1$ and $x_2$ are polynomial generator with length 31. Four options for sidelink SS/PBCH DMRS design are proposed as described in the option below.

Option 1: DMRS carry both SL SS/PBCH block index and in-coverage flag. In this option, the scrambling sequence generator shall be initialized at the start of each SS/PBCH block occasion with:

$$c_{\text{init}} = 2^a(\bar{\imath}_{SsB} + 1)\big(\lfloor N_{\text{ID}}^{SL}/Z \rfloor + 1\big) + 2^b(\bar{\imath}_{SsB} + 1) + (N_{\text{ID}}^{SL} \bmod Z),$$

where $N_{ID}^{SL}$ denotes the sidelink ID, *a, b* are integers, for example $a = 13$ and $b = 7$ respectively and blocks $L = 4$, and set $\bar{\imath}_{SsB} = (i_{SSB} \times 2 + B_i) + 4n_{hf}$ where $n_{hf}$ is the number of the half-frame in which the NR PSBCH is transmitted in a frame with $n_{hf} = 0$ for the first half-frame in the frame and $n_{hf} = 1$ for the second half-frame in the frame, $B_i = 0, 1$, where $B_i$ indicates in-coverage flag, $Z = K + 1 + 1 = K + 2$ denotes the number of total bits for SSB (K least significant bits and in-coverage flag bit, where $i_{SSB}$ is the first least significant bits of the SL SS/PBCH block index. For example, $i_{SSB} = 1$, $B_i = 0$ then $(i_{SSB} \times 2 + B_i) = 2$. For $L \geq 8$, $\bar{\imath}_{SsB} = (i_{SSB} \times 2 + B_i)$, where $i_{SSB}$ is the K least significant bits of the SS/PBCH block index.

Option 2: The DMRS is only carried in the coverage flag and does not include the SL SS/PBCH index. In this option, the scrambling sequence generator shall be initialized at the start of each SS/PBCH block occasion with:

$$c_{\text{init}} = 2^a\big(B_i + 2n_{hf} + 1\big)\big(\lfloor N_{\text{ID}}^{SL}/3 \rfloor + 1\big) + 2^{\lceil a/2 \rceil}(B_i + 1) + (N_{\text{ID}}^{SL} \bmod 3),$$

for any *L*. $n_{hf} = 0, 1$ denotes half frame indicator ($n_{hf} = 0$ denotes the first half-frame in the frame, $n_{hf} = 1$ is for the first half-frame in the frame).

*Option 3*: The DMRS carries the SSB index and the scrambling sequence generator shall be initialized at the start of each SS/PBCH block occasion with:

$$c_{\text{init}} = 2^a(\bar{\imath}_{SSB} + 1)\big(\lfloor N_{\text{ID}}^{SL}/Z \rfloor + 1\big) + 2^b(\bar{\imath}_{SSB} + 1) + (N_{\text{ID}}^{SL} \bmod Z)$$

For $L = 4$, $\bar{\imath}_{SSB} = i_{SSB} + 4n_{hf}$ where $n_{hf}$ is the number of the half-frame in which the NR PSBCH is transmitted in a frame with $n_{hf} = 0$ for the first half-frame in the frame and $n_{hf} = 1$ for the second half-frame in the frame, and $i_{SSB}$ is the first least significant bits of the SL SS/PBCH block index. For $L \geq 8$, $\bar{\imath}_{SsB} = i_{SSB}$, where $i_{SSB}$ is the $Z = K + 1$ least significant bits of the SS/PBCH block index.

Option 4: The DMRS does not carry either SSB in coverage flag. In this case, the scrambling sequence generator shall be initialized at the start of each SS/PBCH block occasion with:

$$c_{\text{init}} = 2^a\big(n_{hf} + 1\big)\big(\lfloor N_{\text{ID}}^{SL}/2 \rfloor + 1\big) + 2^{\lceil a/2 \rceil}\big(n_{hf} + 1\big)$$

where $n_{hf} = 0, 1$ denotes half frame indicator ($n_{hf} = 0$ denotes the first half-frame in the frame, $n_{hf} = 1$ is for the first half-frame in the frame).

Sidelink Beam Training and Pairing for NR V2X

It is envisaged according to an aspect of this application to describe an SL beam training and pairing method for SL before discovery. The proposed SL beam training and pairing procedure includes three steps.

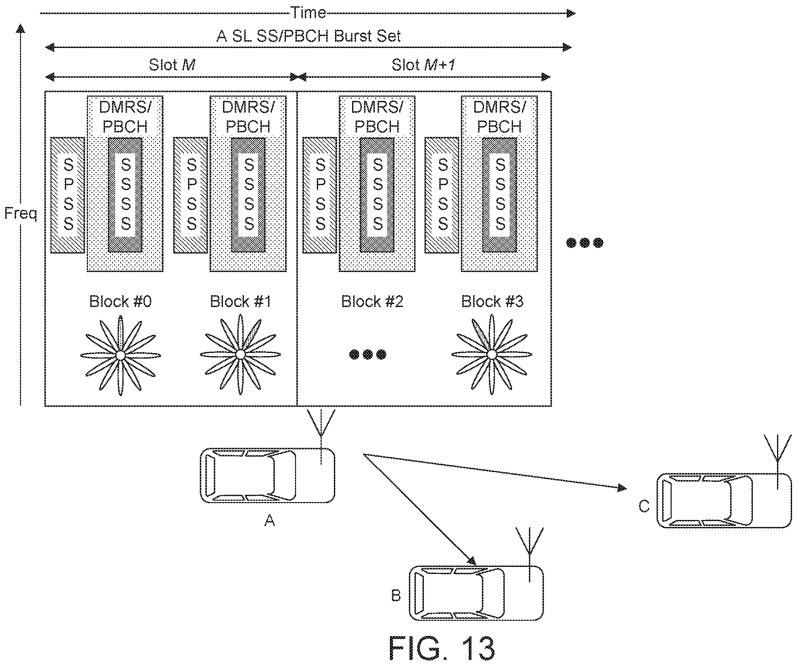

The first step incudes monitoring UEs to select the best beam from a SyncRef UE's SL SS/PBCH. At this stage, the SyncRef UE does not how many monitoring UEs are nearby or proximity as depicted in Figure 13. In Figure 13, vehicle A (UE A) is the SyncRef UE (i.e., initiating SL SS/PBCH burst transmission) and vehicle B (UE B) and vehicle C (UE C) are the monitoring UEs. UE A does not know how many proximity UEs (e.g., UEs B and C) are monitoring its SL SS/PBCH.

The second step includes monitoring UEs responses for the preferred SL SS/PBCH beam for beam paring. Monitoring UE(s) (UEs B and C in Figure 13. Figure 13 performs S-RSRP measurements in SL sensing window (at least a SL SS/PBCH burst set) to determine the best SL SS/PBCH beam for beam paring. Once the best beam is identified. The monitoring UE select a PSCCH (hereafter, PSCCH is defined in Type 1) resource for beam response. The PSCCH Type 1 is beamformed with the best selected SL SS/PBCH beam (block) in a SS/PBCH burst set. The common PSCCH resources for the feedback/beam response can be obtained from the SL remaining system information (SL RMSI). More details of SL RMSI will be given in the later section.

The PSCCH Type 1 is based on a ZC sequence with length N. The root of the ZC sequence is dependent on the detected SL SSID. Furthermore, cyclic shift (denotes as C) applies on ZC sequence for supporting of multiple UEs transmitting on a same PSCCH Type M resource. The cyclic shift parameter is broadcast (or groupcast) in SL RMSI by SyncRef UE. The number of resources for PSCCH Type 1 are same as the number of L SL SS/PBCH. If a monitoring UE determine the best SL SS/PBCH block $l, l \in \{0, ..., L$ - $1\}$, then it will choose the $l$-th corresponding resource for PSSCH Type 1 transmission. The maximum number of UEs can simultaneously transmit on PSCCH Type 1 resources are equal to

$$L \times \left\lfloor \frac{N}{C} \right\rfloor.$$

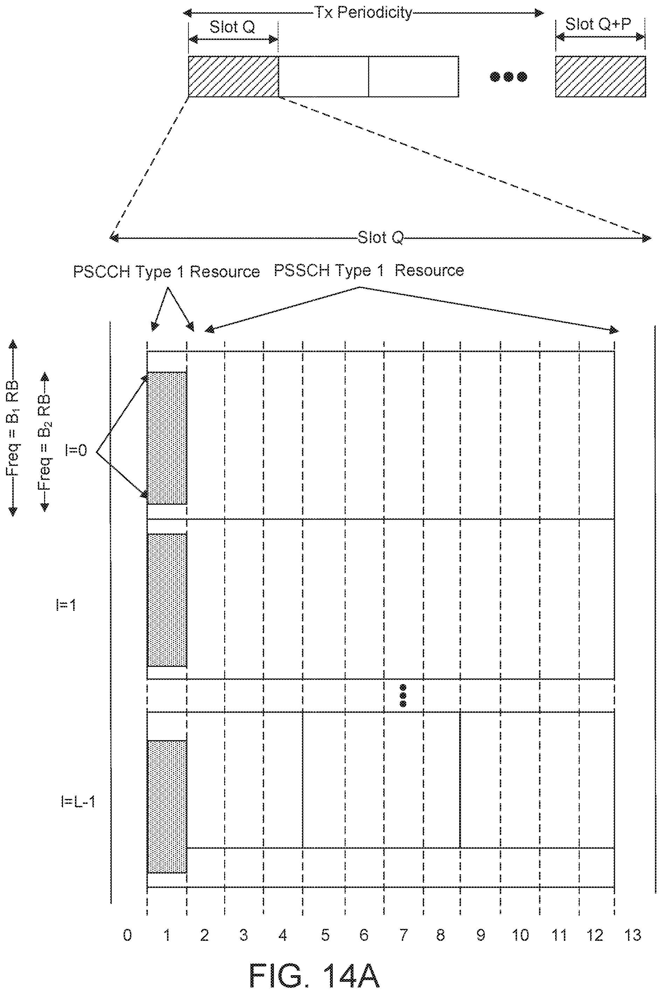

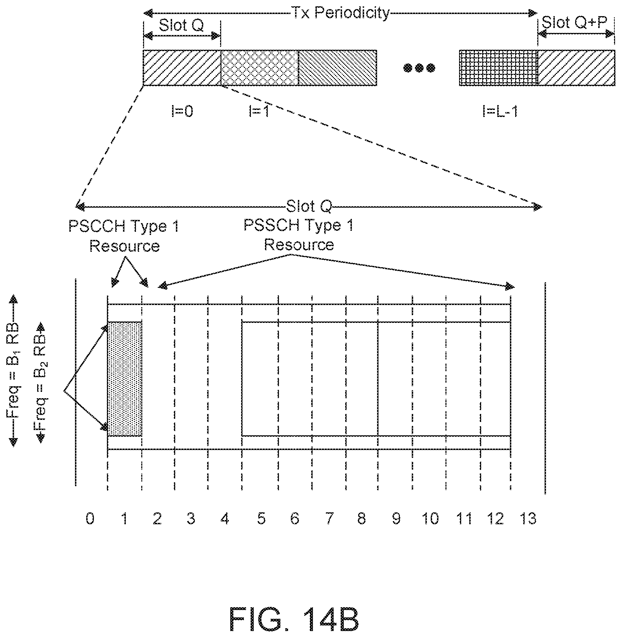

The allocation of L (number of SL SS/PBCH block in a SL SS/PBCH burst set) PSCCH Type 1 resources can be based on FDM or TDM shown in Figure 14A (i.e., FDM) and Figure 14B (i.e., TDM). PSSCH Type 1 can be simultaneously transmit with PUCCH Type 1. PSSCH Type 1 carry some basic information for the monitoring UE such as UE ID, connection request, UE position (if available) etc. The default modulation order of PUSCH Type 1 can be set to QPSK or broadcast/groupcast by SyncRef UE SL RMSI. PUCCH Type 1 and PUSCH Type 1 can be setup with a Tx cycle or a window duration. PUCCH Type 1 may have different bandwidth (in terms of RBs) than PUCCH Type 2. The Tx cycle or window duration can be broadcast/groupcast by SyncRef UE SL RMSI.

The monitoring UE beamforms the PSCCH Type 1 with the best selected beam(s) from the detected SL SS/PBCH beam(s) for response. Once the (SyncRef) UE receives and can detect the beam response PSCCH Type M from monitoring UE(s), it will perform the following operation: (i) Demodulate and decode the PSSCH Type 1 for extraction of basic UE information, and (ii) Send out a PSCCH (implicit ACK) with a PSSCH to the monitoring UE. The PSCCH resource can be signaled by (SCI) PSCCH. The PSCCH resources can be implicitly indicated by the selected PSCCH Type 1 resource. Therefore, the monitoring UE can expect to receive the implicit ACK from the beam paring ACK sent by SyncRef UE.

The ACK is based on the implicit method, i.e., the monitoring UE receive a SCI (PSCCH) from the SyncRef UE within a window time, where the monitoring UE can assume the completion of beam training and beam-pairing. The window of time can be broadcast or group cast by SyncRef UE's SL RMSI. Furthermore, the monitoring UE can assume the contention resolution is complete. If the monitoring UE cannot receive the implicit ACK, i.e., a PSCCH from SyncRef UE by the window time then the monitoring UE can perform the retransmission of PSCCH and PSSCH Type 1 at the next coming transmission cycle. If the retransmission reaches the maximum number of retransmission then the monitoring UE will restart the beam training.

The SL beam training and pairing procedure for before discovery is presented below according to the following steps:

Step 1: Beam training via SL NR PS SS/PBCH burst set. a monitoring UE performs the beam selection based on the SyncRef UE's (sender of SL SS/PBCH) SL SS/PBCH block $l = 0, ..., L$ - 1. At this stage, the monitoring UE selects the best SL SS/PBCH beam (ID $l$) from L blocks.

Step 2: The monitoring UE send out a PSCCH and PSSCH Type 1 to the SyncRef UE with the beamformed direction of the best selected SL SS/PBCH beam.

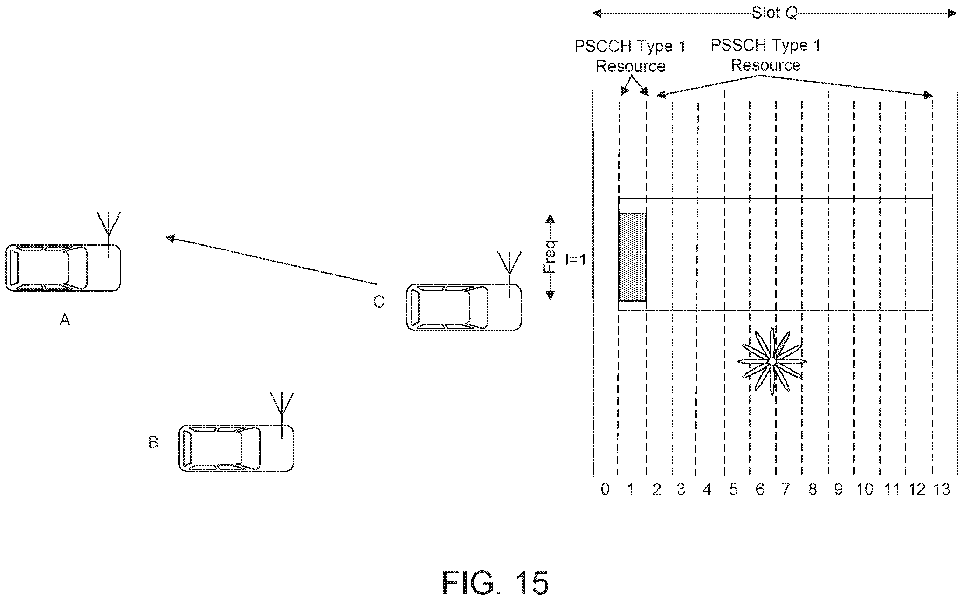

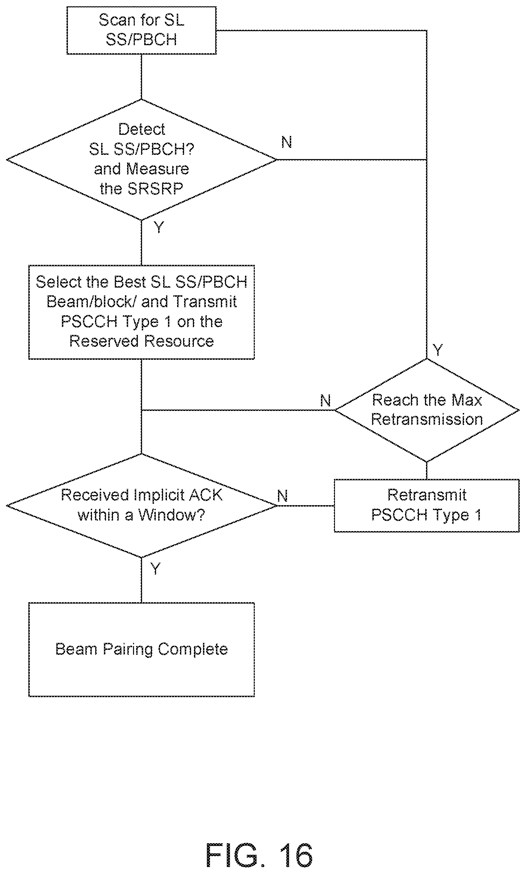

Step 3: If the SyncRef UE receive the monitoring UE PSCCH Type M, then it will send out an implicit ACK via a PSCCH to the monitoring UE. Once the monitoring UE receives the SyncRef UE's PSCCH by a setup window time, then the monitoring UE can assume the beam pairing being complete. Figure 15 illustrates a proposed sidelink beam training step 2 (response) before discovery. Figure 16 illustrates a proposed sidelink beam training procedure.

SL beam training and paring using SL CSI-RS

According to another embodiment, in mode 1, gNB can instruct UE to send SL CSI-RS for SL beam training without using SL SS/PBCH. The SL CSI-RS can be configured a periodically or periodically for the monitoring UE(s). The SL CSI-RS resource (configured by gNB) may be periodic (i.e., configured at the slot level), semi-persistent (also at the slot level, but it can be activated or deactivated with messages from the UE) and aperiodic (the transmission is triggered by the UE signaling via SCI). Sidelink beam management operations can be based on the sidelink control (SCI) messages which are periodically or a periodically exchanged between the transmitter (SyncRef) and the receiver (monitoring) UEs. The resource of SL CSI-RS can be placed in PSSCH resource pools. The monitoring UE can response the channel state quality to the SyncRef UE via PSCCH.

In mode 2, after the monitoring UE performs the initial beam training and pairing. SyncRef UE can configure NR CSI-RS for further/finer beam training or alignment. The SL CSI-RS resource (configured by SyncRef UE) may be periodic (i.e., configured at the slot level), semi-persistent (also at the slot level, but it can be activated or deactivated with messages from the UE) and aperiodic (the transmission is triggered by UE's SCI).

SL physical channel for Discovery

According to yet another embodiment, two options for the PSSCH carrying SL RMSI (or PSDCH) configured by NR SL SS/PBCH are envisaged.

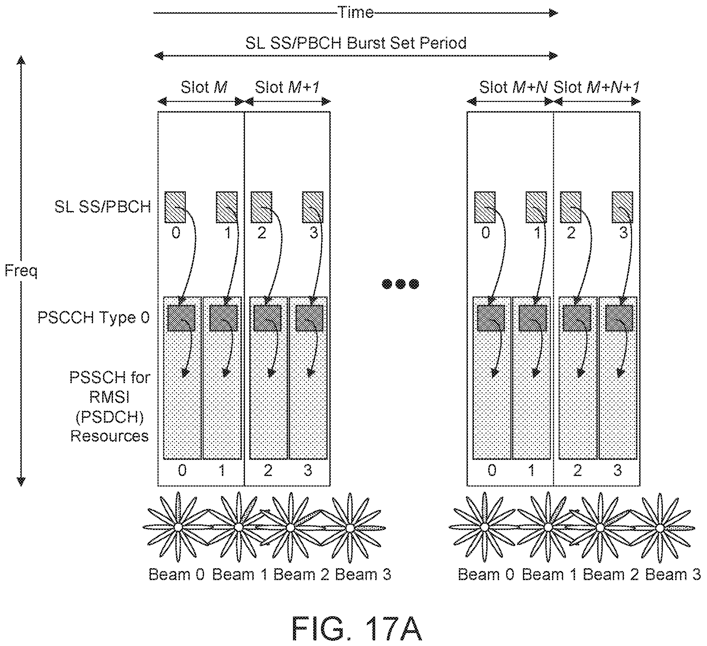

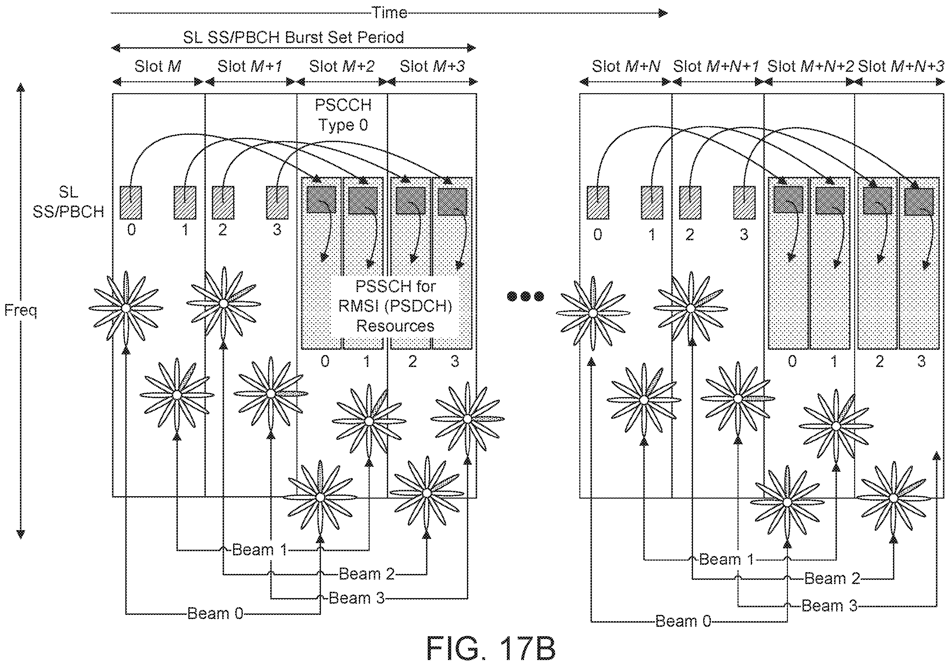

Option 1: The sidelink resource for the common PSCCH (hereafter PSCCH is referred to as Type 0) can be indicated by the NR sidelink MIB information field commonPSCCH-Config Table 4. PSCCH Type 0 can indicate the time and frequency for PSSCH-SL RMSI (or PSDCH). Upon detection of a SL SS/PBCH block, the UE determines that a control resource set (CORESET) for PSCCH Type 0 search space and the SL bandwidth. PSCCH Type 0 and PSSCH for SL RMSI can be either FDM, TDM or hybrid with NR SL SS/PBCH as depicted in Figure 17A for FDM, and Figure 17B for TDM. SL SS/PBCH block in a half frame (a SL SS/PBCH burst set) are indexed in an ascending order in time from 0 to L-1. The PSCCH Type 0 resources are one to one map with SL SS/PBCH block from 0 to L-1. The resource mapping rule between SL SS/PBCH and PSCCH Type 0 is dependent on multiplexing scheme. For FDM case, the frequency offset for PSCCH Type 0 resource is indicated by MIB-SL. A UE detect the best SL SS/PBCH block $l$ and decode its MIB-SL. The commonPSCCH-Config can indicate the relative frequency offset from the $l$-th SS/PBCH. Hence, UE can search for the PSCCH Type 0 first and the corresponding PSSCH for SL RMSI. Furthermore, UE can assume QCL relationship between SL SS/PBCH block $l$ and the $l$-th resources for PSCCH Type 0 and PSSCH for SL RMSI. Similarly, for TDM case, the timing offset between SL SS/PBCH block $l$ and the $l$-th resources for PSCCH Type 0 can be indicated by commonPSCCH-Config. FDM and TDM resource mapping for SL SS/PBCH, PSCCH Type 0 and PSSCH for SL RMSI (or PSDCH) is depicted in Figures 17A-B.

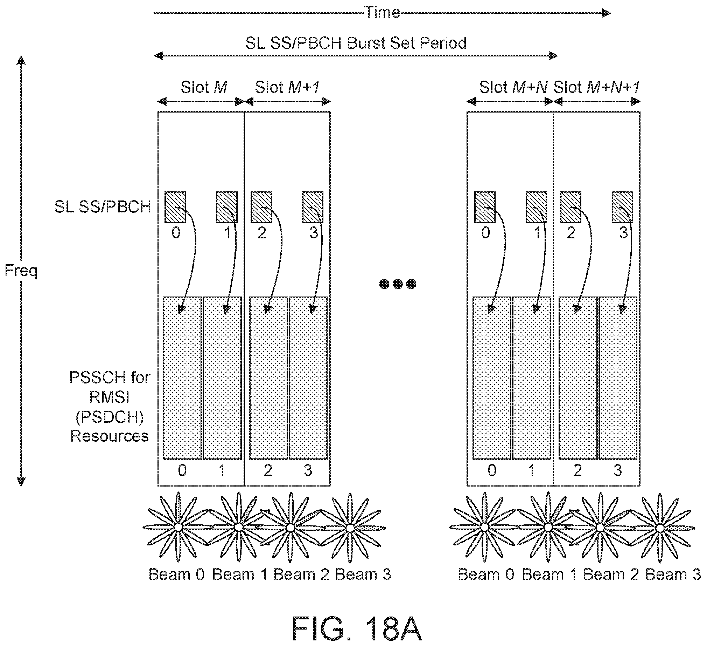

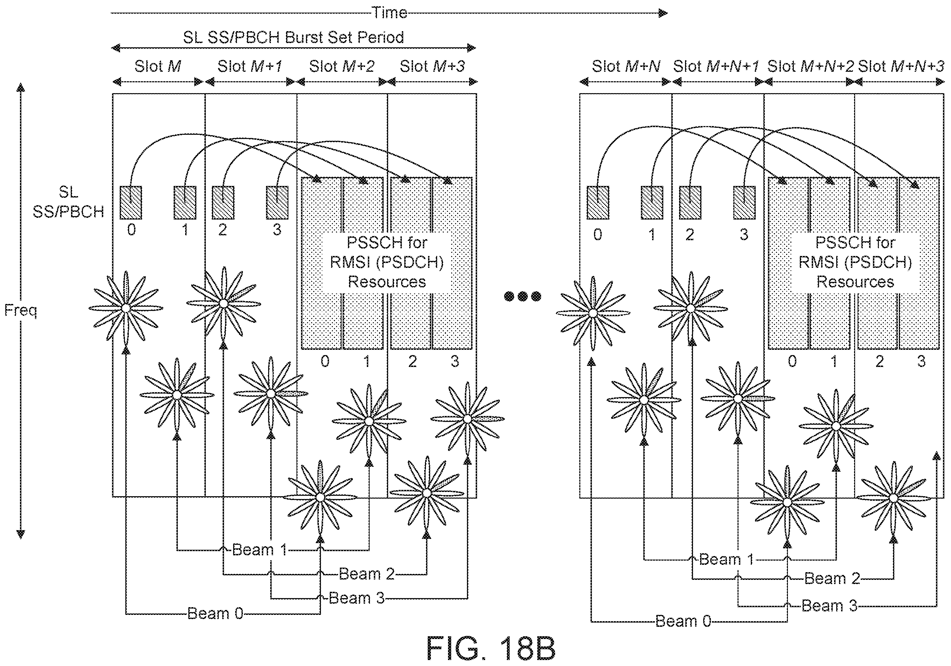

Option 2: The sidelink resource for PSCCH Type 0 can be indicated by the NR sidelink MIB information field commonPSSCH-Config Table 5. In this option, there is no PSCCH Type 0 to indicate the time and frequency for PSSCH-SL RMSI (or PSDCH). Instead, upon detection of a SL SS/PBCH block, the UE determines the time and frequency resource for PSSCH-SL RMSI. PSSCH for SL RMSI can be either FDM, TDM with NR SL SS/PBCH as depicted in (a) FDM (b) TDM. SL SS/PBCH block in a half frame (a SL SS/PBCH burst set) are indexed in an ascending order in time from 0 to L-1. The PSSCH for SL RMSI resources are one to one map with SL SS/PBCH block from 0 to L-1. The resource mapping rule between SL SS/PBCH and PSSCH for SL RMSI is dependent on multiplexing scheme. For FDM case, the frequency offset for PSSCH for SL RMSI resource is indicated by MIB-SL. A UE detect the best SL SS/PBCH block $l$ and decode its MIB-SL. The commonPSSCH-Config can indicate the relative frequency offset from the $l$-th SS/PBCH. Hence, UE can directly find the PSSCH for SL RMSI when it successfully decode the $l$-th SS/PBCH MIB. Furthermore, UE can assume QCL relationship between SL SS/PBCH block $l$ and the $l$-th resources for PSSCH for SL RMSI. Similarly, for TDM case, the timing offset between SL SS/PBCH block $l$ and the $l$-th resources for PSSCH for SL RMSI can be indicated by commonPSSCH-Config. FDM and TDM resource mapping for SL SS/PBCH and PSSCH for SL RMSI (or PSDCH) is depicted in Figure 18A and 18B.

Side information for beam alignment

According to even another aspect of the application, a vehicle/UE equipped with a DSRC unit designed on the IEEE 802.11p standard is configured to communicate with other vehicles. In so doing, messages such as for example warning messages are exchanged to avoid accidents and improve the traffic situation. Safety messages such as Cooperative Awareness Messages (CAMs) or Basic Safety Messages (BSMs) are periodically broadcasted to nearby vehicles. These messages contain key vehicle information (such as location, speed, heading, etc.) given by the on-board GPS. Other information such as for example, vehicle type and brake condition may also be included. Moreover, vehicles for advanced V2X applications exchange sensor data. The sensor data may contain distance, direction, angle, speed, relative speed, etc.

In NR, the higher layer, e.g., V2X application layer, extracts useful information, such as location, direction, angle, relative speed, etc., from BSM, CAM, or sensor data messages. These parameters may be used to augment beam training, beam fine alignment, beam tracking, etc. on side link with reduced overhead of beam sweeping. For example, the beams may be set with a very small range of angles augmented by the higher layer's parameters, and paired quickly without blindly sweeping through all the angles. UEs may use on-board sensors such as for example radar to estimate beam direction. The UE can determine SL CSI-RS for beam alignment with or without side information such as BSM or CAM. Table 8 lists an example of higher layer parameters, which may be used for augmenting beam training, beam fine alignment, beam tracking, etc. Table 8 below illustrates a higher layer parameters extracted from BSM, CAM and sensor data.

**Table 8**

| Information Field | Usage |
|---|---|
| UE position | GSP location (Latitude, Longitude, Elevation) |
| Vehicle Motion Data | Speed, Heading direction, Brake system status |
| Vehicle Path History (PH) | PH representation of recent vehicle movement over a certain distance |

Broadcast and Multicast

In yet even a further aspect of the application, the communication phase relies on the discovery phase in V2X. Generally, there are two modes to perform discovery. The first mode includes broadcasting or multicasting its own information periodically without a request from a receiver. The second mode includes exchanging queries (i.e., request and response). The discovering vehicle/UE transmits a request containing information about what it is interested to discover. The discoveree vehicle/UE receives the request and responds with information related to discoverer's request.

In embodiments directed to this aspect, three methods are described with regard to sidelink physical channels carrying discovery messages. The first method is based on a physical sidelink discovery channel (PSDCH). For SL physical channels carrying discovery messages, the link adaptation mechanism is not required for the discovery phase and the sidelink PSSCH demodulation complexity can be reduced. PSCCH Type M can be used for indication of PSSCH for carrying discovery message. Broadcast discovery messages can be transmitted with a periodicity. The broadcast periodicity can be configured via sidelink remaining system information (RMSI), other system information (OSI) or a pre-defined rule. Furthermore, the time-and-frequency resource for sidelink broadcast channel to carry discovery message can be indicated by sidelink remaining system information (RMSI), other system information (OSI) or a pre-defined rule.

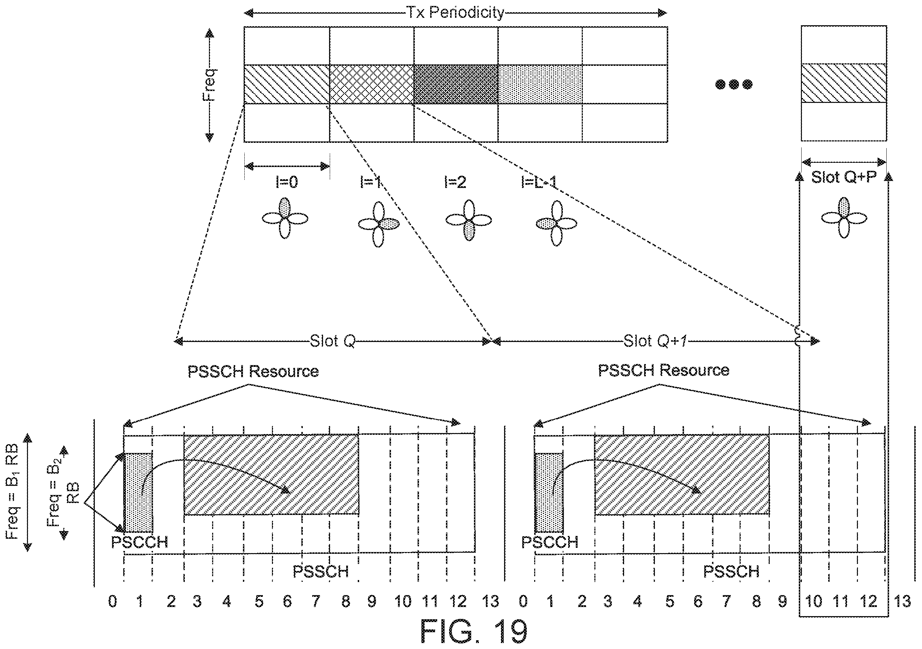

The second method is based on a physical shared channel via PSSCH where the resource of PSSCH can be indicated by physical sidelink control channel PSCCH. Sidelink broadcast physical channel for carrying discovery message can be a burst. The third method is based on PSCCH only. In each broadcast burst, it can transmit with a periodicity P (milliseconds). The broadcast burst can have L transmission blocks. Each transmission block consists of a PSSCH and PSCCH where PSCCH carry the indication of time-and-frequency resource for PSSCH. In Figure 19, a broadcast burst is configured with a transmission periodicity P (slots, it can be converted to ms). Discovery message will be repeated across the different beam in the L transmission blocks.

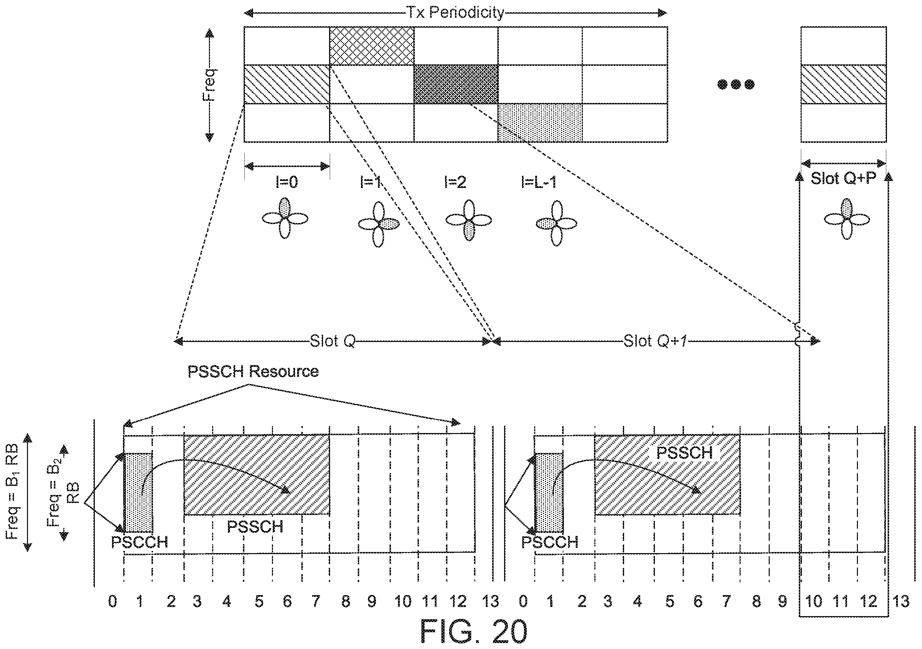

The time-and-frequency resources of PSSCH for carrying discovery message can be transmitted within a sidelink resource pool. Within a specified SL resource pool, the broadcast PSSCH burst for carrying discovery message can adopt a frequency-hopping pattern. With the support of the frequency-hopping, the broadcast PSSCH block with frequency-hopping can reduce the collision probability thus many vehicle/UEs can avoid competing for the same time-and-frequency resources. In Figure 20, a broadcast burst is configured with a transmission periodicity P (slots). In each broadcast block, it transmits a PSCCH to indicate the time-and-frequency of PSSCH for carrying discovery message and each PSSCH is frequency-hopping with a pre-defined pattern.

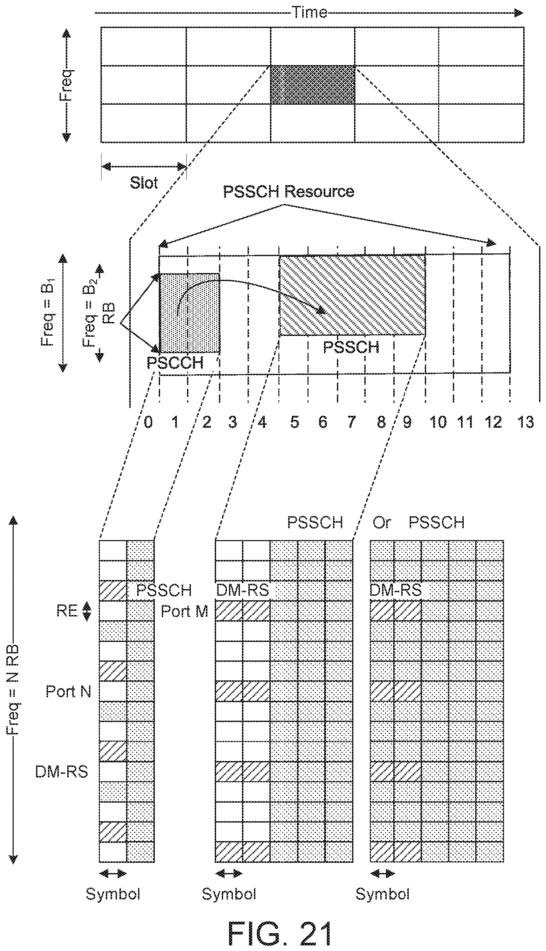

The DM-RS of PSSCH for carrying discovery messages can be assumed spatial QCL with the DM-RS of PSCCH which indicates the time-and-frequency of the PSSCH. An exemplary embodiment is depicted in Figure 21. If the scheduling offset between PSCCH and PSSCH is smaller or equal to N symbols than the neighbor vehicle/UE should assume that the PSSCH transmission is QCL with the corresponding PSCCH transmission with a certain Transmission Configuration Indication (TCI) states. If the scheduling offset between PSCCH and PSSCH is larger than N symbols than the neighbor vehicle/UE should assume that the PSSCH transmission is QCL with the corresponding PSCCH transmission. The DM-RS of PSSCH can be based on front load DM-RS, i.e., DM-RS symbols are in front of PSSCH symbols. The number of DM-RS symbols configuration can be setup via sidelink remaining system information (RMSI), other system information (OSI) or a pre-defined rule. Zadoff-Chu sequences with cyclic-shift are used for generating DM-RS. The cyclic-shift can be configured via sidelink remaining system information (RMSI), sidelink other system information (OSI) or a pre-defined rule. PSSCH can be transmitted with a fixed modulation and coding scheme (MCS) and using one spatial stream, i.e., transmission rank one as default.

If SL physical channel resources carrying discovery message are allocated on a non-vehicle/UE specific basis, collision may occur because plural vehicles/UEs compete for the same time-and-frequency resource for discovery transmission. This occurs when many proximity vehicle/UEs try to broadcast their discovery messages over non-vehicle/UE specific basis resources. The non-vehicle/UE-specific resources for broadcast PSSCH burst can be allocated within a SL-BWP or a resource pool. gNB can broadcast the information about the SL-BWP or a vehicle/UE can use a pre-defined SL-BWP for SL physical channel carrying discovery message based on the non-vehicle/UE-specific resources. Collision can be avoided for a discovery procedure where resources are allocated for vehicle/UE-specific transmission instances of discovery messages. Groups or specific vehicle/UEs can be assigned by a dedicated time-and-frequency resources. Resource for physical channel carrying discovery message transmission can be semi-persistently allocated.

NR SL PBCH carries the MIB such as system frame number (SFN) when gNB or eNB is the synchronization source or direct frame number (DFN) when GMSS is the synchronization source, the in coverage or out of coverage indication (if this indication is not carried by DMRS), the synchronization reference source indication such as gNB, eNB or GNSS and resource-config which determines the bandwidth for SL sidelink, control and data channel resource parameters such as the slot format indication for V2X UE to identify the number of symbols for PSCCH, PSSCH and PFSCH in a slot, and DMRS formation/pattern for PSCCH and PSFCH demodulation. Tables 10 below describes the sidelink MIB for NR V2X.

**Table 10**

| Information Element | Usage |
|---|---|
| directSystemFrameNumber | Sidelink system frame number (Q bits). When GNSS is the synchronization source, the direct frame number (DFN) is used instead of the system frame number (SFN) |
| inCoverage | UE is in network coverage (GNSS, gNB) or not. Note: this field (bit) is not presented in NR MIB-SL if it is carried by DMRS for SL PBCH demodulation |
| Synchronization source | gNB, eNB or GNSS (If SL SSID carry the synchronous source then this field is not presented in SL MIB) |
| SL-subCarrierSpacing | SCS for sidelink • If UE acquires MIB on carrier frequency < 6 GHz (FR1), value scs30or120 means 30 KHz. • Else if MIB is acquired on freq ≥6 GHz (FR2), value scs15or60 means 60 KHz and value scs30or120 means 120 KHz. |
| ssb-SubcarrierOffset | This is frequency offset between subcarrier 0 of SL SS/PBCH block to subcarrier 0 of common resource block for SL SS/PBCH block. (Note: This field is not present when SL (sub)band is pre-configured) |
| SL-Resource-Config | Determines a bandwidth for SL sidelink, control and data channel resource parameters such as including the slot format indication for V2X UE to identify the number of symbols for PSCCH, PSSCH and PFSCH in a slot, which slots are available for SL if share with a UL band, and DMRS configuration for PSCCH and/or PSSCH. |
| SL bandwidth | The bandwidth allocates (or BWP) for SL |
| Spare | Reserved bits |

Another option for NR SL PBCH is carrying the following: the master system information such as (Direct)SF number, the in coverage or out of coverage indication (if this indication is not carried by DMRS), the synchronization reference source indication such as gNB, eNB or GNSS and resource-config which determines the bandwidth for SL sidelink, control channel resource parameters such as the slot format indication for V2X UE to identify the number of symbols for PSCCH in a slot, and DMRS formation/pattern for PSCCH demodulation. The actual PSSCH symbols formation can be indicated by PSCCH. Table 11 below describe the sidelink MIB for NR V2X. To reduce the overhead to signal sidelink slot information in the MIB, we further propose the allocated sidelink control channel (PSCCH) symbols in a sidelink slot is carried in the SL MIB shown in SL-Resource-Config Table 11. In this option, there is no need for MIB carrying allocated PSSCH and PFSCH symbols in a sidelink slot. PSSCH and PSFCH resource can be signaled by SCI carried by PSCCH.

**Table 11**

| Information Element | Usage |
|---|---|
| directSystemFrameNumber | Sidelink system frame number (Q bits.<br>When GNSS is the synchronization source, the direct frame number (DFN) is used instead of the system frame number (SFN) |
| inCoverage | UE is in network coverage (GNSS, gNB) or not. Note: this field (bit) is not presented in NR MIB-SL if it is carried by DMRS for SL PBCH demodulation |
| Synchronization source | gNB, eNB or GNSS (If SL SSID carry the synchronous source then this field is not presented in SL MIB) |
| *ssb-SubcarrierOffset* | This is frequency offset between subcarrier 0 of SL SS/PBCH block to subcarrier 0 of common resource block for SL SS/PBCH block. (Note: This field is not present when SL (sub)band is pre-configured ) |
| SL-Resource-Config | Determines a bandwidth for SL sidelink, control and data channel resource parameters such as including the slot format indication for V2X UE to identify the number of symbols for PSCCH in a slot, which slots are available for SL if share with a UL band and DMRS configuration for PSCCH. |
| SL bandwidth | The bandwidth allocates (or BWP) for SL |
| Spare | Reserved bits |

The sidelink resource for PSCCH can be specified by the NR sidelink MIB information field such as commonPSSCH-Config/SL-Resource-Config as shown in Table 5 and 10. Upon detection of a SL SS/PBCH block, the UE can determine the time and frequency resource to search PSCCH in a resource pool. The commonPSSCH-Config/SL-Resource-Config can be used for the indication of the time-frequency resource information for PSCCH, PSSCH and/or PSFCH. The time-frequency resource information includes number of available symbols allocated for PSCCH, PSSCH and PSFCH in a slot and which slots are available for SL transmission and reception.

In this option, UE can directly find the PSCCH, PSSCH and PSFCH time-frequency resource (e.g. for discovery message) when it successfully decodes the SL SS/PBCH MIB. For instance, the time resource (slot) mapping formats for PSCCH, PSSCH and PSFCH may be based on a pre-defined table (e.g., Table 12 below). The actual slot format can be indicated by the slot format indicator in the contents of commonPSSCH-Config/SL-Resource-Config information broadcast in the SL MIB. This is a useful case when out of coverage V2X UEs that have synchronized to SL SSB (transmitted by a in coverage V2X UE) for the first time can figure out sidelink resource configuration to use. The sidelink resource can be based on a shared carrier which sidelink resource is shared with a Uu uplink resource. As shown in Table, 12 below, 'D' presents the available symbols for sidelink data channel, i.e., PSSCH transmission and reception, 'C' presents the available control channel, i.e., PSCCH, 'G' presents the GAP symbol, 'X' means the symbols are not used for any sidelink transmission and 'F' presents the feedback channel, i.e., PSFCH.

**Table 12**

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | C | C | D | D | D | D | D | D | D | D | D | D | D | D |
| 2 | C | D | D | D | D | D | D | D | D | D | D | D | G | F |
| ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |
| *M* | D | D | D | D | D | D | D | D | X | X | D | D | G | F |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| *M*+1 - *N*-1 | Reserved | | | | | | | | | | | | | |
| *N* | UE determines the slot format for the slot based on *SL-ResourceConfiguration* | | | | | | | | | | | | | |

The physical sidelink feedback channel PSFCH for feedback of the discovery message is based on a single or two symbol duration. Multiple V2X UEs may still contest at a same time slot for the SL feedback. Therefore, this application has defined the feedback for discovery message to be based on CDM. The single sidelink feedback channel can be constructed from a CAZAC sequence. The SL feedback channel sequence can be defined as $r_{u,v}^{(\alpha)}(n) = e^{j\alpha n}\bar{r}_{u,v}^{(\alpha)}(n)$, where $0 \le n \le N$ is the length of SL feedback channel sequence. Multiple sequences can be derived from a single base sequence through different values of $\alpha$. If the sequence length is greater than 3 PRBs.

The base sequence is defined as the cyclic extension of the Zadoff-Chu sequence $\bar{r}_{u,v}^{(\alpha)}(n) = x_q(n \bmod N_{ZC})$ where $N_{ZC}$ is the length of Zadoff-Chu sequence that is given by the largest prime number such that $N_{SC} < N$. $x_q(m) = e^{-j\frac{\pi qm(m+1)}{N_{ZC}}}$, where *q* is q-th root Zadoff-Chu sequence and $N_{Zc}$ is the largest prime number which is less than N. The $q = \lfloor \bar{q} + 1/2 \rfloor + v(-1)^{\lfloor 2\bar{q} \rfloor}$, $\bar{q} = N_{SC}(u+1)/31$, $u \in \{0,1...,29\}$ is the PSSCH group number, *v* $\in \{0,1\}$ is the base sequence number within the group. Such that each group contains one base sequence (*v* = 0) of each length $N = mN_{sc}^{RB}$, $m \le 5$ and two base sequences (*v* = 1) of each length, $N = mN_{sc}^{RB}$, $6 \le m \le N_{RB}^{max,SL}$, where $N_{RB}^{max,SL}$ denotes the maximum RB can be allocated in a SL BWP. The setup of the cyclic shift $\alpha = \frac{\pi}{N}$ value is signaled by SCI carried by PSCCH. Proximity V2X UE can exchange geo-location information during discovery processes; thus V2X UE can estimate and determine the corresponding cyclic-shift value of sidelink feedback channel. If the sequence length is less than 3 PRB, i.e., 36 REs then the sequence can be generated by a pre-defined CAZAC or low-PAPR sequence. Short duration PSFCH (sequence length is less than 3PRB) can span 1 or 2 symbols within a slot and may carry either small (1~2 SL feedback bits) payload size. For example, short PSFCH length = {12, 24} REs can span in the frequency domain. If two symbols are used for short PSFCH, then two symbols will be applied with the same sequence.

Extended DM-RS sequences

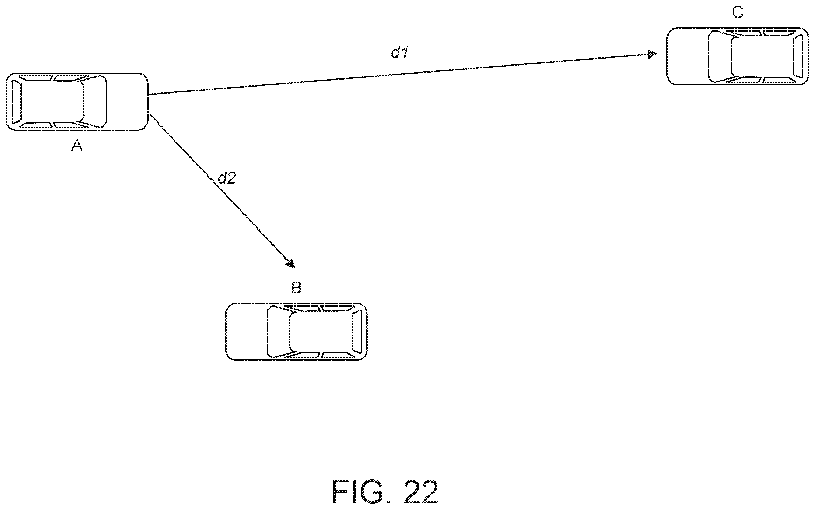

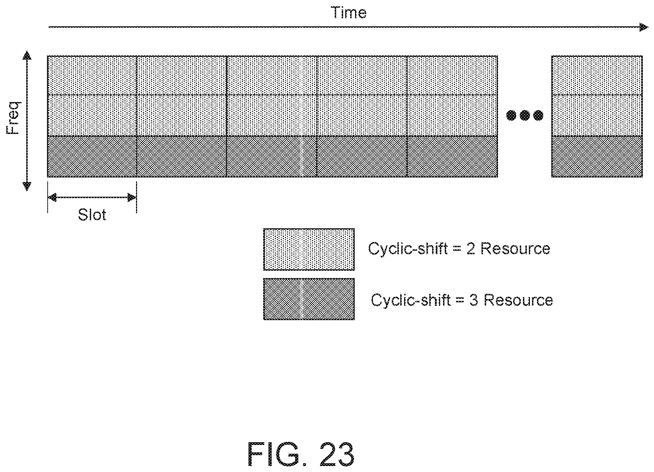

In order to support a large number of vehicle/UEs in sidelink, a large number of different DM-RS sequences are needed. A DM-RS sequence $r_{u,v}^{(\alpha)}(n) = e^{j\alpha n}\bar{r}_{u,v}^{(\alpha)}(n)$, where $0 \le n \le N$ is the length of DMRS sequence. Multiple DMRS sequences can be derived from a single base sequence through different values of $\alpha$. The base sequence is defined as the cyclic extension of the Zadoff-Chu sequence $\bar{r}_{u,v}^{(\alpha)}(n) = x_q(n \bmod N_{SC})$ where $N_{SC}$ is the length of Zadoff-Chu sequence that is given by the largest prime number such that $N_{SC} < N$. $x_q(m) = e^{-j\frac{\pi qm(m+1)}{N_{SC}}}$. where *q* is q-th root Zadoff-Chu sequence. The setup of the cyclic-shift $\alpha$ value can be dependent on the maximum delay spread between the transmitter and receiver. In practice, small cyclic-shift value can generate more orthogonal sequences for *q*-th root Zadoff-Chu sequence than larger cyclic-value. However, the smaller cyclic-shift value maintains orthogonality only for smaller delay spread. Proximity vehicle/UEs can exchange geo-location information during discovery processes, thus vehicle/UE can estimate the range (~ maximum delay spread) for the cyclic-shift value of DM-RS. In Figure 22, vehicles A and C have larger distance/ranges than vehicles A and B. Vehicle/UEs can also estimate the proximity distance via build-in sensor such as radar if it is equipped. Proximity distance can either be exchanged via a discovery processes or it can be autonomously estimated via build-in sensor/radar. Therefore, the cyclic-shift value of DM-RS can be based on the proximity estimation result. Here, the sidelink resource pool can be partitioned into several resource regions. Each partitioned region can be mapped to a cyclic shift value. Different partitioned region may use different cyclic shift value for DM-RS. In this manner, more orthogonal DM-RS sequences can be generated based on the proximity property. In Figure 23, resources for PSSCH are partitioned into two regions. The first and second region setup with cyclic-shift value with 2 and 3, respectively. The resource region partition with different cyclic-shift configuration can be setup via sidelink remaining system information (RMSI), other system information (OSI) or a pre-defined rule.

Multiple Feedbacks

According to yet even a further aspect of the application in regard to V2V, the multicast group or unicast is determined based on the reliably discovered vehicles. A vehicle/UE will successfully be discovered when a discovery response from a neighbor is received. A vehicle/UE may broadcast or multicast sidelink physical channels for carrying discovery message. The discovery response from a neighbor may compete for the same time-and-frequency resource. This is because neighbor vehicle/UEs may not know each other until discovery process is complete. To reduce the collision probability, the discovery response mechanism for sidelink physical channel carrying discovery message can be based on the following rules:

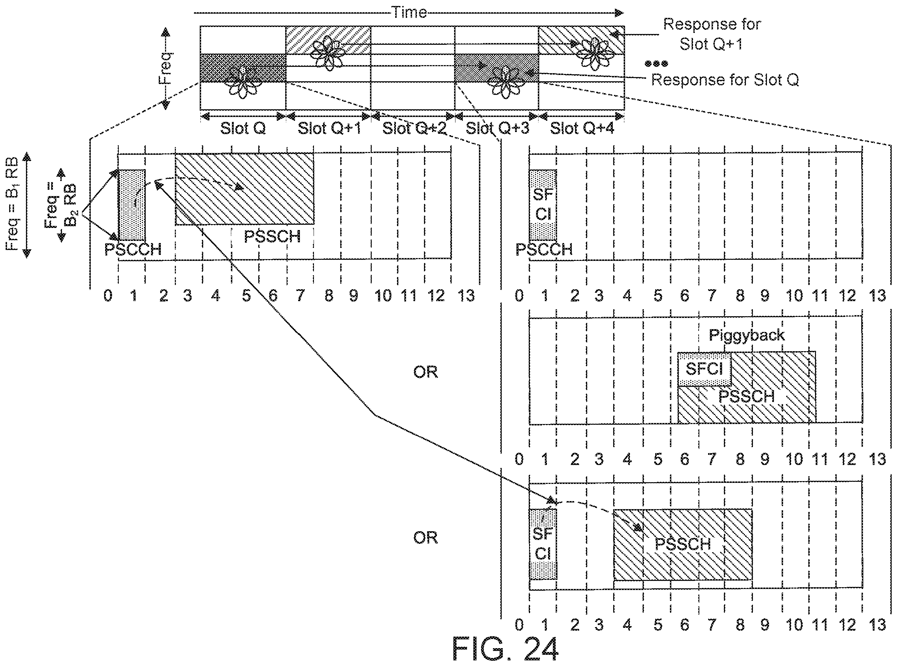

The sidelink control channel PSCCH can assign or indicate response timing for PSSCH carrying discovery message. If the discovery message is trying to discover the neighbor vehicle/UE, then the neighbor vehicle/UE may need to respond to this discovery query. The monitored vehicle/UE and decode the PSCCH to obtain the discovery response timing information (in SCI) during the discovery phase. For example, in Figure 24, a vehicle/UE broadcasts its discovery message at slot Q, Q+1 and indicates the discovery response timing at slot Q+3, Q+4, respectively. The indication of discovery response timing by PSCCH (with its SCI), in this way, it allows multiple discovery response can be scheduled at a same slot or different slots. According to an embodiment of Figure 24, PSCCH may or may not indicate the PSSCH resource. For implicit resource allocation, a mapping relation between PSCCH and PSSCH in predefined. For explicit resource allocation, PSCCH content (SCI) indicates where to receive data PSSCH.

Neighbor vehicle/UEs may transmit the discovery response information carried out by a PSCCH with sidelink response control information (SFCI). Not all neighbor vehicle/UEs will perform the discovery response. Higher layer (MAC) can decide whether to response the broadcasting discovery message or not. However, multiple neighbor vehicle/UEs may still contest at a same time slot for discovery response. It is envisaged the discoveree vehicle/UEs can transmit discovery messages on demand to discoverer vehicle/UEs. The on-demand discovery messages can be transmitted in a more efficient manner. For example, such a message can be transmitted in a certain direction (without beam swiping through all directions). The discoveree vehicle/UEs can use the location information from the discover vehicle/UE to determine the beam direction for discovery response. Hence, the discovery message can be repeated a few times however without the long periodicity as regular broadcast discovery.

This SFCI can be piggybacked on the PSSCH because the discover vehicle/UE can expect discoveree UEs may transmit the response at a specified slot. The following PSSCH resource allocation methods are employed:

    1. Implicit resource allocation: mapping relationship between PSCCH and PSSCH is pre-defined.
    2. Explicit resource allocation: PSCCH content (SCI) indicates where to receive data PSS.

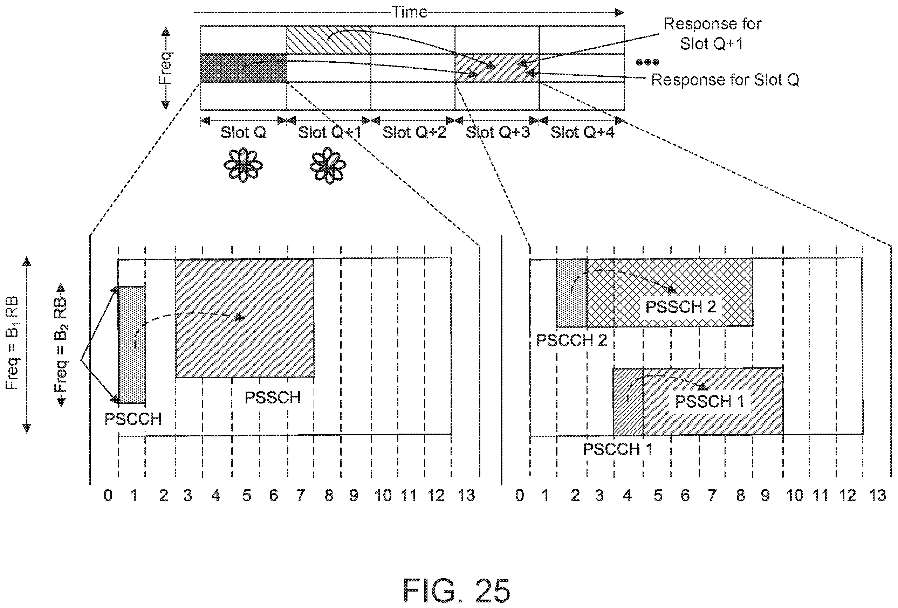

If multiple vehicles/UEs are trying to feedback for a same broadcast physical channel. For example, two vehicle/UEs may want to feedback for the broadcast physical channel transmitted at slot Q as exemplary shown in Figure 25. In this case, two vehicle/UEs may try to compete the same channel resource for discovery response at the same slot. To resolve this potential collision, it is envisaged the vehicle/UE sends broadcasts for carrying discovery messages an can monitor multiple PSCCHs at a slot for feedback. The resource blocks can be classified into a contention phase (i.e., multiple PSCCHs for feedback may compete at the ) and a data transmission phase. In the contention phase, two different vehicle/UEs can transmit their PSCCH at different time-frequency resources. For example, the selection of feedback resource can base on its UE-ID or other parameters.

SL PSS sequence generation

According to even a further aspect of the application, a cyclic-shift property of m-sequence is employed for SL PSS sequence generation. The SL PSS m-sequence, s(n), can be generated from polynomial $f(x) = x^7 + x^4 + 1$ which is same as NR Uu PSS but with different cyclic-shift. For a sequence of length 127 , m-sequence, s = $\{s(n)\}$ $n$ = 0, ..., 126, is generated from the primitive polynomial $f(x) = x^7 + x^4 + 1$, and with initial state of [0 1 1 0 1 1 1] = [s(0) s(1) s(2) ... s(6)]. The other presentation of m-sequence of s(n) can be provided in the following recursive form:

$$s(n{+}7) = (s(n{+}4) + s(n)) \bmod 2, \, 0 \le n \le 126$$

s(0) = 0, $s$(1) = 1, $s$(2) = 1, $s$(3) = 0, $s$(4) = $s$(5) = $s$(6) = 1, which results in the following binary m-sequence is BPSK modulated sequence $s(n)$, $n$=0, ..., 126: {1 1 1 0 1 1 0 0 0 1 0 1 0 0 1 0 1 1 1 1 1 0 1 0 1 0 1 0 0 0 0 1 0 1 1 0 1 1 1 1 0 0 1 1 1 0 0 1 0 1 0 1 1 0 0 1 1 0 0 0 0 0 1 1 0 1 1 0 1 0 1 1 1 0 1 0 0 0 1 1 0 0 1 0 0 0 1 0 0 0 0 0 0 1 0 0 1 0 0 1 1 0 1 0 0 1 1 1 1 0 1 1 1 0 0 0 0 1 1 1 1 1 1 1 0 0 0}

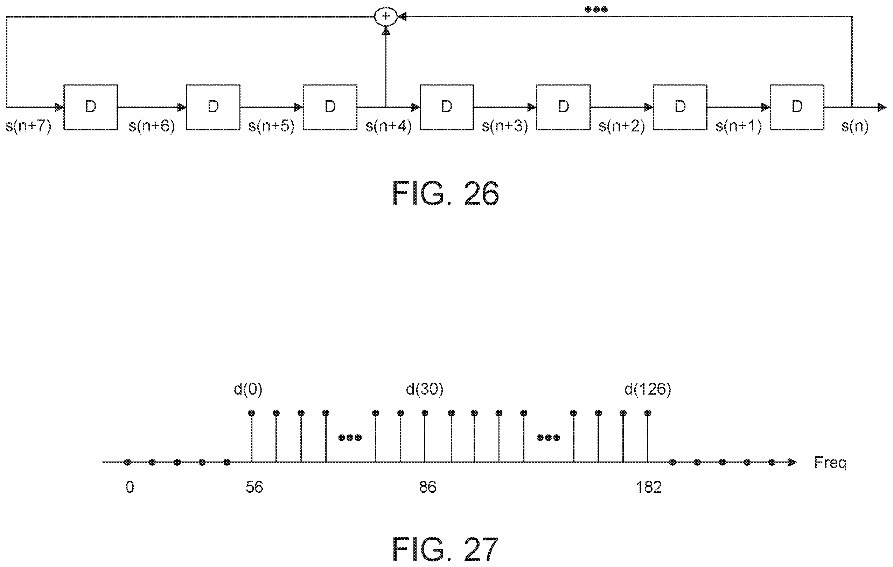

In an embodiment of this aspect, the LFSR sequence with the Fibonacci representation for the primitive polynomial $f(x) = x^7 + x^4 + 1$ is depicted in Figure 26. The sequence dSL-PSS(n) for the SL primary synchronization signal (SL PSS) is defined by:

$$d_{\text{SL-PSS}}(n) = 1\text{-}2s(m),\ n{=}0,\ \ldots,\ 126$$

$$m = (n + 43\ N^{(2)}_{\text{SL}-\text{SSID}} + z) \bmod 127,$$

where z is an integer $0 < z < 43$ and the side link ID part 2, i.e., $N^{(2)}_{\text{SL}-\text{SSID}} \in \{0, 1, 2\}$. For example, $z = 21$ for $N^{(2)}_{\text{SL}-\text{SSID}} \in \{0, 1, 2\}$. Since a cyclic-shift (left-cyclic or right-cyclic) of an m-sequence is still an m-sequence, therefore, it can generate three different m-sequences for SL PSS for $N^{(2)}_{\text{SL}-\text{SSID}} \in \{0, 1, 2\}$. In this approach, each cyclic-shift m-sequence can have low aperiodic cross-correlation with the NR Uu PSS. To support larger SL-SSID, the side link ID $N^{(2)}_{\text{SL}-\text{ID}}$ can be extended by taking more cyclic-shift of s(n) m-sequence. For example, the sequence dSL-PSS(n) for the SL primary synchronization signal is defined by:

$$d_{\text{SL-PSS}}(n) = 1\text{-}2s(m),\ n{=}0,\ \ldots,\ 126 \qquad\qquad \text{Eq 1}$$

$$m = (n + pN^{(2)}_{\text{SL}-\text{SSID}} + z) \bmod 127, \qquad\qquad \text{Eq 2}$$

where $N^{(2)}_{\text{SL}-\text{SSID}} \in \{0, 1, 2, \ldots, Q\text{-}1\}$, Q > 3, z is an integer $0 < z < p$, and p = ceil(127/Q), where ceil(x) rounds each element of x to the nearest integer greater than or equal to that element. Mapping of $N^{(2)}_{\text{SL}-\text{SSID}}$ to a cyclic-shift value can be based on finding the lower mean square aperiodic cross-correlation value (MSACC) with the NR Uu PSS sequences. MSACC value with the NR Uu PSS sequences can be defined by,

$$R_{cc}(j) = \frac{1}{M(M-1)}\frac{1}{N^2}\sum_{i=1}^{M}\sum_{\tau=1-N}^{N-1}\left|r_{i,j}(\tau)\right|^2,$$

where M=3 denotes the total number of NR Uu PSS sequences, j denotes the j-th cyclic shift value for the m-sequence s(n), $j \in \{1, 2, \ldots, 42, 44, \ldots, 85, 87, \ldots N\text{-}1\}$ which excludes cyclic-shift $\{0, 43, 86\}$, and $r_{i,j}(\tau)$

$$r_{i,j}(\tau) = \sum_{q=0}^{N-1-\tau}\left(1 - 2\tilde{s}(q)\right)\left(1 - 2s(q + 43i + \tau)\right)\ \text{for } 0 \leq \tau \leq N\text{-}1$$

$$r_{i,j}(\tau) = \sum_{q=0}^{N-1+\tau}\left(1 - 2\tilde{s}(q - \tau)\right)\left(1 - 2s(q + 43i)\right)\ \text{for } -N\text{+}1 \leq \tau < 0$$

denotes the aperiodic cross-correlation value for i-th NR Uu PSS sequence and j-th cyclic-shift m-sequence, i.e., $\tilde{s}=Tj(s) = [s(N - j + 1) \ldots s(N)\ s(0) \ldots s(N - j - 1)\ s(N - j)]$.

The other performance metric is mean square aperiodic auto-correlation (MSAAC). MSACC can be defined by:

$$R_{\text{AC}}(j) = \frac{1}{N^2}\sum_{\tau=1-N}^{N-1}\left|r_{j,j}(\tau)\right|^2$$

The tradeoff for selecting sets with good CC properties is a degradation in the AC properties. In the end, it selects $Q \in \{0, 1, 2, \ldots, Q\text{-}1\}$ number of cyclic-shift values have lower mean square aperiodic cross-correlation with the NR Uu PSS sequences and auto-correlation values for mapping $N^{(2)}_{\text{SL}-\text{SSID}} \in \{0, 1, 2, \ldots, Q\text{-}1\}$ for SL PSS sequences.

One advantage for SL PSS to adopt Uu PSS sequences with different cyclic-shift values is simultaneous detection of Uu and SL PSS via fast Hadamard transform (FHWT).

The SL PSS m-sequence, s = {s(n)} n=0, ..., 126, is generated from distinct primitive polynomial, e.g., $f(x) = x^7 + x^6 + 1$ other than using NR Uu PSS polynomial $f(x) = x^7 + x^4 + 1$. The initial state can be set as any not zero vector such as [1 1 0 0 1 1 1] = [s(0) s(1) s(2) ... s(6)]. The Q different cyclic-shift m-sequences are used for SL PSS sequences. The total number of SL PSS sequences is equal to Q. The sequence dSL-PSS(n) for the SL PSS can be generated according to Eq 1 and Eq 2 with $N_{SL-SSID}^{(2)} \in \{0, 1, 2, ..., Q\text{-}1\}$, Q ≥ 3, where z is an integer 0 < z < p, and p = *ceil*(127/Q).

It is envisaged according to application to select primitive polynomials with less taps (weight) for the generation of the SL PSS m-sequence as the preferred SL PSS sequences. For example, as shown in Table 13 below (polynomial with order 7), the primitive polynomial with minimum taps is $f(x) = x^7 + x^3 + 1$ and $f(x) = x^7 + x^6 + 1$ (taps = 2), respectively. The reason selects the primitive polynomial with minimum taps for the SL PSS sequence generation is illustrated as follow: any m-sequence can be generated by a cyclic linear code with coding rate r/N, where r (e.g. r = 7) is the order of the polynomial. The parity check matrix of this code depends on the sequence's primitive polynomial. For example, the parity check matrix for the primitive polynomial $f(x) = x^7 + x^6 + 1$ is written as follows:

$$A = \begin{bmatrix} 1 & 0 & 0 & 0 & 0 & 0 & 1 & 1 & 0 & 0 & \cdots & 0 \\ 0 & 1 & 0 & 0 & 0 & 0 & 0 & 1 & 1 & 0 & \cdots & 0 \\ 0 & 0 & 1 & 0 & 0 & 0 & 0 & 0 & 1 & 1 & 0 & \cdots \\ 0 & 0 & 0 & 1 & 0 & 0 & 0 & 0 & 0 & 1 & 1 & \cdots \\ 0 & 0 & 0 & 0 & 1 & 0 & 0 & 0 & 0 & 0 & 1 & \cdots \\ \vdots & \ddots & \ddots & \ddots & \ddots & \ddots & \ddots & \ddots & \ddots & \ddots & \ddots & \vdots \\ \vdots & \ddots & \ddots & \ddots & \ddots & \ddots & \ddots & \ddots & \ddots & \ddots & \ddots & \vdots \\ \vdots & \ddots & \ddots & \ddots & \ddots & \ddots & \ddots & \ddots & \ddots & \ddots & \ddots & \vdots \\ \vdots & \ddots & \ddots & \ddots & \ddots & \ddots & \ddots & \ddots & \ddots & \ddots & \ddots & \vdots \\ 0 & \cdots & \cdots & \cdots & 1 & 0 & 0 & 0 & 0 & 0 & 1 & 1 \end{bmatrix}$$

The parity check matrix A is with size (N - r) × N. Each column of non-zero elements in the parity matrix A is equal to the taps of the polynomial. Therefore, number of taps in a primitive polynomial is equivalent to the sparsity level in the parity check matrix. The characteristic polynomial of an LFSR generating a maximum-length sequence is a primitive polynomial. However, there are several primitive polynomials for order r but not every primitive polynomial will have minimum taps/weight. In Table 13 below, the primitive polynomial of order 7 is listed.

**Table 13**

| Primitive Polynomial | Taps (weight) |
|---|---|
| $f(x) = x^7 + x^3 + 1$ | 2 |
| $f(x) = x^7 + x^6 + 1$ | 2 |
| $f(x) = x^7 + x^4 + x^3 + x^2 + 1$ | 4 |
| $f(x) = x^7 + x^3 + x^2 + x^1 + 1$ | 4 |
| | ⋮ |
| $f(x) = x^7 + x^6 + x^4 + x^1 + 1$ | 4 |
| $f(x) = x^7 + x^6 + x^4 + x^2 + 1$ | 4 |
| $f(x) = x^7 + x^5 + x^4 + x^3 + x^2 + 1$ | 5 |
| | ⋮ |
| $f(x) = x^7 + x^6 + x^5 + x^3 + x^2 + 1$ | 5 |

It is also envisaged to use different primitive polynomials for SL PSS sequence generation. For example, W different SL PSS sequences are generated from W different primitive polynomial, i.e., f1(x), f2(x), ... fW(x) and each initial state [s(0) s(1) s(2) ... s(6)] of m-sequence can be set as any non-zero vector. The sequence dSL-PSS(n) for the SL PSS is defined by:

$$d_{SL\text{-}PSS}(n) = 1\text{-}2s_w(n), n=0, ..., 126, \qquad \text{Eq 3}$$

where $w = N_{SL-SSID}^{(2)}$. For example, for W=3, three different primitive polynomials are chosen. These include: f1(x) = x7 + x6 + 1, f2(x) = x7 + x3 + 1, f3(x) = x7 + x4 + x3+ x2+1 for $N_{SL-SSID}^{(2)} = 0$, $N_{SL-SSID}^{(2)} = 1$, and $N_{SL-SSID}^{(2)} = 2$, respectively.

Then, the decimation property of m-sequence is applied for SL PSS sequence generation. For example, W different SL PSS sequences are generated from a primitive polynomial f(x) with different decimated factor $q_w$, w ∈ {0, 1, ..., W-1}. The sequence $d_{SL-PSS}(n)$ for the SL PSS is defined by:

$$d_{\text{SL-PSS}}(n) = 1 - 2s(q_w n \bmod N), \ n = 0, \ldots, 126, \qquad \text{Eq 4}$$

where $w = N_{SL-SSID}^{(2)} \in \{0, 1, \ldots, W-1\}$ and qw is a positive integer. If $q_w \in 2i$, i is an positive integer for all w then s(qwn mod N) is equivalent to a cyclic-shift of s(n). Therefore, a cyclic-shift of an m-sequence can be treated as an m-sequence when the decimation factor qw ∈ 2i, for example, $q_w \in \{2, 4, ..., 2i\}$. For another example, if qw ∈ 2i + 1, i is an positive integer and gcd(i, r) = 1 for all w then m-sequence s(qwn mod N) is a preferred pair with m-sequence s(n) and the periodic cross-correlation between s(qwn mod N) and s(n) are three-valued cross-correlation.

A m-sequence *s(n)* n = 0, ..., 254, i.e., length 255 (28-1) can be used for SL PSS sequence generation. Analog to m-sequence with length 127 (27-1), SL PSS sequence generation can use cyclic-shift of an m-sequences, different primitive polynomial of m-sequences and multiple distinct decimation of an m-sequence. For cyclic-shift of an m-sequence for SL PSS sequence generation, Eqs. 1 and 2 can be extended as:

$$d_{\text{SL-PSS}}(n) = 1 - 2s(m), \ n = 0, \ldots, 254$$

$$m = (n + pN_{SL-SSID}^{(2)} + z) \bmod 255,$$

where $N_{SL-SSID}^{(2)} \in \{0, 1, 2, \ldots, Q-1\}$, Q ≥ 3, z is an integer 0 < z < p, and p = ceil(255/Q). For different primitive polynomial of m-sequences example, for support W=3 ID, three different primitive polynomials are chosen. These include: $f_1(x) = x^8 + x^4 + x^3 + x^2 + 1$, $f_2(x) = x^8 + x^6 + x^5 + x^3 + 1$, $f_3(x) = x^8 + x^6 + x^5 + x + 1$ for $N_{SL-SSID}^{(2)} = 0$, $N_{SL-SSID}^{(2)} = 1$, and $N_{SL-SSID}^{(2)} = 2$, respectively. In Table 14 below, the primitive polynomial of order 8 is listed. A polynomial of Different SL PSS sequences are generated from a primitive polynomial *f(x)* with different decimated factor *qw, w* ∈ {0, 1, ... , *W* - 1}. For example, length-255 sequence $d_{SL-PSS}(n)$ for the SL PSS is defined by:

$$d_{\text{SL-PSS}}(n) = 1 - 2s(q_w n \bmod N), \ n = 0, \ldots, 254,$$

where $w = N_{SL-SSID}^{(2)} \in \{0, 1, \ldots, W-1\}$ and qw is a positive integer.

**Table 14**

| Primitive Polynomial | Taps (weight) |
|---|---|
| $f(x) = x^8 + x^4 + x^3 + x^2 + 1$ | 4 |
| $f(x) = x^8 + x^6 + x^5 + x^3 + 1$ | 4 |
| $f(x) = x^8 + x^6 + x^5 + x+1$ | 4 |
| $f(x) = x^8 + x^7 + x^3 + x^2+1$ | 4 |
| | ⋮ |
| $f(x) = x^8 + x^6 + x^4 + x^3 + x^2 + x^1+1$ | 6 |
| ⋮ | ⋮ |
| $f(x) = x^8 + x^7 + x^6 + x^5 + x^4 + x^2+1$ | 6 |

It is envisaged SL SSS sequence generation can based on Gold sequences or Gold-like sequences. The sequence $d_{SL\text{-}SSS}(n)$ for the SL SSS is defined by:

$$d_{\text{SL-SSS}}(n) = 1\text{-}2(s_0(n+m_0) \bullet s_1(n+m_1)), \; n=0, \ldots, N\text{-}1 \; N=127 \text{ or } 255,$$

where • can be either modular 2 addition or multiplication operator. The sequence s0(n) and s1(n) are two m-sequences with length either 127 (order 7) or 254 (order 8), respectively. The construction of s0(n) and s1(n) can be based on the following rule:

s0(n) and s1(n) are based on different primitive polynomials. For example, $s_0(n)$ can be based on primitive polynomial $f_0(x) = x^7 + x^6 + 1$ and $s_1(n)$ is based on polynomial $f_1(x) = x^7 + x^3 + 1$ for length 127. Any non-zero vector can be used for the initial value [s(0) s(1) s(2) ... s(6)] for s0(n) and s1(n). s0(m) = s0((n + m0) mod N) and s1(m) = s1((n + m1) mod N),

where $\quad \mathrm{m0} = z(Q \left\lfloor \dfrac{N_{\text{SL-SSID}}^{(1)}}{L} \right\rfloor + N_{\text{SL-SSID}}^{(2)}), \; \mathrm{m}\,1 = t(N_{\text{SL-SSID}}^{(1)} \bmod L) \quad$ and

$N_{\text{SL-SSID}}^{(1)} \in \{0, 1, \ldots, Z\}$. The Q denotes the number of $N_{\text{SL-SSID}}^{(2)}$, t and z are an arbitrary positive integer. The maximum number of NSL-SSID is equal to $Q \times L$. When $s_0(n)$ and $s_1(n)$ are based on current NR SSS polynomial $f_0(x) = x^7 + x^4 + 1$ and $f_1(x) = x^7 + x + 1$. In this case, UE can determine from the
The sequence $d_{SL\text{-}SSS}(n)$ for the SL SSS is defined by :

$$d_{\text{SL-SSS}}(n) = 1\text{-}2(s_0(m_1 n) \bullet s_1(m_2 n)), \; n=0, \ldots, N\text{-}1 \; N=127 \text{ or } 255,$$

$s_0(n)$ and $s_1(n)$ are based on different primitive polynomials. For example, $s_0(n)$ can be based on primitive polynomial $f_0(x) = x^7 + x^6 + 1$, and s1(n) is based on polynomial $f_1(x) = x^7 + x^3 + 1$ for length 127. Any non-zero vector can be used for the initial value [s(0) s(1) s(2) ...s(6)] for $s_0(n)$ and $s_1(n)$. $s_0(m) = s_0(m_0 n) \bmod N)$ and s1(m) = $s_1((m_1 n) \bmod N)$, where

$$m_0 = pow(z(Q \left\lfloor \frac{N_{SL-SSID}^{(1)}}{L} \right\rfloor + N_{SL-SSID}^{(2)}),2), m_1 =$$

$$pow( N_{SL-SSID}^{(1)} \bmod L, 2), N_{\text{SL-SSID}}^{(1)} \in \{0, 1, \ldots, Z\} \text{ and } pow(x, 2) = 2^x. \text{ The Q denotes the number of}$$

$N_{\text{SL-SSID}}^{(2)}$ and z is an arbitrary integer.

The sequence $d_{SL\text{-}SSS}(n) \; n = 0, \ldots, N - 1 \, N = 254$ used for the SL second synchronization signal is an interleaved concatenation of two length-127 binary sequences, i.e., $d_{SL\text{-}SSS}(2n) = 1 - 2s_0(n + m0)$ and $d_{SL\text{-}SSS}(2n + 1) = 1 - 2s_1(n + m1)$ for $n = 0, \ldots, 126$. $s_0(n)$ and $s_1(n)$ can be based on m-sequence or Gold-sequence. For m-sequence example, $s_0(n)$ and $s_1(n)$ can be based on primitive polynomial $f_0(x) = x^7 + x^6 + 1$, and $s_1(n)$ is based on primitive polynomial $f_1(x) = x^7 + x^3 + 1$. For Gold-sequence example, $s_0(n) = xor(g_0(n), c_0(n))$ and $s_1(n) = xor(g_1(n), c_1(n))$, where $g_0(n), g_1(n) \, c_0(n)$ and $c\_1(n)$ are m-sequences, respectively. For example, $g_0(n)$ and $c_0(n)$ can be constructed with polynomial $f(x) = x^7 + x^6 + x^4 + x + 1$ and $x^7 + x^4 + x^3 + x^2 + 1$. $g_0(n)$ and $c_0(n)$ are constructed with polynomial $f(x) = x^7 + x^6 + x^4 + x^2 + 1$ and $x^7 + x^3 + x2 + x + 1$.

$$m_0 = z(Q \left\lfloor \frac{N_{\text{SL-SSID}}^{(1)}}{L} \right\rfloor + N_{\text{SL-SSID}}^{(2)}), m_1 = t(N_{SL-SSID}^{(1)} \bmod L), N_{\text{SL-SSID}}^{(1)} \in \{0, 1, \ldots, Z\} \cdot \text{ The Q de-}$$

notes the number of $N_{\text{SL-SSID}}^{(2)}$, t and z are an arbitrary positive integers.

The SL PSS and SSS can be precoded by DFT to support DFT-s-OFDM waveform with size 20 or 24 RBs (or 240/288 Res).

Resource mapping

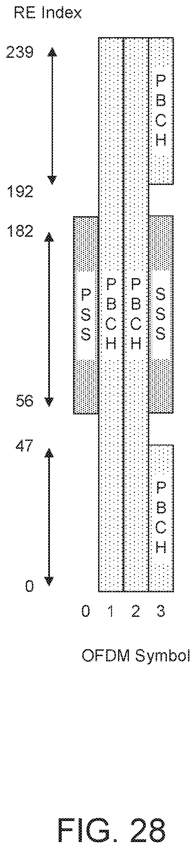

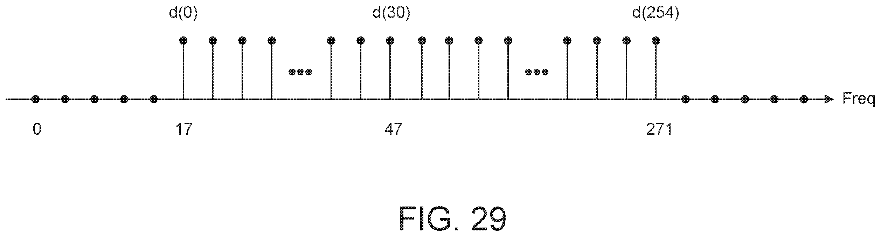

According to even a further aspect of the application, in one embodiment thereof, where the SL PSS length = 127 and SL SS block bandwidth is 20 RB, the SL primary synchronization signal can be mapped to the first symbol of the SL SS block. The sequence $d_{SL\text{-}PSS}(n)$ and $d_{SL\text{-}SSS}(n)$ are mapped to frequency domain depicted in Figure 27. The subcarrier 0 is relative to the start of an SL SS block. SL SSS can be mapped to the last symbol of the SL SS block. The sequence dSL-SSS(n) is mapped to frequency domain is same as dSL-PSS(n) . An example for SL SS block with bandwidth 20 RBs is shown in Figure 28.
For SL PSS length 255 and SL SS block bandwidth is 24 RB, the SL primary synchronization signal can be mapped to the first symbol of the SL SS block. The sequence $d_{SL-PSS}(n)$ and $d_{SL-SSS}(n)$ are mapped to frequency domain as depicted in Figure 29.

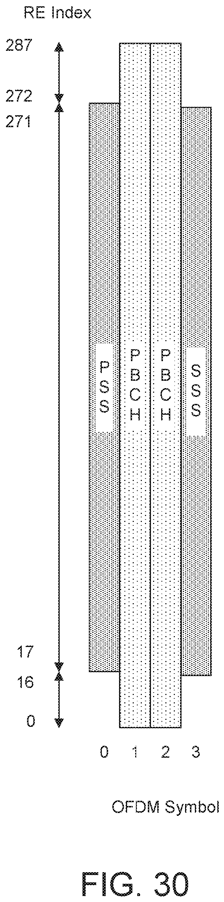

SL SSS can be mapped to the last symbol of the SL SS block. The sequence $d_{SL-SSS}(n)$ is mapped to frequency domain in the same way as $d_{SL-PSS}(n)$. An example for SL SS block with bandwidth 24 RBs is shown in Figure 30.

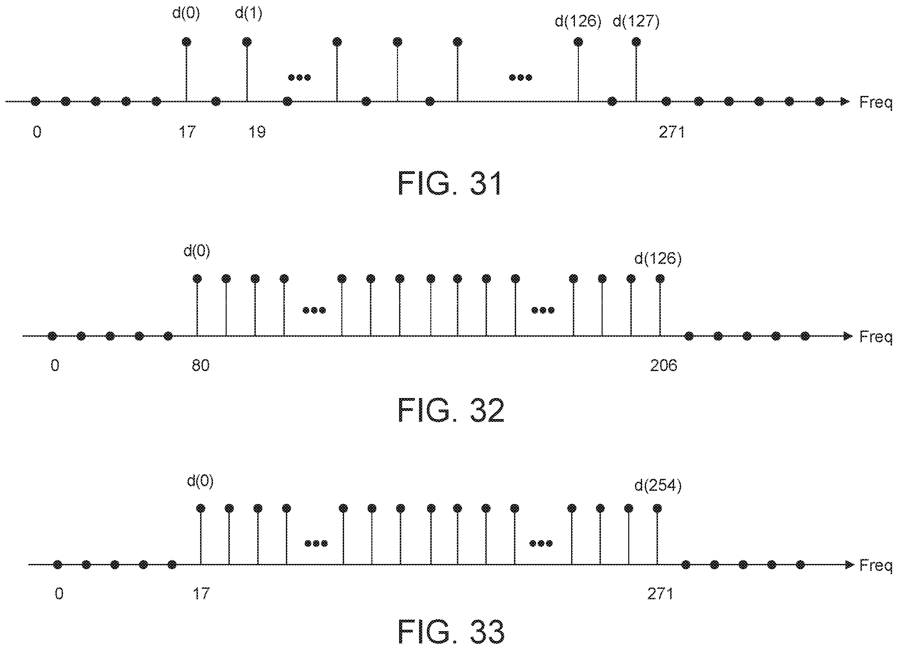

For length=127 SL PSS and SL SS block with bandwidth of 24 RB, the SL primary synchronization signal can be mapped to the first symbol of the SL SS block. The sequence $d_{SL-PSS}(n)$ is mapped to frequency domain, as depicted in Figure 31.

Another option for length-127 SL PSS and SL SS block with bandwidth of 24 RB, the SL primary synchronization signal can be mapped to the first symbol of the SL SS block. The sequence $d_{SL-PSS}(n)(n)$ is mapped to frequency domain, as depicted in Figure 32.

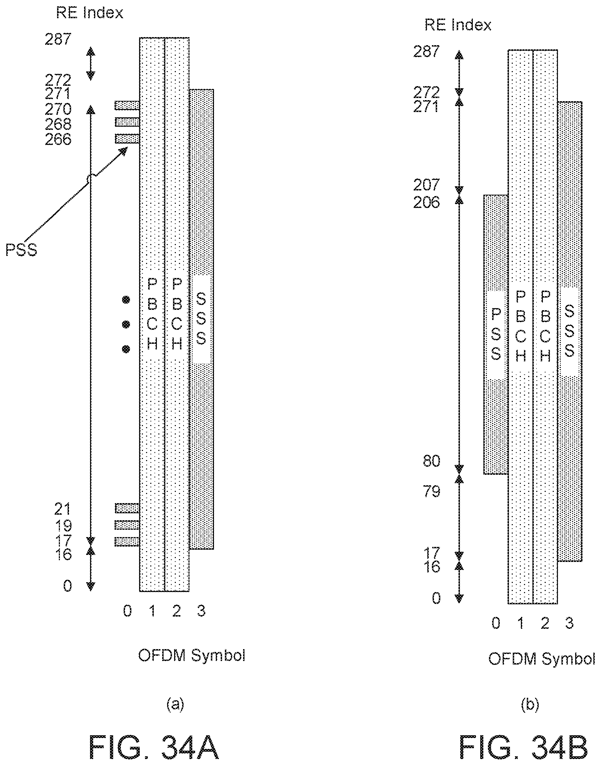

In Figures 31 and 32, the SL PSS length=127 transmission power and can be doubled for SL PSS length=255 when SL SS block bandwidth = 24 RBs. SL SSS can be mapped to the last symbol of the SL SS block. The sequence $d_{SL-SSS}(n)$ is mapped to frequency domain, as depicted in the following Figure 33. An example for SL SS block with bandwidth 24 RBs and length-127 SL PSS and length-255 SL SSS is shown in Figures 34A and 34B. Here, an SL SS block exemplary design and resource mapping for SL SS BW = 24 RB when SL PSS length=127 and SL SSS length=255. Further, Figures 34A-B illustrate an SL block design and resource mapping for SL SS BW = 24 RB when SL PSS length = 127 and SL SSS length = 255.

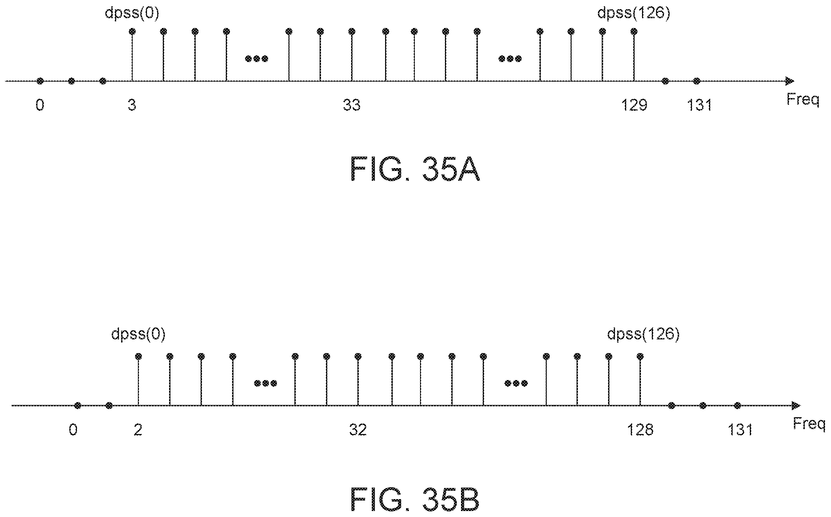

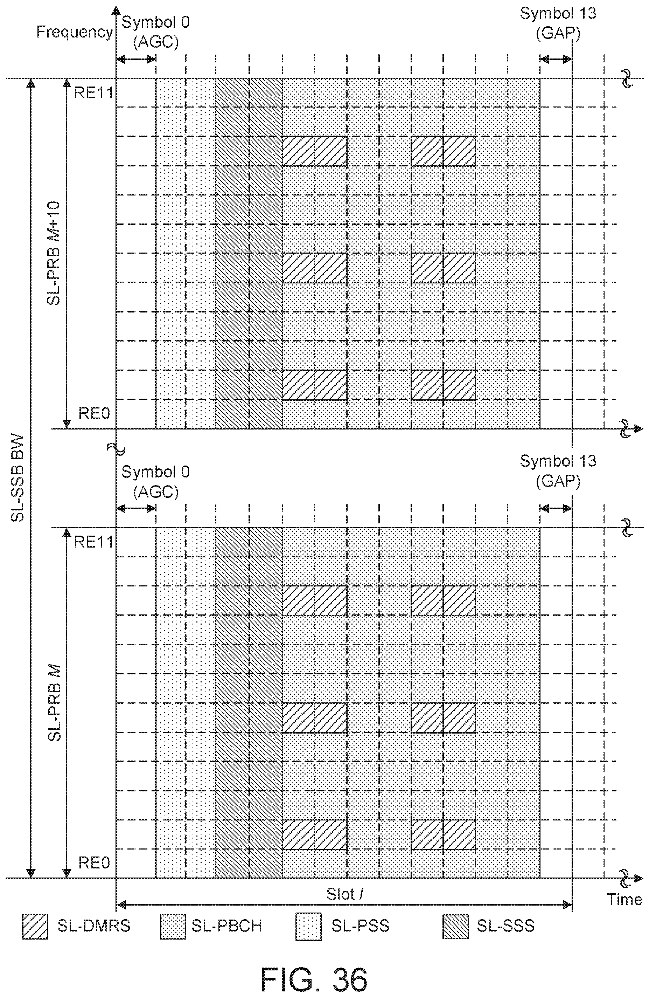

For length=127 SL PSS with SL SS bandwidth of 11 RBs, the SL primary synchronization signal can be mapped to the first and second symbol in an SL SS block as shown in Figure 36. Same sequence $d_{SL-PSS}(n)$, $n = 0, ..., 126$ applies for both the 1st and 2nd symbols. The sequence $d_{SL-PSS}(n)$ is mapped to frequency domain, as depicted in Figure 35 (a) and (b). Here, sidelink PSS mapping methods depict a frequency domain when SL SS Block BW is equal to 11 RBs. In Figure 35(a), the subcarrier 0, 1, 2, 130 and 131 are zero padded. In Figure 35 (b), subcarrier 0, 1, 129,130 and 131 are zero padded, respectively.

Similar to SL PSS with length 127 and SL SS bandwidth of 11 RBs for length=127 SL SSS, the SL secondary synchronization signal can be mapped to the first and second symbol in the SL SS block. Same sequence $d_{SL-SSS}(n)$, n = 0, ..., 126 applies for both the third and fourth symbols in the SL SSB as shown in Figure 35. The sequence $d_{SL-SSS}(n)$ n = 0, ..., 126 is mapped to the frequency domain, as depicted in Figure 35 (a) and (b). In Figure 35 (a), the subcarrier 0, 1, 2, 130 and 131 are zero padded. In Figure 35 (b), subcarrier 0, 1, 129,130 and 131 are zero padded, respectively.

In an embodiment, two SL SSS symbols can be placed at the 7th and 8th symbols in the SL SSB as shown in Figure 36. The DMRS for SL PBCH can be placed at the symbol 5,6, 9 and 10 when SL PSS and SSS symbols are located in the 1, 2 and 3, 4 symbol location as shown in Figure 36 in SL SSB. The relative RE location for comb-type DMRS can be formulated as $0 + v, d + v, 2d + v, ... , + (M - d) + v$, where M denotes the maximum RE location for SL PBCH (PSBCH), d = 4 is the distance between two DMRS RE and v = 0, ... , d - 1 is $mod(SL\ SSID, d)$. The first two DMRS symbols are allocated at two continuous symbols as shown in Figure 36. In Figure 36, we assume $v = 1$ for illustration. In this manner, it is facilitated for the frequency offset estimation.

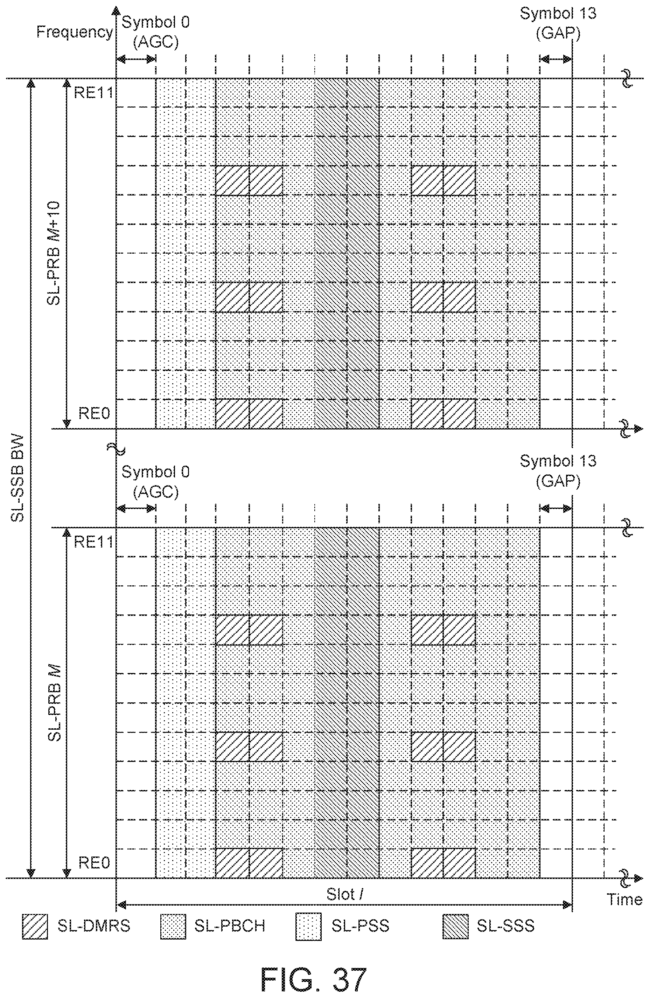

In an alternative embodiment as exemplary shown in Figure 37, the DMRS for SL PBCH can be placed at the symbol 3,4, 9 and 10 where the SL PSS is located at 1 and 2 symbol locations and SSS at 6, 7 symbol locations in a slot. The relative RE location for comb-type DMRS can be formulated as $0 + v, d + v, 2d + v,..., + (M - d) + v$, where M denotes the maximum RE location for SL PBCH (PSBCH), d = 4 is the distance between two DMRS RE and $v = 0, ..., d - 1$ is $mod(SL\ SSID, d)$. The first two DMRS symbols are allocated at two continuous symbols as shown in Figure 37. For illustrative purposes $v = 1$ is assumed.

In an embodiment, the first symbol (symbol 0) in the slot carrying SL SSB can be used for automatic gain control (AGC) training. The symbol 0 can be used to carry extra DMRS or DMRS with SL PBCH symbol. If the symbol 0 is used to carry DMRS, then other RE leaves as blank in the SL SSB bandwidth, e.g., 11 RB.

SSB time-multiplexing with other SL physical channel

According to yet even a further aspect of the application of the application, SSB time-multiplexing with other SL physical channels is described. According to a first option, where a slot contains an SL SSB, the SL SSB slot is not time division multiplexed (TDM) with another SL physical channel (e.g., PSCCH, PSSCH and PSFCH). In this option, the V2X UE assume no other SL physical channels are multiplexing with the slot when it is transmitting a SL SSB.

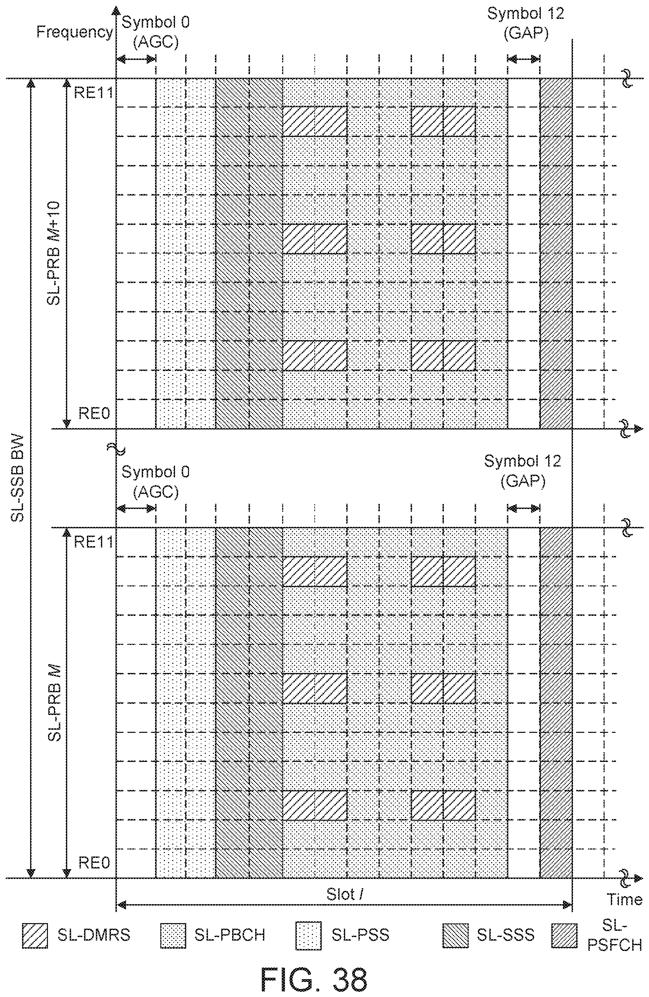

According to a second option, where the number of used symbols for SL SSB in a slot are less or equal than 10 or 11 symbols, the last of one or two available symbols in the slot can be used for transmission of SL feedback channel (e.g.: for HARQ ACK/NACK) with time multiplexing (TDM) with SL SSB as shown in Figure 38. In this case, the gap symbol for Tx-Rx switching can be placed at symbol 12 in the slot. The 1st symbol can be reserved for AGC training.

SL SS block periodicity

Yet even another aspect of the application describes SL SS block periodicity. The Uu initial access procedure, i.e., multiple SS blocks is transmitted with a certain SSB periodicity and each SSB within the burst set is associated with different PRACH resources (e.g., PRACH occasions or preambles). In Uu, the gNB can obtain knowledge about the specific SSB transmissions received by a certain UE. V2X UE use SL SS/PBCH as a timing reference and doesn't use SL SSB to associate with any PRACH resource like in Uu since PRACH is not used in sidelink. Therefore, it may not need to define SL SS burst set as proposed in Uu. In this way, DMRS for SL PBCH is no need to carry SS block indication like in Uu, thus, it can reduce the blind search effort for monitoring SL SS block indication in DMRS. The scrambling sequence generator for DMRS shall be initialized at the start of each SS/PBCH block occasion with:

$$c_{\text{init}} = 2^a\big(n_{hf} + 1\big)\big(\lfloor N_{\text{ID}}^{SL}/2\rfloor + 1\big) + 2^{\lceil a/2\rceil}\big(n_{hf} + 1\big)$$

where $n_{hf} = 0, 1$ denotes half frame indicator ($n_{hf} = 0$ denotes the first half-frame in the frame, $n_{hf} = 1$ is for the first half-frame in the frame). For instance, when a=11, the initialization for DMRS can be expressed as:

$$c_{\text{init}} = 2^{11}\big(n_{hf} + 1\big)\big(\lfloor N_{\text{ID}}^{SL}/2\rfloor + 1\big) + 2^{6}\big(n_{hf} + 1\big)$$

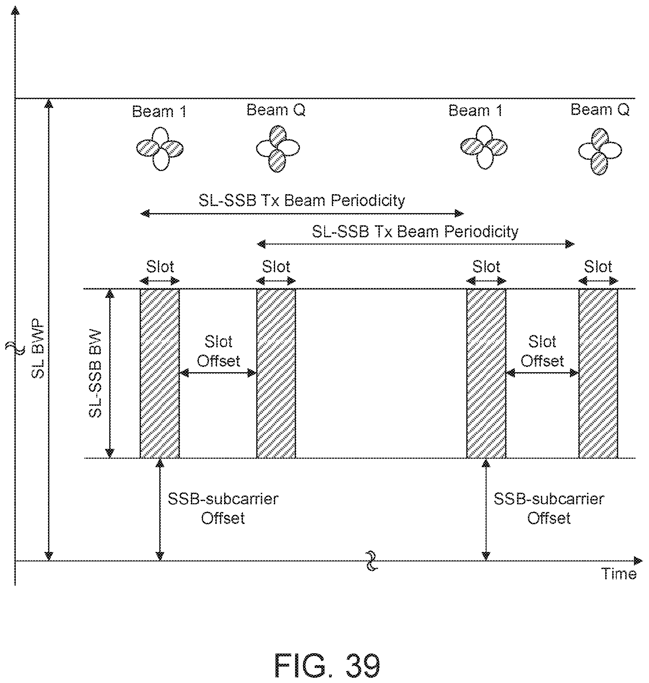

The SL SS/PBCH block periodicity can be pre-defined. For example, the SL SS/PBCH block periodicity can be supported in {5ms, 10ms, 20ms, 40ms, 80ms, 160ms, 200ms}. For example, longer SL SS/PBCH block periodicity such as 160ms can be supported to reduce SL SS/PBCH overhead. To support of multiple beams transmission of SL SS/PBCH block, we can define the SS/PBCH block transmission periodicity is based on the beam transmission periodicity as shown in Figure 39. Each (different) beam associated with the SL SS/PBCH block repeats with the same periodicity, .e.g. 160ms. In this sequel, the number of different transmitting beams for SL SS block (SSB) is dependent on V2X UE implementation. In this method, there is no impaction for a V2X UE to detect a SL SSB within a SL SSB transmission periodicity. UE still assume to perform SL SSB detection within the transmission periodicity.

The sequence dSL-SSS(n) for the SL SSS can be reused from Uu SSS is defined by:

$$d_{SL-SSS}(n) = 1 - 2(s_0(n + m0) \bullet s_1(n + m1)), n = 0, \ldots, N - 1 \ N = 127,$$

where • can be either modular 2 addition or multiplication operator. The sequence $s_0(n)$ and $s_1(n)$ are two m-sequences with length either 127 (order 7). The construction of $s_0(n)$ and $s_1(n)$ can be based on the following rule: $s_0(n)$ and $s_1(n)$ are based on different primitive polynomials. For example, $s_0(n)$ can be based on primitive polynomial $f0(x) = x^7 + x^4 + 1$ and $s_1(n)$ is based on polynomial $f_1(x) = x^7 + x + 1$ for length 127. See Tables 12a and 12b below. The initial value for s0(n) and s1(n) can be set as:

$$[s_0(6)\ s_0(5)\ s_0(4)\ s_0(3)\ s_0(2)\ s_0(1)\ s_0(0)] = [0\ 0\ 0\ 0\ 0\ 01]$$

and

$$[s_1(6)\ s_1(5)\ s_1(4)\ s_1(3)\ s_1(2)\ s_1(1)\ s_1(0)] = [0\ 0\ 0\ 0\ 0\ 01],$$

respectively.

**Table 12-1**

| | Cyclic shift value for d$_{\text{SL-PSS}}$ (n) for symbol 1, 2 location in SL SSB slot |
|---|---|
| The same sequence $d_{SL\text{-}SSS}(n)$ shall be repeated at symbol location either at symbol {3, 4} or {6, 7} in a slot transmitting the SL SSS. The sequence $d_{SL\text{-}PSS}(n)$ for the SL PSS can choose a cyclic-shift property of m-sequence The SL PSS m-sequence, $s(n)$, can be generated from polynomial $f(x) = x^7 + x^4 + 1$ which is same as NR Uu PSS but with different cyclic-shift. For a sequence of length 127 , m-sequence, s = {$s(n)$} n = 0, ..., 126, is generated from the primitive polynomial $f(x) = x^7 + x^4 + 1$ , and with initial state of [1 1 1 0 1 1 0] = [$s(6)$ $s(5)$ $s(4)$ ...$s(0)$]. The sequence d$_{SL\text{-}PSS}$(n) for the SL PSS symbol location 1 and 2 in a slot can be either using a same or different cyclic shift value. The cyclic value for d$_{SL\text{-}PSS}$ (n) can be choose from the following values {22, 65, 87} to have lower cross-correlation value with Uu PSS and SSS sequences. If two symbols of SL PSS apply | |
| with two different cyclic shift value respectively. The following table is suggested for $N_{ID}^{(2)}$ mapping with the cyclic value for d$_{SL\text{-}PSS}$ (n) at symbol 1 and 2 in a SL SSB slot. $N_{ID}^{(2)}$ ID | |
| 0 | {22} |
| 1 | {65} |

**Table 12-2**

| $N_{ID}^{(2)}$ | Cyclic shift value for d$_{\text{SL-PSS}}$ (n) for symbol 1, 2 location in SL SSB slot |
|---|---|
| 0 | {12, 65} |
| 1 | {34, 87} |

$N_{ID}^{(1)}$ can choose from 0 to 335 for dSL-SSS(n). Therefore, total $N_{ID}^{\text{SL}} = 2 \times 336 = 672$ SL SSID are supported.

While the systems and methods have been described in terms of what are presently considered to be specific aspects, the application need not be limited to the disclosed aspects. It is intended to cover various modifications and similar arrangements included within the scope of the claims, the scope of which should be accorded the broadest interpretation so as to encompass all such modifications and similar structures. The present disclosure includes any and all aspects of the following claims.

**Claims**

1. A method comprising:

   providing a sidelink, SL, synchronization signal, SS, burst over a time period;
   restricting, in an OFDM symbol of a slot of the SL SS burst, transmission of a synchronization signal block, SSB over resource blocks, RBs so the OFDM symbol is reserved for not transmitting the SSB over the RBs;
   generating a SL primary SS, PSS, including a cyclic-shift m-sequence and a SL secondary SS, SSS, based on a gold sequence; and
   transmitting, from a user equipment (102), UE, to a gNB (121) via plural symbols after the OFDM symbol, the SSB over the RBs in a new radio, NR, SL SS and physical broadcast channel, PBCH, ,NR SL SS/PBCH, including the generated SL PSS and SL SSS;
   **characterized by**,
   the SL PSS reuses Uu PSS sequences exhibiting different cyclic shifts and is generated via a polynomial f(x) = x$^7$ + x$^4$ +1.

2. The method of claim 1, wherein the SL SSS reuses an Uu SSS.

3. The method of claim 1, wherein a SS identification, SSID, is based on 2 IDs of the SL PSSS and 336 IDs from the SL SSS.

4. The method of claim 1, wherein the NR SL SS/PBCH is periodically transmitted.

5. The method of claim 1, wherein the slot is indicated by a SL master information block, MIB-SL.

6. The method of claim 1, further comprising:

   receiving an instruction from the gNB to transmit the NR SL SS/PBCH,
   wherein time and frequency resources for the NR SL SS/PBCH are scheduled by a gNB.

7. The method of claim 1, further comprising:
   determining, at the UE, being in or out of coverage of a gNB.

8. The method of claim 1, further comprising:
   cancelling, at the UE, the transmission after a predetermined event.

9. The method of claim 1, wherein the SSB is not time division multiplexed with another channel during the transmitting step.

10. A computer readable medium containing program instructions stored thereon that, when executed by a processor, causes the processor to:

    restrict, in an OFDM symbol of a slot of a sidelink, SL, synchronization signal, SS, burst over a time period, transmission of a synchronization signal block, SSB, over resource blocks, RBs;
    generate a SL primary SS, PSS, including a cyclic-shift m-sequence and a SL secondary SS, SSS, based on a gold sequence; and
    transmit, to a gNB, via plural symbols after the OFDM symbol, the SSB over the RBs in a new radio, NR, SL SS and physical broadcast channel, PBCH, NR SL SS/PBCH, including the generated SL PSS and SL SSS;
    **characterized by**,
    the SL PSS reuses Uu PSS sequences exhibiting different cyclic shifts and is generated via a polynomial $f(x) = x^7 + x^4 + 1$.

11. The computer readable medium of claim 10, wherein the NR LS SS/PBCH is periodically transmitted.

12. The computer readable medium of claim 10, wherein the slot is indicated by a SL master information block, MIB-SL.

13. The computer readable medium of claim 10, wherein the SSB is not time division multiplexed with another channel during the transmitting step.

**Patentansprüche**

1. Verfahren, umfassend:

   Bereitstellen eines Sidelink(SL)-Synchronisationssignal(SS)-Bursts über einen Zeitraum;
   Beschränken der Übertragung eines Synchronisationssignalblocks, SSB, über Ressourcenblöcke, RBs, in einem OFDM-Symbol eines Slots des SL-SS-Bursts, so dass das OFDM-Symbol reserviert ist, um den SSB nicht über die RBs zu übertragen;
   Erzeugen eines primären SL-SS, PSS, das eine zyklische Verschiebung einer m-Sequenz umfasst, und eines sekundären SL-SS, SSS, das auf einer Goldsequenz basiert; und
   Senden des SSB über die RBs in einem New Radio(NR)-SL-SS- und Physical Broadcast Channel, PBCH, NR-SL-SS/PBCH, der das erzeugte SL-PSS und SL-SSS umfasst, von einer Benutzereinrichtung (102), UE, über mehrere Symbole nach dem OFDM-Symbol an einen gNB (121);
   **dadurch gekennzeichnet, dass**
   das SL-PSS Uu-PSS-Sequenzen wiederverwendet, die unterschiedliche zyklische Verschiebungen aufweisen, und über ein Polynom $f(x) = x^7 + x^4 + 1$ erzeugt wird.

2. Verfahren nach Anspruch 1, wobei das SL-SSS ein Uu-SSS wiederverwendet.

3. Verfahren nach Anspruch 1, wobei eine SS-Identifikation, SSID, auf 2 IDs des SL-PSSS und 336 IDs aus dem SL-SSS basiert.

**4.** Verfahren nach Anspruch 1, wobei der NR-SL-SS/PBCH periodisch übertragen wird.

**5.** Verfahren nach Anspruch 1, wobei der Slot durch einen SL-Master-Informationsblock, MIB-SL, angegeben wird.

**6.** Verfahren nach Anspruch 1, ferner umfassend:

Empfangen einer Anweisung vom gNB zum Senden des NR-SL-SS/PBCH,
wobei Zeit- und Frequenzressourcen für den NR-SL-SS/PBCH von einem gNB disponiert werden.

**7.** Verfahren nach Anspruch 1, ferner umfassend:
Bestimmen an der UE, dass sie sich inner- oder außerhalb der Abdeckung eines gNB befindet.

**8.** Verfahren nach Anspruch 1, ferner umfassend:
Annullieren der Übertragung an der UE nach einem vorbestimmten Ereignis.

**9.** Verfahren nach Anspruch 1, wobei der SSB während des Sendeschritts nicht mit einem anderen Kanal zeitgemultiplext wird.

**10.** Computerlesbares Medium, das darauf gespeicherte Programmanweisungen enthält, die, wenn sie von einem Prozessor ausgeführt werden, den Prozessor zu Folgendem veranlassen:

Beschränken der Übertragung eines Synchronisationssignalblocks, SSB, über Ressourcenblöcke, RBs, in einem OFDM-Symbol eines Slots eines Sidelink(SL)-Synchronisationssignal(SS)-Bursts über einen Zeitraum;
Erzeugen eines primären SL-SS, PSS, das eine zyklische Verschiebung einer m-Sequenz umfasst, und eines sekundären SL-SS, SSS, das auf einer Goldsequenz basiert; und
Senden des SSB über die RBs in einem New Radio(NR)-SL-SS- und Physical Broadcast Channel, PBCH, NR-SL-SS/PBCH, der das erzeugte SL-PSS und SL-SSS umfasst, über mehrere Symbole nach dem OFDM-Symbol an einen gNB;
**dadurch gekennzeichnet, dass**
das SL-PSS Uu-PSS-Sequenzen wiederverwendet, die unterschiedliche zyklische Verschiebungen aufweisen, und über ein Polynom $f(x) = x^7 + x^4 + 1$ erzeugt wird.

**11.** Computerlesbares Medium nach Anspruch 10, wobei der NR-LS-SS/PBCH periodisch übertragen wird.

**12.** Computerlesbares Medium nach Anspruch 10, wobei der Slot durch einen SL-Master-Informationsblock, MIB-SL, angegeben wird.

**13.** Computerlesbares Medium nach Anspruch 10, wobei der SSB während des Sendeschritts nicht mit einem anderen Kanal zeitgemultiplext wird.

## Revendications

**1.** Procédé comprenant :

la fourniture d'une rafale de signal de synchronisation, SS, de liaison latérale, SL, sur une période de temps ;
la restriction, dans un symbole OFDM d'un créneau de la salve SS SL, de la transmission d'un bloc de signal de synchronisation, SSB, sur des blocs de ressources, RB, de sorte que le symbole OFDM est réservé pour ne pas transmettre le SSB sur les RB ;
la génération d'un SS primaire SL, PSS, comprenant une séquence m de décalage cyclique et d'un SS secondaire SL, SSS, sur la base d'une séquence d'or ; et
la transmission, à partir d'un équipement utilisateur (102), UE, à un gNB (121) via plusieurs symboles après le symbole OFDM, du SSB sur les RB dans un SS SL de nouvelle radio, NR, et un SS/PBCH SL NR de canal de diffusion physique, PBCH, comprenant les PSS SL et SSS SL générés ;
**caractérisé par**,
le PSS SL réutilise des séquences PSS Uu présentant des décalages cycliques différents et est généré via un polynôme $f(x) = x^7 + x^4 + 1$.

**2.** Procédé selon la revendication 1, dans lequel le SSS SL réutilise un SSS Uu.

**3.** Procédé selon la revendication 1, dans lequel une identification SS, SSID, est basée sur 2 ID du PSSS SL et 336 ID du SSS SL.

**4.** Procédé selon la revendication 1, dans lequel le SS/PBCH SL NR est transmis périodiquement.

**5.** Procédé selon la revendication 1, dans lequel le créneau est indiqué par un bloc d'informations maître SL, MIB-SL.

**6.** Procédé selon la revendication 1, comprenant en outre :

la réception d'une instruction du gNB pour transmettre le SS/PBCH SL NR,
dans lequel les ressources de temps et de fréquence pour le SS/PBCH SL NR sont programmées par un gNB.

**7.** Procédé selon la revendication 1, comprenant en outre :
la détermination, au niveau de l'UE, de l'entrée ou de la sortie de la couverture d'un gNB.

**8.** Procédé selon la revendication 1, comprenant en outre :
l'annulation, au niveau de l'UE, de la transmission après un évènement prédéterminé.

**9.** Procédé selon la revendication 1, dans lequel le SSB n'est pas multiplexé par répartition dans le temps avec un autre canal pendant l'étape de transmission.

**10.** Support lisible par ordinateur comportant des instructions de programme stockées sur celui-ci qui, lorsqu'elles sont exécutées par un processeur, amènent le processeur à :

restreindre, dans un symbole OFDM d'un créneau d'une rafale de signal de synchronisation, SS, de liaison latérale, SL, sur une période de temps, la transmission d'un bloc de signal de synchronisation, SSB, sur des blocs de ressources, RB ;
générer un SS primaire SL, PSS, comprenant une séquence m de décalage cyclique et un SS secondaire SL, SSS, sur la base d'une séquence d'or ; et
transmettre, à un gNB, via plusieurs symboles après le symbole OFDM, le SSB sur les RB dans un SS SL de nouvelle radio, NR, et un SS/PBCH SL NR de canal de diffusion physique, PBCH, comprenant les PSS SL et SSS SL générés ;
**caractérisé par**,
le PSS SL réutilise des séquences PSS Uu présentant des décalages cycliques différents et est généré via un polynôme $f(x) = x^7 + x^4 + 1$.

**11.** Support lisible par ordinateur selon la revendication 10, dans lequel le SS/PBCH SL NR est transmis périodiquement.

**12.** Support lisible par ordinateur selon la revendication 10, dans lequel le créneau est indiqué par un bloc d'informations maître SL, MIB-SL.

**13.** Support lisible par ordinateur selon la revendication 10, dans lequel le SSB n'est pas multiplexé par répartition dans le temps avec un autre canal pendant l'étape de transmission.

FIG. 1A

EP 3 818 655 B1

FIG. 1B

FIG. 1C

FIG. 1D

EP 3 818 655 B1

FIG. 1E

EP 3 818 655 B1

102

115/116/117

122

| | 120 Transceiver | |
|---|---|---|
| 124 Speaker/ Microphone | 118 Processor | 134 Power Source |
| 126 Keypad | | 136 GPS Chipset |
| 128 Display/ Touchpad/ Indicators | | 138 Peripherals |

130 Non-Removable Memory

132 Removable Memory

FIG. 1F

FIG. 1G

FIG. 2

FIG. 3

FIG. 4

EP 3 818 655 B1

FIG. 5

FIG. 6

FIG. 7

FIG. 8A

FIG. 8B

FIG. 9

EP 3 818 655 B1

FIG. 10

FIG. 10 (Continued)

(a) One-slot

FIG. 11A

(b) Half-slot

FIG. 11B

FIG. 12A

FIG. 12B

FIG. 13

FIG. 14A

FIG. 14B

FIG. 15

FIG. 16

FIG. 17A

EP 3 818 655 B1

FIG. 17B

FIG. 18A

FIG. 18B

FIG. 19

FIG. 20

EP 3 818 655 B1

FIG. 21

FIG. 22

FIG. 23

FIG. 24

FIG. 25

FIG. 26

FIG. 27

EP 3 818 655 B1

FIG. 28

FIG. 29

RE Index

FIG. 30

EP 3 818 655 B1

FIG. 31

FIG. 32

FIG. 33

RE Index

287

272
271
270
268
266

PSS

P B C H

P B C H

S S S

21
19
17
16

0

0  1  2  3

OFDM Symbol

(a)

# FIG. 34A

RE Index

287

272
271

207
206

P S S

P B C H

P B C H

S S S

80

79

17
16

0

0  1  2  3

OFDM Symbol

(b)

# FIG. 34B

FIG. 35A

FIG. 35B

FIG. 36

FIG. 37

FIG. 38

FIG. 39

EP 3 818 655 B1

**REFERENCES CITED IN THE DESCRIPTION**

**Patent documents cited in the description**

- WO 2018133132 A1

- EP 3355628 A1

**Non-patent literature cited in the description**

- **QUALCOMM INCORPORATED**. Simulation assumptions for D2D synchronization requirements. *3GPP DRAFT*, vol. RAN WG4 (Athens), 20150209-20150213